(19) Europäisches Patentamt
European Patent Office
Office européen des brevets

(11) Publication number: **0 238 696 B1**

(12) # EUROPEAN PATENT SPECIFICATION

(45) Date of publication of patent specification: **28.08.91**

(51) Int. Cl.5: **G10L 5/06**

(21) Application number: **86104224.0**

(22) Date of filing: **27.03.86**

(54) **Method and apparatus for producing a list of candidate words likely corresponding to a spoken input.**

(43) Date of publication of application:
**30.09.87 Bulletin 87/40**

(45) Publication of the grant of the patent:
**28.08.91 Bulletin 91/35**

(84) Designated Contracting States:
**DE FR GB IT**

(56) References cited:

**PROCEEDINGS OF THE INSTITUTION OF ELECTRICAL ENGINEERS, vol. 117, no. 1, January 1970, pages 203-212, Stevenage, GB; R.W.A. SCARR et al.: "Word-recognition machine"**

(73) Proprietor: **International Business Machines Corporation**
**Old Orchard Road**
**Armonk, N.Y. 10504(US)**

(72) Inventor: **Bahl, Lalit Rai**
**Elisha Purdy Road**
**Amawalk, N.Y. 10501(US)**
Inventor: **Desouza, Peter Vincent**
**1301 Whitehill Road**
**Yorktown Heights N.Y. 10598(US)**
Inventor: **Mercer, Robert Leroy**
**669 Viewland Drive**
**Yorktown Heights N.Y. 10598(US)**

(74) Representative: **Barth, Carl Otto et al**
**IBM Corporation, Säumerstrasse 4**
**CH-8803 Rüschlikon(CH)**

EP 0 238 696 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates generally to the art of speech recognition and specifically to a method and an apparatus for obtaining, for a spoken input, a short list of candidate words selected from a vocabulary of words.

The following European patent applications relate to inventions which provide background or environment for the present invention: "Nonlinear Signal Processing in a Speech Recognition System", Publ. No. 0'179'280; "Method and Apparatus for Performing Acoustic Matching in a Speech Recognition System", Publ. No. 0'238'689; and "Speech Recognition System and Method Using statistical Models for Words", Publ. No. 0'238'692.

In a probabilistic approach to speech recognition, an acoustic waveform is initially transformed into a string of labels, or fenemes, by an acoustic processor. The labels, each of which identifies a sound type, are selected from an alphabet of typically approximately 200 different labels. The generating of such labels has been discussed in various articles such as "Continuous Speech Recognition by Statistical Methods", Proceedings of the IEEE, Volume 64, pp. 532-556 (1976) and in the above mentioned patent application entitled "Nonlinear Signal Processing in a Speech Recognition System".

In employing the labels to achieve speech recognition, Markov model phone machines (also referred to as probabilistic finite state machines) have been discussed. A Markov model normally includes a plurality of states and transitions between the states. In addition, the Markov model normally has probabilities assigned thereto relating to (a) the probability of each transition occuring and (b) the respective probability of producing each label at various transitions. The Markov model, or Markov source, has been described in various articles such as "A Maximum Likelihood Approach to Continuous Speech Recognition", IEEE Transactions on Pattern Analysis and Machine Intelligence, Volume PAMI-5, Number 2, March 1983, by L.R. Bahl, F. Jelinek, and R.L. Mercer.

In recognizing speech, a matching process is performed to determine which word or words in the vocabulary has the highest likelihood given the string of labels generated by the acoustic processor. One such matching procedure is set forth in the above mentioned patent application entitled "Method and Apparatus for Performing Acoustic Matching in a Speech Recognition System". As set forth therein, acoustic matching is performed by (a) characterizing each word in a vocabulary by a sequence of Markov model phone machines and (b) determining the respective likelihood of each word-representing sequence of phone machines producing the string of labels generated by the acoustic processor. Each word-representing sequence of phone machines is referred to as a word baseform.

As discussed in the above mentioned patent application entitled "Method and Apparatus for Performing Acoustic Matching in a Speech Recognition System", the word baseform may be constructed of phonetic phone machines. In this instance, each phone machine preferably corresponds to a phonetic sound and includes seven states and thirteen transitions.

Alternatively, each word baseform may be formed as a sequence of fenemic phone machines. A fenemic phone machine is a simpler Markov model than the phonetic phone machine and is preferably constructed with two states. Between the first state and the second state is a null transition in which no label can be produced. Also between the first state and the second state is a non-null transition in which a label from the alphabet of labels may be produced. At the first state is a self-loop at which labels may be produced. During a training phase, statistics for each fenemic phone machine are defined. That is, for each fenemic phone, a probability for each transition and a probability for each label being produced at each non-null transition are computed from known utterances. Word baseforms are formed by concatenating fenemic phone machines.

In systems employing fenemic baseforms and phonetic baseforms, the end goal is to find the most likely word or words corresponding to a string of labels generated by an acoustic processor in response to an unknown speech input. One approach to achieving this goal is discussed in the above-cited patent application "Method and Apparatus for Performing Acoustic Matching in a Speech Recognition System". Specifically, the number of words is first reduced from the total number of words in the vocabulary to a list of likely candidate words which may be examined in a detailed match procedure and/or a language model procedure at which preferably the most likely word is selected. In reducing the number of candidate words, the methodology taught in that patent application involves applying approximations to the phone machines which result in faster processing without inordinate computational requirements. In achieving the reduction in words, the approximate acoustic match performs computations through a match lattice. The approximate acoustic match has proved to be effective and efficient in determining which words should be subjected to detailed matching and, as appropriate, processing in accordance with the language model.

Another method of improving the decision process in a speech recognition apparatus is described in an

article by R.W.A.Scarr et al. "Word-recognition machine", published in Proc. IEE, Vol.117, No.1, January 1970, pages 203-212. In that publication, word recognition equipment is disclosed which uses positive and negative scoring for correct and atypical features, respectively.

The present invention teaches a specific method of reducing the number of words that are to be examined in a detailed match. That is, the present invention relates to a polling method wherein a table is set up in which each label in the alphabet provides a "vote" for each word in the vocabulary. The vote reflects the likelihood that a given word has produced a given label. The votes are computed from the label output probability and transition probability statistics derived during a training session, by forming an expected label distribution.

A method and apparatus according to the present invention are defined in claims 1 and 11, respectively.

In accordance with one embodiment of the invention, when a string of labels is generated by an acoustic processor, a subject word is selected. From the vote table, each label in the string is recognized and the vote of each label corresponding to the subject word is determined. All votes of the labels for the subject word are accumulated and combined to provide a likelihood score. Repeating the process for each word in the vocabulary results in likelihood scores for each word. A list of likely candidate words may be derived from the likelihood scores.

In a modified embodiment, a second table is also formed which includes a penalty that each label has for each word in the vocabulary. A penalty assigned to a given label indicates the likelihood of a word not producing the given label. In the second embodiment, both, label votes and penalties are considered in determining the likelihood score for a given word based on a string of labels.

In order to account for length, the likelihood scores may be scaled based on the number of labels considered in evaluating a likelihood score for a word.

Moreover, when the end time for a word is not defined along the string of generated labels, a specific embodiment of the present invention provides that likelihood scores be computed at successive time intervals so that a subject word may have a plurality of successive likelihood scores associated therewith. The best likelihood score for the subject word --when compared relative to the likelihood scores of preferably all the other words in the vocabulary-- is then assigned to the subject word.

If desired, the procedures discussed above are employed in conjunction with the approximate acoustic matching techniques set forth in the above mentioned patent application "Method and Apparatus for Performing Acoustic Matching in a Speech Recognition System".

The present invention provides a fast, computationally simple, effective technique for determining which words in a vocabulary have a relatively high likelihood of corresponding to a string of acoustic labels generated by an acoustic processor.

In the following, the theoretical background and an embodiment of the invention are described with reference to the drawings.

BRIEF DESCRIPTION OF THE DRAWINGS

FIG.1 is a general block diagram of a system environment in which the present invention may be practiced.

FIG.2 is a block diagram of the system environment of FIG.1 wherein the stack decoder is shown in greater detail.

FIG.3 is an illustration of a detailed match phone machine which is identified in storage and represented therein by statistics obtained during a training session.

FIG.4 is an illustration depicting the elements of an acoustic processor.

FIG.5 is an illustration of a typical human ear indicating where components of an acoustic model are defined.

FIG.6 is a block diagram showing portions of the acoustic processor.

FIG.7 is a graph showing sound intensity versus frequency, the graph being used in the design of the acoustic processor.

FIG.8 is a graph showing the relationship between sones and phons.

FIG.9 is a flowchart representation showing how sound is characterized according to the acoustic processor of FIG.4.

FIG.10 is a flowchart representation showing how thresholds are up-dated in FIG.9.

FIG.11 is a trellis diagram, or lattice, of a detailed match procedure.

FIG.12 is a diagram depicting a phone machine used in performing matching.

FIG.13 is a time distribution diagram used in a matching procedure having certain imposed conditions.

FIG.14 (a) through (e) are diagrams which show the interrelationship between phones, a label string, and start and end times determined in the matching procedure.

FIG.15 (a) is a diagram showing a particular phone machine of minimum length zero and FIG.15 (b) is a time diagram corresponding thereto.

FIG.16 (a) is a phone machine corresponding to a minimum length four and FIG.16 (b) is a time diagram corresponding thereto.

FIG.17 is a diagram illustrating a tree structure of phones which permit processing of multiple words simultaneously.

FIG.18 is a flowchart outlining the steps performed in training phone machines for performing acoustic matching.

FIG.19 is an illustration showing successive steps of stack decoding.

FIG.20 is a graph depicting likelihood vectors for respective word paths and a likelihood envelope.

FIG.21 is a flowchart representing steps in a stack decoding procedure.

FIG.22 is a flowchart showing how a word path is extended with words obtained from acoustic matching.

FIG.23 is an illustration showing a fenemic phone machine.

FIG.24 is a trellis diagram for a sequential plurality of fenemic phone machines.

FIG.25 is a flowchart illustrating for the polling methodology of the present invention.

FIG.26 is a graph illustrating the count distribution for labels.

FIG.27 is a graph illustrating the number of times each phone produced each label during training.

FIG.28 is an illustration showing the sequence of phones constituting each of two words.

FIG.29 is a graph illustrating the expected number of counts for a word for each label.

FIG.30 is a table showing the vote of each label for each word.

FIG.31 is a table showing the penalty of each label for each word.

FIG.32 is a block diagram illustrating apparatus of the invention.

DESCRIPTION OF A PREFERRED EMBODIMENT OF THE INVENTION

The following description of a preferred embodiment of the invention comprises several sections whose titles are given in the survey listed below:

- (I) Speech Recognition System Environment
  - A. General Description
  - B. Auditory Model and Implementation Thereof
  - C. Detailed Match
  - D. Basic Fast Match
  - E. Alternative Fast Match
  - F. Matching Based on First J Labels
  - G. Phone Tree Structure and Fast Match Embodiments
  - H. Language Model
  - J. Stack Decoder
  - K. Constructing Phonetic Baseforms
  - L. Constructing Fenemic Baseforms
- (II) Selecting Likely Words From a Vocabulary by Means of Polling

(I) Speech Recognition System Environment

A. General Description

In FIG.1, a general block diagram of a speech recognition system 1000 is illustrated. The system 1000 includes a stack decoder 1002 to which are connected an acoustic processor (AP) 1004, an array processor 1006 used in performing a fast approximate acoustic match, an array processor 1008 used in performing a detailed acoustic match, a language model 1010, and a work station 1012.

The acoustic processor 1004 is designed to transform a speech waveform input into a string of labels, or fenemes, each of which in a general sense identifies a corresponding sound type. In the present system, the acoustic processor 1004 is based on a unique model of the human ear and is described in the above-mentioned copending application entitled "Nonlinear Signal Processing in a Speech Recognition System".

The labels, or fenemes, from the acoustic processor 1004 enter the stack decoder 1002. In a logical sense, the stack decoder 1002 may be represented by the elements shown in FIG.2. That is, the stack

decoder 1002 includes a search element 1020 which communicates with the work station 1012 and which communicates with the acoustic processor process, the fast match processor process, the detailed match process, and the language model process through respective interfaces 1022, 1024, 1026, and 1028.

In operation, fenemes from the acoustic processor 1004 are directed by the search element 1020 to the fast match processor 1006. The fast match procedure is described hereinbelow as well as in the copending patent application entitled "Method and Apparatus for Performing Acoustic Matching in a Speech Recognition System". Briefly, the object of matching is to determine the most likely word (or words) for a given string of labels.

The fast match is designed to examine words in a vocabulary of words and to reduce the number of candidate words for a given string of incoming labels. The fast match is based on probabilistic finite state machines, also referred to herein as Markov models.

Once the fast match reduces the number of candidate words, the stack decoder 1002 communicates with the language model 1010 which determines the contextual likelihood of each candidate word in the fast match candidate list based preferably on existing tri-grams.

Preferably, the detailed match examines those words from the fast match candidate list which have a reasonable likelihood of being the spoken word based on the language model computations. The detailed match is discussed in the above-mentioned copending patent application entitled "Method and Apparatus for Performing Acoustic Matching in a Speech Recognition System".

The detailed match is performed by means of Markov model phone machines such as the machine illustrated in FIG.3.

After the detailed match, the language model is, preferably, again invoked to determine word likelihood. The stack decoder 1002 of the present invention --using information derived from the fast matching, detailed matching, and applying the language model-- is designed to determine the most likely path, or sequence, of words for a string of generated labels.

Two prior art approaches for finding the most likely word sequence are Viterbi decoding and single stack decoding. Each of these techniques are described in the above cited article entitled "A Maximum Likelihood Approach to Continuous Speech Recognition." Viterbi decoding is described in section V and single stack decoding in section VI of the article.

In the single stack decoding technique, paths of varying length are listed in a single stack according to likelihood and decoding is based on the single stack. Single stack decoding must account for the fact that likelihood is somewhat dependent on path length and, hence, normalization is generally employed.

The Viterbi technique does not require normalization and is generally practical for small tasks.

As another alternative, decoding may be performed with a small vocabulary system by examining each possible combination of words as a possible word sequence and determining which combination has the highest probability of producing the generated label string. The computational requirements for this technique become impractical for large vocabulary systems.

The stack decoder 1002, in effect, serves to control the other elements but does not perform many computations. Hence, the stack decoder 1002 preferably includes an IBM 4341 data processing system running under the IBM VM/370 operating system as described in publications such as Virtual Machine/System Product Introduction Release 3 (1983). The array processors which perform considerable computation have been implemented with Floating Point System (FPS) 190L's, which are commercially available.

B. The Auditory Model and Implementation Thereof in an Acoustic Processor of a Speech Recognition System

In FIG.4 a specific embodiment of an acoustic processor 1100, as described above, is illustrated. An acoustic wave input (e.g., natural speech) enters an analog-to-digital converter 1102 which samples at a prescribed rate. A typical sampling rate is one sample every 50 microseconds. To shape the edges of the digital signal, a time window generator 1104 is provided. The output of the window 1104 enters a Fast Fourier Transform (FFT) element 1106 which provides a frequency spectrum output for each time window.

The output of the FFT element 1106 is then processed to produce labels $y_1 y_2$ ---$y_f$. Four elements -- a feature selection element 1108, a cluster element 1110, a prototype element 1112, and a labeller 1114 -- coact to generate the labels. In generating the labels, prototypes are defined as points (or vectors) in the space based on selected features and acoustic inputs, are then characterized by the same selected features to provide corresponding points (or vectors), in space that can be compared to the prototypes.

Specifically, in defining the prototypes, sets of points are grouped together as respective clusters by cluster element 1110. Methods for defining clusters have been based on probability distributions --such as

the Gaussian distribution-- applied to speech. The prototype of each cluster --relating to the centroid or other characteristic of the cluster-- is generated by the prototype element 1112. The generated prototypes and acoustic input --both characterized by the same selected features-- enter the labeller 1114. The labeller 1114 performs a comparing procedure which results in assigning a label to a particular acoustic input.

The selection of appropriate features is a key factor in deriving labels which represent the acoustic (speech) wave input. The presently described acoustic processor includes an improved feature selection element 1108. In accordance with the present acoustic processor, an auditory model is derived and applied in an acoustic processor of a speech recognition system. In explaining the auditory model, reference is made to FIG.5.

FIG.5 shows part of the inner human ear. Specifically, an inner hair cell 1200 is shown with end portions 1202 extending therefrom into a fluid- containing channel 1204. Upstream from inner hair cells are outer hair cells 1206 also shown with end portions 1208 extending into the channel 1204. Associated with the inner hair cell 1200 and outer hair cells 1206 are nerves which convey information to the brain. Specifically, neurons undergo electrochemical changes which result in electrical impulses being conveyed along a nerve to the brain for processing. Effectuation of the electrochemical changes, is stimulated by the mechanical motion of the basilar membrane 1210.

It has been recognized, in prior teachings, that the basilar membrane 1210 serves as a frequency analyzer for acoustic waveform inputs and that portions along the basilar membrane 1210 respond to respective critical frequency bands. That different portions of the basilar membrane 1210 respond to corresponding frequency bands has an impact on the loudness perceived for an acoustic waveform input. That is, the loudness of tones is perceived to be greater when two tones are in different critical frequency bands than when two tones of similar power intensity occupy the same frequency band. It has been found that there are on the order of twenty-two critical frequency bands defined by the basilar membrane 1210.

Conforming to the frequency-response of the basilar membrane 1210, the present acoustic processor 1100 in its preferred form physically defines the acoustic waveform input into some or all of the critical frequency bands and then examines the signal component for each defined critical frequency band separately. This function is achieved by appropriately filtering the signal from the FFT element 1106 (see FIG.5) to provide a separate signal in the feature selection element 1108 for each examined critical frequency band.

The separate inputs, it is noted, have also been blocked into time frames (of preferably 25.6 msec) by the time window generator 1104. Hence, the feature selection element 1108 preferably includes twenty-two signals -- each of which represents sound intensity in a given frequency band for one frame in time after another.

The filtering is preferably performed by a conventional critical band filter 1300 of FIG.6. The separate signals are then processed by an equal loudness converter 1302 which accounts for perceived loudness variations as a function of frequency. In this regard, it is noted that a first tone at a given dB level at one frequency may differ in perceived loudness from a second tone at the same given dB level at a second frequency. The converter 1302 can be based on empirical data, converting the signals in the various frequency bands so that each is measured by a similar loudness scale. For example, the converter 1302 preferably map from acoustic power to equal loudness based on studies of Fletcher and Munson in 1933, subject to certain modifications. The modified results of these studies are depicted in FIG.5. In accordance with FIG.5, a 1kHz tone at 40dB is comparable in loudness level to a 100Hz tone at 60dB as shown by the X in the figure.

The converter 1302 adjusts loudness preferably in accordance with the contours of FIG.5 to effect equal loudness regardless of frequency.

In addition to dependence on frequency, power changes and loudness changes do not correspond as one looks at a single frequency in FIG.5. That is, variations in the sound intensity, or amplitude, are not at all points reflected by similar changes in perceived loudness. For example, at 100 Hz, the perceived change in loudness of a 10dB change at about 110dB is much larger than the perceived change in loudness of a 10dB change at 20dB. This difference is addressed by a loudness scaling element 1304 which compresses loudness in a predefined fashion. Preferably, the loudness scaling element compresses power P by a cube-root factor to $P^{1/3}$ by replacing loudness amplitude measure in phons by sones.

FIG.7 illustrates a known representation of phons versus sones determined empirically. By employing sones, the present model remains substantially accurate at large speech signal amplitudes. One sone, it should be recognized, has been defined as the loudness of a 1kHz tone at 40dB.

Referring again to FIG.6, a novel time varying response element 1306 is shown which acts on the equal loudness, loudness scaled signals associated with each critical frequency band. Specifically, for each frequency band examined, a neural firing rate f is determined at each time frame. The firing rate f is defined

in accordance with the present processor as:

$$f = (So + DL)n \quad (1)$$

where n is an amount of neurotransmitter; So is a spontaneous firing constant which relates to neural firings independent of acoustic waveform input; L is a measurement of loudness; and D is a displacement constant. (So)n corresponds to the spontaneous neural firing rate which occurs whether or not there is an acoustic wave input and DLn corresponds to the firing rate due to the acoustic wave input.

Significantly, the value of n is characterized by the present acoustic processor as changing over time according to the relationship:

$$dn/dt = Ao - (So + Sh + DL)n \quad (2)$$

where Ao is a replenishment constant and Sh is a spontaneous neurotransmitter decay constant. The novel relationship set forth in equation (2) takes into account that neurotransmitter is being produced at a certain rate (Ao) and is lost (a) through decay (Sh × n), (b) through spontaneous firing (So × n), and (c) through neural firing due to acoustic wave input (DL × n) The presumed locations of these modelled phenomena are illustrated in FIG.5.

Equation (2) also reflects the fact that the present acoustic processor is non-linear in that the next amount of neurotransmitter and the next firing rate are dependent multiplicatively on the current conditions of at least the neurotransmitter amount. That is, the amount of neurotransmitter at time $(t+\Delta t)$ is equal to the amount of neurotransmitter at time t plus $dn/dt\Delta t$, or:

$$n(t+\Delta t) = n(t) + dn/dt\ \Delta t \quad (3)$$

Equations (1), (2), and (3) describe a time varying signal analyzer which, it is suggested, addresses the fact that the auditory system appears to be adaptive over time, causing signals on the auditory nerve to be non-linearly related to acoustic wave input. In this regard, the present acoustic processor provides the first model which embodies non-linear signal processing in a speech recognition system, so as to better conform to apparent time variations in the nervous system.

In order to reduce the number of unknowns in equations (1) and (2), the present acoustic processor uses the following equation (4) which applies to fixed loudness L:

$$So + Sh + DL = 1/T. \quad (4)$$

T is a measure of the time it takes for an auditory response to drop to 37% of its maximum after an audio wave input is generated. T, it is noted, is a function of loudness and is, according to the present acoustic processor, derived from existing graphs which display the decay of the response for various loudness levels. That is, when a tone of fixed loudness is generated, it generates a response at a first high level after which the response decays toward a steady condition level with a time constant T. With no acoustic wave input, $T=T_0$ which is on the order of 50 msec. For a loudness of $L_{max}$, $T=T_{max}$ which is on the order of 30 msec. By setting Ao = 1, 1/(So + Sh) is determined to be 5 csec, when L = 0. When L is $L_{max}$ and $L_{max}$ = 20 sones, equation (5) results:

$$So + Sn + D(20) = 1/30 \quad (5)$$

With the above data and equations, So and Sh are defined by equations (6) and (7) as:

$$So = DL_{max}/R + (DL_{max}T_oR) - 1) \quad (6)$$
$$Sh = 1/T_o - So \quad (7)$$

where

$$R = \frac{f_{steady\ state}|_{L = L\ max}}{f_{steady\ state}|_{L = 0}} \qquad (8)$$

$f_{steady\ state}|$ represents the firing rate at a given loudness when dn/dt is zero.

R, it is noted, is the only variable left in the acoustic processor. Hence, to alter the performance of the processor, only R is changed. R, that is, is a single parameter which may be adjusted to alter performance which, normally, means minimizing steady state effects relative to transient effects. It is desired to minimize steady state effects because inconsistent output patterns for similar speech inputs generally result from differences in frequency response, speaker differences, background noise, and distortion which affect the steady state portions of the speech signal but not the transient portions. The value of R is preferably set by optimizing the error rate of the complete speech recognition system. A suitable value found in this way is R = 1.5. Values of So and Sh are then 0.0888 and 0.11111 respectively, with D being derived as 0.00666.

Referring to FIG.9, a flowchart of the present acoustic processor is depicted. Digitized speech in a 25.6 msec time frame, sampled at preferably 20kHz passes through a Hanning Window 1320 the output from which is subject to a Fourier Transform 1322, taken at preferably 10 msec intervals. The transform output is filtered by element 1324 to provide a power density output for each of at least one frequency band -- preferably all the critical frequency bands or at least twenty thereof. The power density is then transformed from log magnitude 1326 to loudness level. This is readily performed according to the modified graph of FIG.7. The process outlined hereafter which includes threshold up-dating of step 1330 is depicted in FIG.10.

In FIG.10, a threshold-of-feeling $T_f$ and a threshold-of-hearing $T_h$ are initially defined (at step 1340) for each filtered frequency band m to be 120dB and 0dB respectively. Thereafter, a speech counter, total frames register, and a histogram register are reset at step 1342.

Each histogram includes bins, each of which indicates the number of samples or counts during which power or some similar measure -- in a given frequency band -- is in a respective range. A histogram in the present instance preferably represents -- for each given frequency band -- the number of centiseconds during which loudness is in each of a plurality of loudness ranges. For example, in the third frequency band, there may be twenty centiseconds between 10dB and 20dB in power. Similarly, in the twentieth frequency band, there may be one hundred fifty out of a total of one thousand centiseconds between 50dB and 60dB. From the total number of samples (or centiseconds) and the counts contained in the bins, percentiles are derived.

A frame from the filter output of a respective frequency band is examined at step 1344 and bins in the appropriate histograms -- one per filter -- are incremented at step 1346. The total number of bins in which the amplitude exceeds 55dB are summed for each filter (i.e. frequency band) at step 1348 and the number of filters indicating the presence of speech is determined. If there is not a minimum of filters (e.g. six of twenty) to suggest speech, the next frame is examined at step 1344. If there are enough filters to indicate speech at step 1350, a speech counter is incremented at step 1352. The speech counter is incremented at step 1352 until 10 seconds of speech have occurred at step 1354 whereupon new values for $T_f$ and $T_h$ are defined for each filter at step 1356.

The new $T_f$ and $T_h$ values are determined for a given filter as follows. For $T_f$, the dB value of the bin holding the 35th sample from the top of 1000 bins (i.e. the 96.5th percentile of speech) is defined as $BIN_H$. $T_f$ is then set as: $T_f = BIN_H + 40dB$. For $T_h$, the dB value of the bin holding the (.01) (TOTAL BINS - SPEECH COUNT) th value from the lowest bin is defined as $BIN_L$. That is, $BIN_L$ is the bin in the histogram which is 1% of the number of samples in the histogram excluding the number of samples classified as speech. $T_h$ is then defined as: $T_h = BIN_L - 30dB$.

Returning to FIG.9, the sound amplitudes are converted to sones and scaled based on the updated thresholds (steps 1330 and 1332) as described hereinbefore. An alternative method of deriving sones and scaling is by taking the filter amplitudes "a" (after the bins have been incremented) and converting to dB according to the expression:

$$a^{dB} = 20 \log_{10}(a) - 10 \qquad (9)$$

Each filter amplitude is then scaled to a range between 0 and 120 to provide equal loudness according to the expression:

$a^{eql} = 120(a^{dB}-T_h)/(T_f-T_h)$ (10)

$a^{eql}$ is preferably converted from a loudness level (phons) to an approximation of loudness in sones (with a 1kHz signal at 40dB mapping to 1) by the expression:

$L^{dB} = (a^{eql}-30)/4$ (11)

Loudness in sones is then approximated as:

$L_s(appr) = 10(L^{dB})/20$ (12)

The loudness in sones $L_s$ is then provided as input to the equations (1) and (2) at step 1334 to determine the output firing rate f for each frequency band (step 1335). With twenty-two frequency bands, a twenty-two dimension vector characterizes the acoustic wave inputs over successive time frames. Generally, however, twenty frequency bands are examined by employing a conventional mel-scaled filter bank.

Prior to processing the next time frame (step 1336), the next state of n is determined in accordance with equation (3) in step 1337.

The acoustic processor hereinbefore described is subject to improvement in applications where the firing rate f and neurotransmitter amount n have large DC pedestals. That is, where the dynamic range of the terms of the f and n equations is important, the following equations are derived to reduce the pedestal height.

In the steady state, and in the absence of an acoustic wave input signal (L = 0), equation (2) can be solved for a steady-state internal state n':

$n' = A/(So + SH)$ (13)

The internal state of the neurotransmitter amount n(t) can be represented as a steady state portion and a varying portion:

$n(t) = n' + n''(t)$ (14)

Combining equations (1) and (14), the following expression for the firing rate results:

$f(t) = (So + D \times L)(n' + n''(t))$ (15)

The term So $\times$ n' is a constant, while all other terms include either the varying part of n or the input signal represented by (D $\times$ L). Future processing will involve only the squared differences between output vectors, so that processing will involve only the squared differences between output vectors, so that constant terms may be disregarded. Including equation (13) for n', we get

$f''(t) = (So + D \times L) \times ((n''(t) + D \times L \times A)/(So + Sh))$ (16)

Considering equation (3), the next state becomes:

$n(t + \Delta t) = n'(t + \Delta t) + n''(t + \Delta t)$ (17)
$= n''(t) + A - (So + Sh + D \times L) \times (n' + n''(t))$ (18)
$= n''(t) - (Sh \times n''(t) - (So + Ao \times L^A) n''(t) - (Ao \times L^A \times D)/(So + Sh) + Ao - ((So \times Ao) + (Sh \times Ao))/-(So + Sh)$ (19)

This equation (19) may be rewritten, ignoring all constant terms, as:

$n''(t + \Delta t) = n''(t)(1 - So\,\Delta t) - f''(t)$ (20)

Equations (15) and (20) now constitute the output equations and state-update equations applied to each filter during each 10 millisecond time frame. The result of applying these equations is a 20 element vector each 10 milliseconds, each element of the vector corresponding to a firing rate for a respective frequency band in the mel-scaled filter bank.

With respect to the embodiment set forth immediately hereinabove, the flowchart of FIG.9 applies

except that the equations for f, dn/dt, and n(t+1) are replaced by equations (11) and (16) which define special case expressions for firing rate f and next state n $(t+\Delta t)$ respectively.

It is to be noted that the values attributed to the terms in the various equations (namely $t_o$ = 5 csec,

$$t_{L_{max}} = 3 csec,$$

Ao = 1, R = 1.5, and $L_{max}$ = 20) may be set otherwise and the terms So, Sh, and D may differ from the preferable derived values of 0.0888, 0.11111, and 0.00666, respectively, as other terms are set differently.

The present acoustic model has been practiced using the PL/I programming language with Floating Point Systems FPS 190L hardware, however may be practiced by various other software or hardware approaches.

C. Detailed Match

In FIG.3, a sample detailed match phone machine 2000 is depicted. Each detailed match phone machine is a probabilistic finite-state machine characterized by (a) a plurality of states $S_i$, (b) a plurality of transitions $tr(S_j|S_i)$, some of the transitions extending between different states and some extending from a state back to itself, each transition having associated therewith a corresponding probability, and (c) for each label that can be generated at a particular transition, a corresponding actual label probability.

In FIG.3, seven states $S_1$ through $S_7$ are provided and thirteen transitions tr1 through tr13 are provided in the detailed match phone machine 2000. A review of FIG.3 shows that phone machine 2000 has three transitions with dashed line paths, namely transitions tr11, tr12, and tr13. At each of these three transitions, the phone can change from one state to another without producing a label and such a transition is, accordingly, referred to as a null transition. Along transitions tr1 through tr10 labels can be produced. Specifically, along each transition tr1 through tr10, one or more labels may have a distinct probability of being generated thereat. Preferably, for each transition there is a probability associated with each label that can be generated in the system. That is, if there are two hundred labels that can be selectively generated by the acoustic channel, each transition (that is not a null) has two hundred "actual label probabilities" associated therewith --each of which corresponds to the probability that a corresponding label is generated by the phone at the particular transition. The actual label probabilities for transition tr1 are represented by the symbol p followed by the bracketed column of numerals 1 through 200, each numeral representing a given label. For label 1, there is a probability p[1] t the detailed phone machine 2000 generates the label 1 at transition tr1. The various actual label probabilities are stored with relation to the label and a corresponding transition.

When a string of labels $y_1y_2y_3$--- is presented to a detailed match phone machine 2000 corresponding to a given phone, a match procedure is performed. The procedure associated with the detailed match phone machine is explained with reference to FIG.11.

FIG.11 is trellis diagram of the phone machine of FIG.3. As in the phone machine, the trellis diagram shows a null transition from state $S_1$ to state $S_7$ and transitions from state $S_1$ to state $S_2$ and from state $S_1$ to state $S_4$. The transitions between other states are also illustrated. The trellis diagram also shows time measured in the horizontal direction. Start-time probabilities $q_0$ and $q_1$ represent the probabilities that a phone has a start time at time $t=t_0$ or $t=t_1$, respectively, for the phone. At each start time $t_0$ and $t_1$, the various transitions are shown. It should be noted, in this regard, that the interval between successive start (and end) times is preferably equal in length to the time interval of a label.

In employing the detailed match phone machine 2000 to determine how closely a given phone matches the labels of an incoming string, an end-time distribution for the phone is sought and used in determining a match value for the phone. The notion of relying on the end-time distribution is common to all embodiments of phone machines discussed herein relative to a matching procedure. In generating the end-time distribution to perform a detailed match, the detailed match phone machine 2000 involves computations which are exact and complicated.

Looking at the trellis diagram of FIG.11, we first consider the computations required to have both a start time and end time at time $t=t_0$. For this to be the case according to the example phone machine structure set forth in FIG.3, the following probability applies:

$$Pr(S_7,t=t_0) = q_0 \times T(1 \rightarrow 7) + Pr(S_2,t=t_0) \times T(2 \rightarrow 7) + Pr(S_3,t=t_0) \times T(3 \rightarrow 7) \quad (21)$$

where Pr represents "probability of" and T represents the transition probability between the two parenthetically identified states. The above equation indicates the respective probabilities for the three conditions under which the end time can occur at time $t=t_0$. Moreover, it is observed that the end time at $t=t_0$ is limited in the current example to occurrence at state $S_7$.

Looking next at the end time $t=t_1$, it is noted that a calculation relating to every state other than state $S_1$ must be made. The state $S_1$ starts at the end time of the previous phone. For purposes of explanation, only the calculations pertaining to state $S_4$ are set forth.

For state $S_4$, the calculation is :

$$Pr(S_4,t=t_1) = Pr(S_1,t=t_0) \times T(1 \rightarrow 4) \times Pr(y_1|1 \rightarrow 4) + Pr(S_4,t=t_0) \times T(4 \rightarrow 4) \times Pr(y_1|4 \rightarrow 4) \qquad (22)$$

In words, the equation (22) set forth immediately above indicates that the probability of the phone machine being in state $S_4$ at time $t=t_1$ is dependent on the sum of the following two terms (a) the probability of being at state $S_1$ at time $t=t_0$ multiplied by the probability (T) of the transition from state $S_1$ to state $S_4$ multiplied further by the probability (Pr) of a given label $y_1$ being generated given a transition from state $S_1$ to state $S_4$ and (b) the probability of being at state $S_4$ at time $t=t_0$ multiplied by the probability of the transition from state $S_4$ to itself and further multiplied by the probability of generating the given label $y_1$ during and given the transition from state $S_4$ to itself.

Similarly, calculations pertaining to the other states (excluding state $S_1$) are also performed to generate corresponding probabilities that the phone is at a particular state at time $t=t_1$. Generally, in determining the probability of being at a subject state at a given time, the detailed match (a) recognizes each previous state that has a transition which leads to the subject state and the respective probability of each such previous state; (b) recognizes, for each such previous state, a value representing the probability of the label that must be generated at the transition between each such previous state and the current state in order to conform to the label string; and (c) combines the probability of each previous state and the respective value representing the label probability to provide a subject state probability over a corresponding transition. The overall probability of being at the subject state is determined from the subject state probabilities over all transitions leading thereto. The calculation for state $S_7$, it is noted, includes terms relating to the three null transitions which permit the phone to start and end at time $t=t_1$ with the phone ending in state $S_7$.

As with the probability determinations relative to times $t=t_0$ and $t=t_1$, probability determinations for a series of other end times are preferably generated to form an end-time distribution. The value of the end-time distribution for a given phone provides an indication of how well the given phone matches the incoming labels.

In determining how well a word matches a string of incoming labels, the phones which represent the word are processed in sequence. Each phone generates an end-time distribution of probability values. A match value for the phone is obtained by summing up the end-time probabilities and then taking the logarithm of that sum. A start-time distribution for the next phone is derived by normalizing the end-time distribution by, for example, scaling each value thereof by dividing each value by the sum so that the sum of scaled values totals one.

It should be realized that there are at least two methods of determining h, the number of phones to be examined for a given word or word string. In a depth first method, computation is made along a baseform --computing a running subtotal with each successive phone. When the subtotal is found to be below a predefined threshold for a given phone position therealong, the computation terminates. Alternatively, in a breadth first method, a computation for similar phone positions in each word is made. The computations following the first phone in each word, the second phone in each word, and so on are made. In the breadth first method, the computations along the same number of phones for the various words are compared at the same relative phone positions therealong. In either method, the word(s) having the largest sum of match values is the sought object.

The detailed match has been implemented in APAL (Array Processor Assembly Language) which is the native assembler for the Floating Point Systems, Inc. 190L.

It should be recognized that the detailed match requires considerable memory for storing each of the actual label probabilities (i.e., the probability that a given phone generates a given label y at a given transition); the transition probabilities for each phone machine; and the probabilities of a given phone being at a given state at a given time after a defined start time. The above-noted FPS 190L is set up to make the various computations of end times, match values based on, for example, a sum --preferably the logarithmic sum of end time probabilities; start times based on the previously generated end time probabilities; and word match scores based on the match values for sequential phones in a word. In addition, the detailed match preferably accounts for "tail probabilities" in the matching procedure. A tail probability measures the likelihood of successive labels without regard to words. In a simple embodiment, a given tail probability

corresponds to the likelihood of a label following another label. This likelihood is readily determined from strings of labels generated by, for example, some sample speech.

Hence, the detailed match provides sufficient storage to contain baseforms, statistics for the Markov models, and tail probabilities. For a 5000 word vocabulary where each word comprises approximately ten phones, the baseforms have a memory requirement of 5000 × 10. Where there are 70 distinct phones (with a Markov model for each phone) and 200 distinct labels and ten transitions at which any label has a probability of being produced, the statistics would require 70 × 10 × 200 locations. However, it is preferred that the phone machines are divided into three portions --a start portion, a middle portion, and an end portion-- with statistics corresponding thereto. (The three self-loops are preferably included in successive portions.) Accordingly, the storage requirements are reduced to 70 × 3 × 200. With regard to the tail probabilities, 200 × 200 storage locations are needed. In this arrangement, 50K integer and 82K floating point storage performs satisfactorily.

It should be noted that the detailed match may be implemented by using fenemic, rather than phonetic, phones. Appendix 1 provides a program listing that corresponds to the main computational kernel of a fenemic detailed match. The routine in Appendix 1 extends a lattice --which corresponds to a fenemic baseform of a current word-- forward in time by a single time step. The subroutine EXTLOOP is the main loop. Therebefore, the pipeline is started up and partial computations needed for the main loop are performed. After the main loop, partial computations remaining in the computational pipeline are emptied.

D. Basic Fast Match

Because the detailed match is computationally expensive, a basic fast match and an alternative fast match which reduces the computation requirements with some moderate sacrifice in accuracy is provided. The fast match is preferably used in conjunction with the the detailed match, the fast match listing likely candidate words from the vocabulary, and the detailed match being performed on, at most, the candidate words on the list.

A fast approximate acoustic matching technique is the subject of the above-mentioned co-pending patent application entitled "Method and Apparatus for Performing Acoustic Matching in a Speech Recognition System". In the fast approximate acoustic match, preferably each phone machine is simplified by replacing the actual label probability for each label at all transitions in a given phone machine with a specific replacement value. The specific replacement value is preferably selected so that the match value for a given phone when the replacement values are used is an overestimation of the match value achieved by the detailed match when the replacement values do not replace the actual label probabilities. One way of assuring this condition is by selecting each replacement value so that no probability corresponding to a given label in a given phone machine is greater than the replacement value thereof. By substituting the actual label probabilities in a phone machine with corresponding replacement values, the number of required computations in determining a match score for a word is reduced greatly. Moreover, since the replacement value is preferably an overestimation, the resulting match score is not less than would have previously been determined without the replacement.

In a specific embodiment of performing an acoustic match in a linguistic decoder with Markov models, each phone machine therein is characterized --by training-- to have (a) a plurality of states and transition paths between states, (b) transitions $tr(S_j|S_i)$ having probabilities $T(i \rightarrow j)$ each of which represents the probability of a transition to a state $S_j$ given a current state $S_i$ where $S_i$ and $S_j$ may be the same state or different states, and (c) actual label probabilities wherein each actual label probability $p(y_k|i \rightarrow j)$ indicates the probability that a label $y_k$ is produced by a given phone machine at a given transition from one state to a subsequent state where k is a label identifying notation; each phone machine including (a) means for assigning to each $y_k$ in said each phone machine a single specific value $p'(y_k)$ and (b) means for replacing each actual output probability $p(y_k|i \rightarrow j)$ at each transition in a given phone machine by the single specific value $p'(y_k)$ assigned to the corresponding $y_k$. Preferably, the replacement value is at least as great as the maximum actual label probability for the corresponding $y_k$ label at any transition in a particular phone machine. The fast match embodiments are employed to define a list of on the order of ten to one hundred candidate words selected as the most likely words in the vocabulary to correspond to the incoming labels. The candidate words are preferably subjected to the language model and to the detailed match. By paring the number of words considered by the detailed match to on the order of 1% of the words in the vocabulary, the computational cost is greatly reduced while accuracy is maintained.

The basic fast match simplifies the detailed match by replacing with a single value the actual label probabilities for a given label at all transitions at which the given label may be generated in a given phone machine. That is, regardless of the transition in a given phone machine whereat a label has a probability of

occurring, the probability is replaced by a single specific value. The value is preferably an overestimate, being at least as great as the largest probability of the label occurring at any transition in the given phone machine.

By setting the label probability replacement value as the maximum of the actual label probabilities for the given label in the given phone machine, it is assured that the match value generated with the basic fast match is at least as high as the match value that would result from employing the detailed match. In this way, the basic fast match typically overestimates the match value of each phone so that more words are generally selected as candidate words. Words considered candidates according to the detailed match also pass muster in accordance with the basic fast match.

Referring to FIG.12, a phone machine 3000 for the basic fast match is illustrated. Labels (also referred to as symbols and fenemes) enter the basic fast match phone machine 3000 together with a start-time distribution. The start-time distribution and the label string input is like that entering the detailed match phone machine described hereinabove. It should be realized that the start time may, on occasion, not be a distribution over a plurality of times but may, instead, represent a precise time --for example following an interval of silence-- at which the phone begins. When speech is continuous, however, the end-time distribution is used to define the start-time distribution (as is discussed in greater detail hereinbelow). The phone machine 3000 generates an end-time distribution and a match value for the particular phone from the generated end-time distribution. The match score for a word is defined as the sum of match values for component phones --at least the first h phones in the word.

Referring now to FIG.13, a diagram of a basic fast match computation is illustrated. The basic fast match computation is only concerned with the start-time distribution, the number --or length of labels-- produced by the phone, and the replacement values

$$p'_{y_k}$$

associated with each label $y_k$. By substituting all actual label probabilities for a given label in a given phone machine by a corresponding replacement value, the basic fast match replaces transition probabilities with length distribution probabilities and obviates the need for including actual label probabilities (which can differ for each transition in a given phone machine) and probabilities of being at a given state at a given time.

In this regard, the length distributions are determined from the detailed match model. Specifically, for each length in the length distribution, the procedure preferably examines each state individually and determines for each state the various transition paths by which the currently examined state can occur (a) given a particular label length and (b) regardless of the outputs along the transitions. The probabilities for all transition paths of the particular length to each subject state are summed and the sums for all the subject states are then added to indicate the probability of a given length in the distribution. The above procedure is repeated for each length. In accordance with the preferred form of the matching procedure, these computations are made with reference to a trellis diagram as is known in the art of Markov modelling. For transition paths which share branches along the trellis structure, the computation for each common branch need be made only once and is applied to each path that includes the common branch.

In the diagram of FIG.13, two limitations are included by way of example. First, it is assumed that the length of labels produced by the phone can be zero, one, two, or three having respective probabilities of $l_0$, $l_1$, $l_2$, and $l_3$. The start time is also limited, permitting only four start times having respective probabilities of $q_0$, $q_1$, $q_2$, and $q_3$. With these limitations, the following equations define the end-time distribution of a subject phone as:

$$\Phi_0 = q_0 l_0$$
$$\Phi_1 = q_1 l_0 + q_0 l_1 p_1$$
$$\Phi_2 = q_2 ; l0 + q_1 l_1 p_2 + q_0 l_2 p_2$$
$$\Phi_3 = q_3 l_0 + q_2 l_1 p_3 + q_1 l_2 p_2 p_3 + q_0 l_3 p_1 p_2 p_3$$
$$\Phi_4 = q_3 l_1 p_4 + q_2 l_2 p_3 p_4 + q_1 l_3 p_2 p_3 p_4$$
$$\Phi_5 = q_3 l_2 p_4 p_5 + q_2 l_3 p_3 p_4 p_5$$
$$\Phi_6 = q_3 l_3 p_4 p_5 p_6$$

In examining the equations, it is observed that $\Phi_3$ includes a term corresponding to each of four start times. The first term represents the probability that the phone starts at time $t = t_3$ and produces a length of

zero labels --the phone starting and ending at the same time. The second term represents the probability that the phone starts at time $t=t_2$, that the length of labels is one, and that a label 3 is produced by the phone. The third term represents the probability that the phone starts at time $t=t_1$, that the length of labels is two (namely labels 2 and 3), and that labels 2 and 3 are produced by the phone. Similarly, the fourth term represents the probability that the phone starts at time $t=t_0$; that the length of labels is three; and that the three labels 1, 2, and 3 are produced by the phone.

Comparing the computations required in the basic fast match with those required by the detailed match suggest the relative simplicity of the former relative to the latter. In this regard, it is noted that the

$$p'_{y_k}$$

value remains the same for each appearance in all the equations as do the label length probabilities. Moreover, with the length and start time limitations, the computations for the later end times become simpler. For example, at $\Phi_6$, the phone must start at time $t=t_3$ and all three labels 4, 5, and 6 must be produced by the phone for that end time to apply.

In generating a match value for a subject phone, the end time probabilities along the defined end-time distribution are summed. If desired, the log of the sum is taken to provide the expression:

$$\text{match value} = \log_{10}(\Phi_0 + \text{---} + \Phi_6)$$

As noted previously, a match score for a word is readily determined by summing the match values for successive phones in a particular word.

In describing the generating of the start time distribution, reference is made to FIG.14. In FIG.14(a), the word $THE_1$ is repeated, broken down into its component phones. In FIG.14(b), the string of labels is depicted over time. In FIG.14(c), a first start-time distribution is shown. The first start-time distribution has been derived from the end-time distribution of the most recent previous phone (in the previous word which may include a "word" of silence). Based on the label inputs and the start-time distribution of FIG.14(c), the end-time distribution for the phone DH, $\Phi_{DH}$, is generated. The start-time distribution for the next phone, UH, is determined by recognizing the time during which the previous phone end-time distribution exceeded a threshold (A) in FIG.14(d). (A) is determined individually for each end-time distribution. Preferably, (A) is a function of the sum of the end-time distribution values for a subject phone. The interval between times a and b thus represents the time during which the start-time distribution for the phone UH is set. (See FIG.14-(e).) The interval between times c and d in FIG.14(e) corresponds to the times between which the end-time distribution for the phone DH exceeds the threshold (A) and between which the start-time distribution of the next phone is set. The values of the start-time distribution are obtained by normalizing the end-time distribution by, for example, dividing each end-time value by the sum of the end-time values which exceed the threshold (A).

The basic fast match phone machine 3000 has been implemented in a Floating Point Systems Inc. 190L with an APAL program. Other hardware and software may also be used to develop a specific form of the matching procedure by following the teachings set forth herein.

E. Alternative Fast Match

The basic fast match employed alone or, preferably, in conjunction with the detailed match and/or a language model greatly reduces computation requirements. To further reduce computational requirements, the present teachings further simplifies the detailed match by defining a uniform label length distribution between two lengths --a minimum length $L_{min}$ and a maximum length $L_{max}$. In the basic fast match, the probabilities of a phone generating labels of a given length --namely $l_0$, $l_1$, $l_2$, etc.-- typically have differing values. According to the alternative fast match, the probability for each length of labels is replaced by a single uniform value.

Preferably, the minimum length is equal to the smallest length having a nonzero probability in the original length distribution, although other lengths may be selected if desired. The selection of the maximum length is more arbitrary than the selection of the minimum length, but is significant in that the probability of lengths less than the minimum and greater than the maximum are set as zero. By defining the length probability to exist between only the minimum length and the maximum length, a uniform pseudo-distribution can be set forth. In one approach, the uniform probability can be set as the average probability over the pseudo-distribution. Alternatively, the uniform probability can be set as the maximum of the length

probabilities that are replaced by the uniform value.

The effect of characterizing all the label length probabilities as equal is readily observed with reference to the equations set forth above for the end-time distribution in the basic fast match. Specifically, the length probabilities can be factored out as a constant.

With $L_{min}$ being set at zero and all length probabilities being replaced by a single constant value, the end-time distribution can be characterized as:

$$\theta_m = \Phi_m/1 = q_m + \theta_{m-1}p_m$$

where "1" is the single uniform replacement value and where the value for $p_m$ corresponds preferably to the replacement value for a given label being generated in the given phone at time m.

For the above equation for $\theta_m$, the match value is defined as :

$$\text{match value} = \log_{10}(\theta_0 + \theta_1 + \cdots + \theta_m) + \log_{10} \quad (1)$$

In comparing the basic fast match and the alternative fast match, it has been found that the number of required additions and multiplications are greatly reduced by employing the alternative fast match phone machines. With $L_{min} = 0$, it has been found that the basic fast match requires forty multiplications and twenty additions in that the length probabilities must be considered. With the alternative fast match, $\theta_m$ is determined recursively and requires one multiplication and one addition for each successive $\theta_m$.

To further illustrate how the alternative fast match simplifies computations, FIG.15 and FIG.16 are provided. In FIG.15(a), a phone machine embodiment 3100 corresponding to a minimum length $L_{min}=0$ is depicted. The maximum length is assumed to be infinite so that the length distribution may be characterized as uniform. In FIG.15(b), the trellis diagram resulting from the phone machine 3100 is shown. Assuming that start times after $q_n$ are outside the start-time distribution, all determinations of each successive $\theta_m$ with $m<n$ require one addition and one multiplication. For determinations of end times thereafter, there is only one required multiplication and no additions.

In FIG.16, $L_{min} = 4$. FIG.16(a) illustrates a specific embodiment of a phone machine 3200 therefor and FIG.16(b) shows a corresponding trellis diagram. Because $L_{min}=4$, the trellis diagram of FIG.16(b) has a zero probability along the paths marked u, v, w, and z. For those end times which extend between $\theta_4$ and $\theta_n$, it is noted that four multiplications and one addition is required. For end times greater than n+4, one multiplication and no additions are required. This embodiment has been implemented in APAL code on a FPS 190L.

In Appendix 2, a program listing corresponding to the main computational kernel of the fast (approximate) match is provided. The code corresponds to the case where $L_{min}=4$.

It should be noted that additional states may be added to the FIG.15 or FIG.16 embodiments as desired.

F. Matching Based On First J Labels

As a further refinement to the basic fast match and alternative fast match, it is contemplated that only the first J labels of a string which enters a phone machine be considered in the match. Assuming that labels are produced by the acoustic processor of an acoustic channel at the rate of one per centisecond, a reasonable value for J is one hundred. In other words, labels corresponding to on the order of one second of speech will be provided to determine a match between a phone and the labels entering the phone machine. By limiting the number of labels examined, two advantages are realized. First, decoding delay is reduced and, second, problems in comparing the scores of short words with long words are substantially avoided. The length of J can, of course, be varied as desired.

The effect of limiting the number of labels examined can be noted with reference to the trellis diagram of FIG.16(b). Without the present refinement, the fast match score is the sum of the probabilities of $\theta_m$'s along the bottom row of the diagram. That is, the probability of being at state $S_4$ at each time starting at $t=t_0$ (for $L_{min}=0$) or $t=t_4$ (for $L_{min}=4$) is determined as a $\theta_m$ and all $\theta_m$'s are then totalled. For $L_{min}=4$, there is no probability of being in state $S_4$ at any time before $t_4$. With the refinement, the summing of $\theta_m$'s terminates at time J. In FIG.16(b), time J corresponds to time $t_{n+2}$.

Terminating the examination of J labels over J time intervals can result in the following two probability summations in determining a match score. First, as described hereinbefore, there is a row calculation along the bottom row of the trellis diagram but only up to the time J-1. The probabilities of being in state $S_4$ at each time up to time J-1 are summed to form a row score. Second, there is a column score which

corresponds to the sum of probabilities that the phone is at each respective state $S_0$ through $S_4$ at time J. That is, the column score is:

$$\text{column score} = \Sigma_{f=0}^{4} Pr(S_f,J)$$

The match score for a phone is obtained by summing the row score and column score and then taking the logarithm of that sum. To continue the fast match for the next phone, the values along the bottom row --preferably including time J-- are used to derive the next phone start-time distribution.

After determining a match score for each of b consecutive phones, the total for all phones is, as before noted, the sum of the match scores for all the phones.

In examining the manner in which the end-time probabilities are generated in the basic fast match and alternative fast match embodiments set forth above, it is noted that the determination of column scores does not conform readily to the fast match computations. To better adapt the refinement of limiting the number of labels examined to the fast match and alternative match, the present matching technique provides that the column score be replaced by an additional row score. That is, an additional row score is determined for the phone being at state $S_4$ (in FIG.16(b)) between times J and J+K where K is the maximum number of states in any phone machine. Hence, if any phone machine has ten states, the present refinement adds ten end times along the bottom row of the trellis for each of which a probability is determined. All the probabilities along the bottom row up to and including the probability at time J+K are added to produce a match score for the given phone. As before, consecutive phone match values are summed to provide a word match score.

This embodiment has been implemented in APAL code on a FPS 190L; however as with other portions of the system may be implemented with other codes on other hardware.

G. Phone Tree Structure and Fast Match Embodiments

By employing the basic fast match or alternative fast match --with or without the maximum label limitation-- the computational time required in determining phone match values is tremendously reduced. In addition, the computational savings remain high even when the detailed match is performed on the words in the fast match derived list.

The phone match values, once determined, are compared along the branches of a tree structure 4100 as shown in FIG.17 to determine which paths of phones are most probable. In FIG.17, the phone match values for DH and UH1 (emanating from point 4102 to branch 4104) should sum to a much higher value for the spoken word "the" than the various sequences of phones branching from the phone MX. In this regard, it should be observed that the phone match value of the first MX phone is computed only once and is then used for each baseform extending therefrom. (See branches 4104 and 4106.) In addition, when the total score calculated along a first sequence of branches is found to be much lower than a threshold value or much lower than the total score for other sequences of branches, all baseforms extending from the first sequence may be simultaneously eliminated as candidate words. For example, baseforms associated with branches 4108 through 4118 are simultaneously discarded when it is determined that MX is not a likely path.

With the fast match embodiments and the tree structure, an ordered list of candidate words is generated with great computational savings.

With regard to storage requirements, it is noted that the tree structure of phones, the statistics for the phones, and tail probabilities are to be stored. With regard to the tree structure, there are 25000 arcs and four datawords characterizing each arc. The first dataword represents an index to successor arcs or phones. The second dataword indicates the number of successor phones along the branch. The third dataword indicates at which node in the tree the arc is located. And the fourth dataword indicates the current phone. Hence, for the tree structure, 25000 $\times$ 4 storage spaces are required. In the fast match, there are 100 distinct phones and 200 distinct fenemes. In that a feneme has a single probability of being produced anywhere in a phone, storage for 100 $\times$ 200 statistical probabilities is required. Finally, for the tail probabilities, 200 $\times$ 200 storage spaces are required. 100K integer and 60K floating point storage is sufficient for the fast match.

H. Language Model

As noted previously, a language model which stores information --such as tri-grams-- relating to words in context may be included to enhance the probability of a correct word selection. Language models have

been reported in the literature.

The language model 1010, preferably, has a unique character. Specifically, a modified tri-gram method is used. In accordance with this method, a sample text is examined to determine the likelihood of each ordered triplet of words, ordered pair of words, or single words in the vocabulary. A list of the most likely triplets of words and a list of the most likely pairs of words are formed. Moreover, the likelihood of a triplet not being in the triplet list and the likelihood of a pair not being in the pair list are respectively.

In accordance with the language model, when a subject word follows two words, a determination is made as to whether the subject word and the two preceding words are on the triplet list. If so, the stored probability assigned to the triplet is indicated. If the subject word and its two predecessors are not on the triplet list, a determination is made as to whether the subject word and its adjacent predecessor are on the pair list. If so, the probability of the pair is multiplied by the probability of a triplet not being on the triplet list, the product then being assigned to the subject word. If the subject word and its predecessor(s) are not on the triplet list or pair list, the probability of the subject word alone is multiplied by the likelihood of a triplet not being on the triplet list and by the probability of a pair not being on the pair list. The product is then assigned to the subject word.

Referring to FIG.18, a flowchart 5000 illustrating the training of phone machines employed in acoustic matching is shown. At step 5002, a vocabulary of words --typically on the order of 5000 words-- is defined. Each word is then represented by a sequence of phone machines. The phone machines have been, by way of example, been shown as phonetic-type phone machines but may, alternatively, comprise a sequence of fenemic phones. Representing words by a sequence of phonetic-type phone machines or by a sequence of fenemic phone machines is discussed hereinbelow. A phone machine sequence for a word is referred to as a word baseform.

In step 5006, the word baseforms are arranged in the tree structure described hereinabove. The statistics for each phone machine in each word baseform are determined by training according to the well-known forward-backward algorithm set forth in the article "Continuous Speech Recognition by Statistical Methods" by F. Jelinek.

At step 5009, values to be substituted for actual parameter values or statistics used in the detailed match are determined. For example, the values to be substituted for the actual label output probabilities are determined. In step 5010, the determined values replace the stored actual probabilities so that the phones in each word baseform include the approximate substitute values. All approximations relating to the basic fast match are performed in step 5010.

A decision is then made as to whether the acoustic matching is to be enhanced (step 5011). If not, the values determined for the basic approximate match are set for use and other estimations relating to other approximations are not set (step 5012). If enhancement is desired, step 5018 is followed. A uniform string length distribution is defined (step 5018) and a decision is made as to whether further enhancement is desired (step 5020). If not, label output probability values and string length probability values are approximated and set for use in the acoustic matching. If further enhancement is desired, acoustic matching is limited to the first J labels in the generated string (step 5022). Whether or not one of the enhanced embodiments is selected, the parameter values determined are set in step 5012, whereupon each phone machine in each word baseform has been trained with the desired approximations that enable the fast approximate matching.

J. Stack Decoder

A preferred stack decoder used in the speech recognition system of FIG.1 is now described.

In FIG.19 and FIG.20, a plurality of successive labels $y_1 y_2$--- are shown generated at successive "label intervals", or "label positions".

Also shown in FIG.20 are a plurality of some generated word paths, namely path A, path B, and path C. In the context of FIG.19, path A could correspond to the entry "to be or", path B to the entry "two b", and path C to the entry "too". For a subject word path, there is a label (or equivalently a label interval) at which the subject word path has the highest probability of having ended --such label being referred to as a "boundary label".

For a word path W representing a sequence of words, a most likely end time --represented in the label string as a "boundary label" between two words-- can be found by known methods such as that described in an article entitled "Faster Acoustic Match Computation" (by L.R. Bahl, F. Jelinek, and R.L. Mercer) in the IBM Technical Disclosure Bulletin volume 23, number 4, September 1980. Briefly, the article discusses methodology for addressing two similar concerns: (a) how much of a label string Y is accounted for by a word (or word sequence) and (b) at which label interval does a partial sentence --corresponding to a part of

the label string-- end.

For any given word path, there is a "likelihood value" associated with each label or label interval, including the first label of the label string through to the boundary label. Taken together, all of the likelihood values for a given word path represent a "likelihood vector" for the given word path. Accordingly, for each word path there is a corresponding likelihood vector. Likelihood values $L_t$ are illustrated in FIG.20.

A "likelihood envelope"

$$\Lambda_t$$

at a label interval t for a collection of word paths $W^1$, $W^2$,...,$W^s$ is defined mathematically as:

$$\Lambda_t = \max(L_t(W^1),---,L_t(W^s)).$$

That is, for each label interval, the likelihood envelope includes the highest likelihood value associated with any word path in the collection. A likelihood envelope 1040 is illustrated in FIG.20.

A word path is considered "complete" if it corresponds to a complete sentence. A complete path is preferably identified by a speaker entering an input, e.g. pressing a button, when he reaches the end of a sentence. The entered input is synchronized with a label interval to mark a sentence end. A complete word path cannot be extended by appending any words thereto. A "partial" word path corresponds to an incomplete sentence and can be extended.

Partial paths are classified as "live" or "dead". A word path is "dead" if it has already been extended and "live" if it has not. With this classification, a path which has already been extended to form one or more longer extended word paths is not reconsidered for extension at a subsequent time.

Each word path is also characterizable as "good" or "bad" relative to the likelihood envelope. The word path is good if, at the label corresponding to the boundary label thereof, the word path has a likelihood value which is within $\Delta$ of the maximum likelihood envelope. Otherwise the word path is marked as "bad". Preferably, but not necessarily, $\Delta$ is a fixed value by which each value of the maximum likelihood envelope is reduced to serve as a good/bad threshold level.

For each label interval there is a stack element. Each live word path is assigned to the stack element corresponding to the label interval that corresponds to the boundary label of such a live path. A stack element may have zero, one, or more word path entries --the entries being listed in order of likelihood value.

The steps performed by the stack decoder 1002 of FIG.1 are now discussed.

Forming the likelihood envelope and determining which word paths are "good" are interrelated as suggested by the sample flowchart of FIG.21.

In the flowchart of FIG.21, a null path is first entered into the first stack(0) in step 5050. A stack-(complete) element is provided which contains complete paths, if any, which have been previously determined (step 5052). Each complete path in the stack(complete) element has a likelihood vector associated therewith. The likelihood vector of the complete path having the highest likelihood at the boundary label thereof initially defines the maximum likelihood envelope. If there is no complete path in the stack(complete) element, the maximum likelihood envelope is initialized as $-\infty$ at each label interval. Moreover, if complete paths are not specified, the maximum likelihood envelope may be initialized at $-\infty$. Initializing the envelope is depicted by steps 5054 and 5056.

After the maximum likelihood envelope is initialized, it is reduced by a predefined amount $\Delta$ to form a $\Delta$-good region above the reduced likelihoods and a $\Delta$-bad region below the reduced likelihoods. The value of $\Delta$ controls the breadth of the search. The larger $\Delta$ is, the larger the number of word paths that are considered for possible extension. When $\log_{10}$ is used for determining $L_t$, a value of 2.0 for $\Delta$ provides satisfactory results. The value of $\Delta$ is preferably, but not necessarily, uniform along the length of label intervals.

If a word path has a likelihood at the boundary label thereof which is in the $\Delta$-good region, the word path is marked "good". Otherwise, the word path is marked "bad".

As shown in FIG.21, a loop for up-dating the likelihood envelope and for marking word paths as "good" (for possible extension) or "bad" starts with the finding of the longest unmarked word path (step 5058). If more than one unmarked word path is in the stack corresponding to the longest word path length, the word path having the highest likelihood at the boundary label thereof is selected. If a word path is found, it is marked as "good" if the likelihood at the boundary label thereof lies within the $\Delta$-good region or "bad" otherwise (step 5060). If the word path is marked "bad", another unmarked live path is found and marked

(step 5062). If the word path is marked "good", the likelihood envelope is up-dated to include the likelihood values of the path marked "good". That is, for each label interval, an up-dated likelihood value is determined as the greater likelihood value between (a) the present likelihood value in the likelihood envelope and (b) the likelihood value associated with word path marked "good". This is illustrated by steps 5064 and 5066. After the envelope is up-dated, a longest best unmarked live word path is again found (step 5058).

The loop is then repeated until no unmarked word paths remain. At that time, the shortest word path marked "good" is selected. If there is more than one word "good" path having a shortest length, the one having the highest likelihood at the boundary label thereof is selected (step 5070). The selected shortest path is then subjected to extension. That is, at least one likely follower word is determined as indicated above by preferably performing the fast match, language model, detailed match, and language model procedure. For each likely follower word, an extended word path is formed. Specifically, an extended word path is formed by appending a likely follower word on the end of the selected shortest word path.

After the selected shortest word path is formed into extended word paths, the selected word path is removed from the stack in which it was an entry and each extended word path is entered into the appropriate stack therefor. In particular, an extended word path becomes an entry into the stack corresponding to the boundary label of the extended word path step 5072.

With regard to step 5072, the action of extending the chosen path is discussed with reference to the flowchart of FIG.22. After the path is found in step 5070, the following procedure is performed whereby a word path or paths are extended based on an appropriate approximate match.

At step 6000, the acoustic processor 1002 (of FIG.1) generates a string of labels as described hereinabove. The string of labels is provided as input to enable step 6002 to be performed. In step 6002 the basic or one of the enhanced approximate matching procedures is performed to obtain an ordered list of candidate words according to the teachings outlined hereinabove. Thereafter, a language model (as described hereinabove) is applied in step 6004 as described hereinabove. The subject words remaining after the language model is applied are entered together with the generated labels in a detailed match processor which performs step 6006. The detailed match results in a list of remaining candidate words which are preferably subjected to the language model in step 6008. The likely words --as determined by the approximate match, detailed match, and language model are used for extension of the path found in step 5070 of FIG.21. Each of the likely words determined at step 6008 (FIG.22) are separately appended to the found word path so that a plurality of extended word paths may be formed.

Referring again to FIG.21, after the extended paths are formed and the stacks are re-formed, the process repeats by returning to step 5052.

Each iteration thus consists of selecting the shortest best "good" word path and extending it. A word path marked "bad" on one iteration may become "good" on a later iteration. The characterization of a live word path as "good" or "bad" is thus made independently on each iteration. In practice, the likelihood envelope does not change greatly from one iteration to the next and the computation to decide whether a word path is "good" or "bad" is done efficiently. Moreover, normalization is not required.

When complete sentences are identified, step 5074 is preferably included. That is, when no live word paths remain unmarked and there are no "good" word paths to be extended, decoding is finished. The complete word path having the highest likelihood at the respective boundary label thereof is identified as the most likely word sequence for the input label string.

In the case of continuous speech where sentence endings are not identified, path extension proceeds continually or for a predefined number of words as preferred by the system user.

K. Constructing Phonetic Baseforms

One type of Markov model phone machine which can be used in forming baseforms is based on phonetics. That is, each phone machine corresponds to a given phonetic sound, such as those included in the International Phonetic Alphabet.

For a given word, there is a sequence of phonetic sounds each having a respective phone machine corresponding thereto. Each phone machine includes a number of states and a number of transitions between states, some of which can produce a feneme output and some (referred to as null transitions) which cannot. Statistics relating to each phone machine --as noted hereinabove-- include (a) the probability of a given transition occurring and (b) the likelihood of a particular feneme being produced at a given transition. Preferably, at each non-null transition there is some probability associated with each feneme. In a feneme alphabet shown in Table 1, there are preferably 200 fenemes. A phone machine used in forming phonetic baseforms is illustrated in FIG.3. A sequence of such phone machines is provided for each word.

The statistics, or probabilities, are entered into the phone machines during a training phase in which known words are uttered. Transition probabilities and feneme probabilities in the various phonetic phone machines are determined during training by noting the feneme string(s) generated when a known phonetic sound is uttered at least once and by applying the well-known forward-backward algorithm.

A sample of statistics for one phone identified as phone DH are set forth in Table 2. As an approximation, the label output probability distribution for transitions trl, tr2, and tr8 of the phone machine of FIG.3 are represented by a single distribution; transitions tr3, tr4, tr5, and tr9 are represented by a single distribution; and transitions tr6, tr7, and tr10 are represented by a single distribution. This is shown in Table 2 by the assignment of arcs (i.e. transitions) to the respective columns 4, 5, or 6. Table 2 shows the probability of each transition and the probability of a label (i.e. feneme) being generated in the beginning, middle, or end, respectively, of the phone DH. For the DH phone, for example, the probability of the transition from state $S_1$ to state $S_2$ is counted as .07243. The probability of transition from state $S_1$ to state $S_4$ is .92757. (In that these are the only two possible transitions from the initial state, their sum equals unity.) As to label output probabilities, the DH phone has a .091 probability of producing the feneme AE13 (see Table 1) at the end portion of the phone, i.e. column 6 of Table 2. Also in Table 2 there is a count associated with each node (or state). The node count is indicative of the number of times during the training that the phone was in the corresponding state. Statistics as in Table 2 are found for each phoneme machine.

The arranging of phonetic phone machines into a word baseform sequence is typically performed by a phonetician and is normally not done automatically.

L. Constructing Fenemic Baseforms

FIG.23 shows an embodiment of a fenemic phone. The fenemic phone has two states and three transitions. A non-null transition is indicated with dashed lines and represents a path from state 1 to state 2 in which no label can be produced. A self-loop transition at state 1 permits any number of labels to be produced thereat. A non-null transition between state 1 and state 2 is permitted to have a label produced thereat. The probabilities associated with each transition and with each label at a transition are determined during a training session in a manner similar to that previously described with reference to Phonetic-type baseforms.

Fenemic word baseforms are constructed by concatenating fenemic phones. One approach is described in the above-mentioned copending patent application entitled "Speech Recognition System and Method Using Statistical Models for Words". Preferably, the fenemic word baseforms are grown from multiple utterances of the corresponding word. This is described in another co-pending European patent application (Publ. No. 0'238'697) entitled "Method of Constructing Baseform Models of Words from Multiple Utterances for Speech Recognition". Briefly, one method of growing baseforms from multiple utterances includes the steps of:

(a) transforming multiple utterances of the word segment into respective strings of fenemes;

(b) defining a set of fenemic Markov model phone machines;

(c) determining the best single phone machine $P_1$ for producing the multiple feneme strings;

(d) determining the best two phone baseform of the form $P_1P_2$ or $P_2P_1$ for producing the multiple feneme strings;

(e) align the best two phone baseform against each feneme string;

(f) splitting each feneme string into a left portion and a right portion with the left portion corresponding to the first phone machine of the two phone baseform and the right portion corresponding to the second phone machine of the two phone baseform;

(g) identifying each left portion as a left substring and each right portion as a right substring;

(h) processing the set of left substrings in the same manner as the set of feneme strings corresponding to the multiple utterances including the further step of inhibiting further splitting of a substring when the single phone baseform thereof has a higher probability of producing the substring than does the best two phone baseform;

(j) processing the set of right substrings in the same manner as the set of feneme strings corresponding to the multiple utterances, including the further step of inhibiting further splitting of a substring when the single phone baseform thereof has a higher probability of producing the substring than does the best two phone baseform; and

(k) concatenating the unsplit single phones in an order corresponding the order of the feneme substrings to which they correspond.

The number of model elements is typically approximately the number of fenemes obtained for an

utterance of the word. The baseform models are then trained (or filled with statistics) by speaking known utterances into an acoustic processor that generates a string of labels in response thereto. Based on the known utterances and the generated labels, the statistics for the word models are derived according to the well-known forward-backward algorithm discussed in articles referred to hereinabove.

In FIG.24 a lattice corresponding to fenemic phones is illustrated. The lattice is significantly simpler than the lattice of FIG.11 relating to a phonetic detailed match. As noted hereinabove, a fenemic detailed match proceeding one time interval at a time through the lattice of FIG.24 is set forth in Appendix 1.

(II) Selecting Likely Words From a Vocabulary By Means of Polling

Referring to FIG.25, a flowchart 8000 of one embodiment of the present invention is illustrated. As depicted in FIG.25, a vocabulary of words is initially prescribed in step 8002. The words may relate to standard office correspondence words or technical words, depending on the user. There have been on the order of 5000 words or more in the vocabulary, although the number of words may vary.

Each word is represented by a sequence of Markov model phone machines in accordance with the teachings of Section (I)(K) or (I)(L). That is, each word may be represented as a constructed baseform of sequential phonetic phone machines or a constructed baseform of sequential fenemic phone machines.

A "vote" is then determined for each label for each word in step 8006. The vote determining step 8006 is described with reference to FIGS.25, 26, 27, 28, and 29.

Fig.26 shows a graph of the distribution of acoustic labels for a given phone machine $P_p$. The counts indicated are extracted from the statistics generated during training. During training, it is recalled, known utterances corresponding to known phone sequences are spoken and a string of labels generated in response thereto. The number of times each label is produced when a known phone is uttered is thus provided during the session. For each phone, a distribution as in Fig.26 is generated.

In addition to extracting the information included in Fig.26 from the training data, the expected number of labels for a given phone is also derived from the training data. That is, when a known utterance corresponding to a given phone is spoken, the number of labels generated is noted. Each time the known utterance is spoken, a number of labels for the given phone is noted. From this information, the most likely or expected number of labels for the given phone is defined. FIG.27 is a graph showing the expected number of labels for each phone. If the phones correspond to fenemic phones, the expected number of labels for each phone should typically average about one. For phonetic phones, the number of labels may vary greatly.

The extraction of information in the graphs from training data is achieved by using information from the forward-backward algorithm described in detail in Appendix II of the above-cited article "Continuous Speech Recognition by Statistical Methods". Briefly, the forward-backward algorithm involves determining the probability of each transition between a state i and a state (i+1) in a phone by (a) looking forward from the initial state of a Markov model to the state i and determining the statistics of getting to the state i in a "forward pass" and (b) looking backward from the final state of a Markov model to the state (i+1) and determining the statistics of getting to the final state from state (i+1) in a "backward pass". The probability of the transition from state i to state (i+1) --given state i-- and the label outputs thereat are coupled to the other statistics in determining the probability of a subject transition occurring given a certain string of labels. In that Appendix II of the above-noted article sets forth in detail the mathematics and application of the algorithm, further description is not provided.

Each word is known to be a predefined sequence of phones as illustrated in FIG.28 with reference to a WORD 1 and a WORD 2. Given the phone sequence for each word and the information discussed relative to FIGS. 25 and 26, a determination can be made as to how many times a given label is most likely to occur for a particular subject word W. For a word such as WORD 1, the number of times label 1 is expected may be computed as the number of counts of label 1 for phone $P_1$ plus the number of counts of label 1 for phone $P_3$ plus the number of counts of label 1 for phone $P_6$ and so on. Similarly, for WORD 1, the number of times label 2 is expected may be computed as the number of counts of label 2 for phone $P_1$ plus the number of counts of label 2 for phone $P_3$ and so on. The expected count of each label for WORD 1 is evaluated by performing the above steps for each of the two hundred labels. A count for a particular label may represent the number of occurrences of the particular label divided by the total number of labels generated during the training phase or may, alternatively, correspond to just the number of occurrences of the label during training.

In FIG.29 the expected count for each label in a particular word (e.g. WORD 1) is set forth.

From the expected label counts shown in FIG.29 for a given word, a "vote" of each label for the given word is evaluated. The vote of a label L' for a given word W' represents the likelihood of the word W'

producing the label L'. The vote preferably corresponds to the logarithmic probability of word W' producing L' Preferably, the vote is determined by

$$VOTE = \log_{10}\{Pr(L'|W')\}$$

The votes are stored in a table as shown in FIG.30. For each word 1 through W, each label has an associated vote identified as V with a double subscript. The first element in the subscript corresponds to the label and the second to the word. $V_{12}$ is therefore the vote of label 1 for word 2.

Referring again to FIG.25, the process of selecting likely candidate words from a vocabulary through polling is shown to include a step 8008 of generating labels in response to an unknown spoken input. This is performed by the acoustic processor 1004 (of FIG.1).

The generated labels are looked up in the table of FIG.30 for a subject word. The vote of each generated label is retrieved for the subject word. The votes are then accumulated to give a total vote for the subject word (step 8010). By way of example, if labels 1, 3, and 5 are generated, votes $V_{11}$, $V_{31}$ and $V_{51}$ would be evaluated and combined. If the votes are logarithmic probabilities, they are summed to provide the total vote for word 1. A similar procedure is followed for each word of the words in the vocabulary, so that labels 1, 3, and 5 vote for each word.

In accordance with one embodiment of the invention, the accumulated vote for each word serves as the likelihood score for the word. The n words (where n is a predefined integer) having the highest accumulated vote are defined as candidate words that are to be later processed in a detailed match and language model as outlined above.

In another embodiment, word "penalties" are evaluated as well as votes. That is, for each label and each word, a penalty is determined and assigned (step 8012). The penalty represents the likelihood that a subject label is not produced by a given word. There are various methods for determining the penalty. One approach for determining the penalty for a word represented by a fenemic baseform involves assuming that each fenemic phone produces only one label. For a given label and a subject fenemic phone, the penalty for the given label corresponds to the log probability of any other label being produced by the subject fenemic phone. The penalty of label 1 for phone $P_2$ then corresponds to the log probability of any label 2 through 200 being the one produced label. The assumption of one label output per fenemic phone, although not a correct one, has proved satisfactory in evaluating penalties. Once a penalty of a label for each phone is determined, the penalty for a word constituting a sequence of known phones is readily determined.

The penalty of each label for each word is shown in FIG.31. Each penalty is identified as PEN followed by two subscripts, the first representing the label and the second representing the word.

Referring again to FIG.25, the labels generated in step 8008 are examined to see which labels of the label alphabet have not been generated. The penalty for each label not generated is evaluated for each word. To obtain the total penalty for a given word, the penalty of each ungenerated label for the given word is retrieved and all such penalties are accumulated (step 8014). If each penalty corresponds to a logarithmic probability, the penalties for the given word are summed over all labels, as were the votes. The above procedure is repeated for each word in the vocabulary so that each word has a total vote and a total penalty given the string of generated labels.

When a total vote and a total penalty is derived for each vocabulary word, a likelihood score is defined by combining the two values (step 8016). If desired the total vote may be weighted to be greater than the total penalty, or vice versa.

Moreover, the likelihood score for each word is preferably scaled based on the length of the number of labels that are voting (step 8018). Specifically, after the total vote and the total penalty --both of which represent sums of logarithmic probabilities-- were accumulated, the final sum is divided by the number of speech labels generated. The result is a scaled likelihood score.

A further aspect of the invention relates to determining which labels in a string to consider in the voting and penalty (i.e. polling) computations. Where the end of a word is identified and the labels corresponding thereto are known, preferably all labels generated between a known start time and the known end time are considered. However, when the end time is found to be not known (in step 8020), the present invention provides the following methodology. A reference end time is defined and a likelihood score is evaluated repeatedly after the reference end time at successive time intervals (step 8022). For example, after 500ms the (scaled) likelihood score for each word is evaluated at 50ms intervals thereafter up to 1000ms from the start time of the word utterance. In the example, each word will have ten (scaled) likelihood scores.

A conservative approach is adopted in selecting which of the ten likelihood scores should be assigned to a given word. Specifically, for the series of likelihood scores obtained for a given word, the likelihood score that is highest relative to the likelihood scores of other words obtained at the same time interval is

selected (step 8024). This highest likelihood score is then subtracted from all likelihood scores at that time interval. In this regard, the word having the highest likelihood score at a given interval is set at zero with the likelihood scores of the other less likely words having negative values. The least negative likelihood score for a given word is assigned thereto as the highest relative likelihood score for the word.

When likelihood scores are assigned to each word, the n words having the highest assigned likelihood scores are selected as candidate words resulting from polling (step 8026).

In one embodiment of the invention, the n words resulting from the polling are provided as a reduced list of words that are then subjected to processing according to the detailed match and language model described above. The reduced list obtained by polling, in this embodiment, acts in place of the acoustic fast match outlined above. In this regard, it is observed that the acoustic fast match provides a tree-like lattice structure in which word baseforms are entered as sequential phones, wherein words having the same initial phones follow a common branch along the tree structure. For a 2000 word vocabulary, the polling method has been found to be two to three times faster than the fast acoustic match which includes the tree-like lattice structure.

Alternatively, however, the acoustic fast match and the polling may be used in conjunction. That is, from the trained Markov models and the generated string of labels, the approximate fast acoustic match is performed in step 8028 in parallel with the polling. One list is provided by the acoustic match and one list is provided by the polling. In a conservative approach, the entries on one list are used in augmenting the other list. In an approach which seeks to further reduce the number of best candidate words, only words appearing in both lists are retained for further processing. The interaction of the two techniques in step 8030 depends on the accuracy and computational goals of the system. As yet another alternative, the lattice-style acoustic fast match may be applied to the polling list sequentially.

Apparatus 8100 for performing the polling is set forth in FIG.32. Element 8102 stores word models that have been trained as discussed hereinabove. From the statistics applied to the word models, a vote generator 8104 evaluates the vote of each label for each word and stores the votes in vote table storage 8106.

Similarly, a penalty generator 8108 evaluates penalties of each label for each word in the vocabulary and enters the values into penalty table storage 8110.

A word likelihood score evaluator 8112 receives labels generated by an acoustic processor 8114 in response to an unknown spoken input. For a given word selected by a word select element 8116, the word likelihood score evaluator 8112 combines the votes of each generated label for the selected word together with the penalties of each label not generated. The likelihood score evaluator 8112 includes means for scaling the likelihood score as discussed hereinabove. The likelihood score evaluator may also, but need not, include means for repeating the score evaluation at successive time intervals following a reference time.

The likelihood score evaluator 8112 provides word scores to a word lister 8120 which orders the words according to assigned likelihood score.

In an embodiment which combines the word list derived by polling with the list derived by approximate acoustic matching, the list comparer 8122 is provided. The list comparer receives as input the polling list from the word lister 8120 and from the acoustic fast match (which is described in several embodiments hereinabove).

To reduce storage and computational requirements, several features may be included. First, the votes and penalties can be formatted as integers ranging between 0 and 255. Second, the actual penalties can be replaced by approximate penalties computed from the corresponding vote as PEN = a•VOTE + b where a,b are constants and can be determined by least squares regression. Third, labels can be grouped together into speech classes where each class includes at least one label. The allocation of labels to classes can be determined by hierarchically clustering the labels so as to maximize the resulting mutual information between speech classes and words.

It should be further noted that periods of silence are detected (by known methods) and are ignored.

The present invention has been implemented in PL/I on an IBM MVS System, but may be implemented in other programming languages and on other systems given the teachings set forth herein.

While the invention has been described with reference to a preferred embodiment thereof, it will be understood by those skilled in the art that various changes in form and details may be made without departing from the scope of the invention.

For example, the end time for a word may alternatively be defined by summing the number of expected labels for each phone in the word baseform. In addition, the votes and penalties may be determined for selected generated labels --such as every odd label or just the first m labels in the string-- although it is preferred that votes and penalties for each label between the start and end of a word be considered.

Moreover, the present invention can be embodied with various voting formulas other than the summing of logarithmic probabilities. The invention is generally concerned with an apparatus and a method for obtaining a short list of candidate words wherein each label casts a vote for each word in the vocabulary and wherein this vote typically varies from word to word.

TABLE 1

THE TWO LETTERS ROUGHLY REPRESENT THE SOUND OF THE ELEMENT.

TWO DIGITS ARE ASSOCIATED WITH VOWELS:

FIRST: STRESS OF SOUND

SECOND: CURRENT IDENTIFICATION NUMBER

ONE DIGIT ONLY IS ASSOCIATED WITH CONSONANTS:

SINGLE DIGIT: CURRENT IDENTIFICATION NUMBER

| | | | | | | | | | |
|---|---|---|---|---|---|---|---|---|---|
| 001 | AA11 | 029 | BX2- | 057 | EH02 | 148 | TX5- | 176 | XX11 |
| 002 | AA12 | 030 | BX3- | 058 | EH11 | 149 | TX6- | 177 | XX12 |
| 003 | AA13 | 031 | BX4- | 059 | EH12 | 150 | UH01 | 178 | XX13 |
| 004 | AA14 | 032 | BX5- | 060 | EH13 | 151 | UH02 | 179 | XX14 |
| 005 | AA15 | 033 | BX6- | 061 | EH14 | 152 | UH11 | 180 | XX15 |
| 006 | AE11 | 034 | BX7- | 062 | EH15 | 153 | UH12 | 181 | XX16 |
| 007 | AE12 | 035 | BX8- | 126 | RX1- | 154 | UH13 | 182 | XX17 |
| 008 | AE13 | 036 | BX9- | 127 | SH1- | 155 | UH14 | 183 | XX18 |
| 009 | AE14 | 037 | DH1- | 128 | SH2- | 156 | UU11 | 184 | XX19 |
| 010 | AE15 | 038 | DH2- | 129 | SX1- | 157 | UU12 | 185 | XX2- |
| 011 | AW11 | 039 | DQ1- | 130 | SX2- | 158 | UXG1 | 186 | XX20 |
| 012 | AW12 | 040 | DQ2- | 131 | SX3- | 159 | UXG2 | 187 | XX21 |
| 013 | AW13 | 041 | DQ3- | 132 | SX4- | 160 | UX11 | 188 | XX22 |
| 014 | AX11 | 042 | DQ4- | 133 | SX5- | 161 | UX12 | 189 | XX23 |
| 015 | AX12 | 043 | DX1- | 134 | SX6- | 162 | UX13 | 190 | XX24 |
| 016 | AX13 | 044 | DX2- | 135 | SX7- | 163 | VX1- | 191 | XX3- |
| 017 | AX14 | 045 | EE01 | 136 | TH1- | 164 | VX2- | 192 | XX4- |
| 018 | AX15 | 046 | EE02 | 137 | TH2- | 165 | VX3- | 193 | XX5- |
| 019 | AX16 | 047 | EE11 | 138 | TH3- | 166 | VX4- | 194 | XX6- |
| 020 | AX17 | 048 | EE12 | 139 | TH4- | 167 | WX1- | 195 | XX7- |
| 021 | BQ1- | 049 | EE13 | 140 | TH5- | 168 | WX2- | 196 | XX8- |
| 022 | BQ2- | 050 | EE14 | 141 | TQ1- | 169 | WX3- | 197 | XX9- |
| 023 | BQ3- | 051 | EE15 | 142 | TQ2- | 170 | WX4- | 198 | ZX1- |
| 024 | BQ4- | 052 | EE16 | 143 | TX3- | 171 | WX5- | 199 | ZX2- |
| 025 | BX1- | 053 | EE17 | 144 | TX1- | 172 | WX6- | 200 | ZX3- |
| 026 | BX10 | 054 | EE18 | 145 | TX2- | 173 | WX7- | | |
| 027 | BX11 | 055 | EE19 | 146 | TX3- | 174 | XX1- | | |
| 028 | BX12 | 056 | EH01 | 147 | TX4- | 175 | XX10 | | |

TABLE 2

PHONE 3 DH 7 NODES. 13 ARCS. 3 ARC LABELS.

| | | | | | | | |
|---|---|---|---|---|---|---|---|
| NODE | 1 | 2 | 3 | 4 | 5 | 6 | 7 |
| LABEL | 8 | 9 | 10 | 11 | 12 | 13 | 0 |
| COUNT | 31.0 | 1.7 | 1.7 | 119.1 | 115.4 | 120.1 | 0.0 |

| | | | | | | | |
|---|---|---|---|---|---|---|---|
| ARC | 1 -> 2 | 1 -> 4 | 1 -> 7 | 2 -> 3 | 2 -> 7 | 3 -> 7 | 3 -> 7 |
| LABEL | 4 | 4 | NULL | 5 | NULL | 6 | NULL |
| PROB | 0.07243 | 0.92757 | 0.00000 | 0.99259 | 0.00741 | 0.93982 | 0.06018 |
| ARC | 4 -> 4 | 4 -> 5 | 5 -> 5 | 5 -> 6 | 6 -> 6 | 6 -> 7 | |
| LABEL | 4 | 5 | | 5 | 6 | 6 | |
| PROB | 0.75179 | 0.24821 | 0.7438 | 0.25611 | 0.75370 | 0.24630 | |

| | | | |
|---|---|---|---|
| LABEL | 4 | 5 | 6 |
| COUNT | 120.8 | 146.4 | 121.6 |
| AE13 | | | 0.091 |
| BX10 | 0.030 | | |
| BX3 | 0.130 | | |
| BX8 | 0.011 | 0.086 | |
| DH1 | 0.020 | 0.040 | 0.013 |
| DQ2 | 0.011 | 0.052 | |
| EH0T | 0.010 | 0.014 | 0.167 |
| EH02 | | | 0.026 |
| EH11 | | | 0.015 |
| EH13 | | | 0.012 |
| EH14 | | | 0.062 |
| ER14 | | | 0.024 |
| FX2 | | 0.045 | |
| FX3 | | 0.148 | |
| GX2 | | 0.013 | |
| GX5 | 0.148 | | |
| GX6 | 0.246 | 0.023 | |
| HX1 | | 0.011 | |
| IX04 | 0.011 | | 0.020 |
| IX13 | 0.025 | | 0.026 |
| KQ1 | | 0.014 | 0.024 |
| KX2 | | 0.013 | |
| MX2 | 0.029 | 0.043 | 0.012 |
| NX3 | 0.019 | | |
| NX5 | 0.049 | | |
| NX6 | | 0.017 | 0.012 |
| OU14 | | | 0.023 |
| PQ1 | 0.029 | 0.018 | |
| TH2 | | 0.020 | |
| TQ3 | | 0.017 | |
| UH0T | | | 0.020 |
| UH02 | 0.025 | 0.082 | 0.109 |
| UX02 | | | 0.016 |
| UX12 | | | 0.062 |
| UX13 | | | 0.183 |
| VX1 | | | 0.016 |
| VX3 | 0.041 | 0.283 | 0.016 |
| WX2 | 0.023 | 0.014 | |
| XX23 | 0.072 | | |
| OTHER | 0.073 | 0.047 | 0.048 |

APPENDIX 1

```
""""""""""""""""""""""""""""""""""""""""""""""""""""""""""""""""""""""""""""""""""""
"                                                                                  "
"  Subroutine EXTCOL.                                                              "
"                                                                                  "
"  Extends the column                                                              "
"                                                                                  "
"  Register Usage:                                                                 "
"                                                                                  "
"    SP:  , 1, 2, 3, 4, 5, 6, 7, 8, 9, 10, 11, 12, 13, 14, 15                      "
"                                                                                  "
"   DPX: -4, -3, -2, -1, 0          (DPA = 0)                                      "
"   DPY: -4, -3, -2, -1, 0, 1, 2, 3 (DPA = 0)                                      "
"                                                                                  "
""""""""""""""""""""""""""""""""""""""""""""""""""""""""""""""""""""""""""""""""""""

""""""""""""""""""""""""""""""""""""""""""""""""""""""""""""""""""""""""""""""""""""
"  Restore the registers from main memory.                                         "
""""""""""""""""""""""""""""""""""""""""""""""""""""""""""""""""""""""""""""""""""""

EXTCOL:   LDMA; DB = SFENPTR; WRTLMN      "get feneme list pointer
          LDMA; DB = STLPPTR; WRTLMN      "get tail prob list pointer
          LDMA; DB = SSTROFF; WRTLMN      "get start offset

          LDSPI FENPTR; DB < MD           "save feneme list pointer
          LDSPI TLPPTR; DB < MD           "save tail prob list pointer
          LDSPI STROFF; DB < MD           "save start offset

          LDMA; DB = SSTRROW; WRTLMN      "get start row
          LDMA; DB = SOUTOFF; WRTLMN      "get output offset
          LDMA; DB = SINBNDY; WRTLMN      "get input boundary pointer

          LDSPI STRROW; DB < MD           "save start row
          LDSPI OUTOFF; DB < MD           "save output offset
          LDSPI INBNDY; DB < MD           "save input boundary pointer

          LDMA; DB = STIME;   WRTLMN      "get the current time
          LDMA; DB = SSTRLEN; WRTLMN      "get start distribution length
          LDMA; DB = ALEXLEX; WRTLMN      "get lexeme length

          LDSPI TIME;    DB < MD          "save current time
          LDSPI STRLEN;  DB < MD          "save start distribution length
          LDSPI LOOPCNT; DB < MD          "save lexeme length

          SUB   STRROW, LOOPCNT           "loop count = lexlen - strrow

          LDSPI PRMADR; DB = SFENPTR       "put back feneme pointer + 1
          INC   FENPTR; DPX(-3) < SPFN
          MOV   PRMADR, PRMADR; SETMA; MI < DPX(-3)

          LDSPI PRMADR; DB = STLPPTR       "put back tail pointer + 1
          INC   TLPPTR; DPX(-3) < SPFN
          MOV   PRMADR, PRMADR; SETMA; MI < DPX(-3)

          LDSPI PRMADR; DB = SINBNDY       "put back inbndy + 1
          INC   INBNDY; DPX(-3) < SPFN
          MOV   PRMADR, PRMADR; SETMA; MI < DPX(-3)

          LDSPI PRMADR; DB = STIME         "put back time + 1
          INC   TIME;   DPX(-3) < SPFN
```

```
          MOV   PRMADR, PRMADR; SETMA; MI < DPX(-3)

""""""""""""""""""""""""""""""""""""""""""""""""""""""""""""""""""""""""""""""""
"  Get the next feneme and tail probability.                                    "
""""""""""""""""""""""""""""""""""""""""""""""""""""""""""""""""""""""""""""""""

          OUT;  DB = PAGE0                    "flip to page zero
          MOV   FENPTR, FENPTR; SETMA         "get next feneme
          MOV   TLPPTR, TLPPTR; SETMA         "get next tail probability
          OUT;  DB = PAGE1                    "flip back to page one
          LDSPI FENEME; DB < MD               "save the feneme
          DPY(TPY) < MD                       "save the tail probability
          MOV   FENEME, FENEME; DPX(CFENX) < SPFN

          LDSPI FENLOK; DB = AFENLOK          "get base addr of feneme lookup
          ADD   FENEME, FENLOK; SETMA         "use feneme to get fenbas
          LDSPI INCOL;  DB = ACOLUMN          "get base addr for input col
          LDSPI OUTCOL; DB = ACOLUMN          "get base addr for output col
          LDSPI FENBAS; DB < MD               "pointer into feneme probs

          ADD   STROFF, INCOL                 "incol = start_offset + ...
          ADD   STRROW, INCOL                 "         start_row
          ADD   OUTOFF, OUTCOL                "outcol = output_offset + ...
          ADD   STRROW, OUTCOL                "         start_row - 2;

          LDSPI TRMLOK; DB = ATRMLOK          "get base addr of tram lookup
          ADD   STRROW, TRMLOK; SETMA         "lookup the tram base ptr
          DEC   OUTCOL                        "outcol... - 1
          DEC   OUTCOL                        "outcol... - 2
          LDSPI TRMPTR; DB < MD               "get starting tram addr
          LDSPI PRMADR; DB = !FFTSZ           "compensate for tram base
          ADD   PRMADR, PRMADR                "which is at 2 x !FFTSZ
          ADD   PRMADR, TRMPTR

""""""""""""""""""""""""""""""""""""""""""""""""""""""""""""""""""""""""""""""""
"  Start the pipeline going...                                                  "
""""""""""""""""""""""""""""""""""""""""""""""""""""""""""""""""""""""""""""""""

          MOV   INCOL,  INCOL;  SETMA         "get col(start_ptr)
          MOV   INBNDY, INBNDY; SETMA         "get inbndy(time) in case
          SUB#  TIME, STRLEN                  "start_length - time
          BLT   OUTSIDE;                      "if <= we are outside inbndy
                DPY(LIY) < MD                 "and save col(start_ptr)

INSIDE:   FADD  DPY(LIY), MD                  "col() + inbndy(time)
          FADD                                "push the adder
          DPY(LIY) <FA                        "last_input = col + inbndy

OUTSIDE:  DPY(PROFY) < ZERO                   "zero out the running profile

""""""""""""""""""""""""""""""""""""""""""""""""""""""""""""""""""""""""""""""""
"  Start the pipeline going... start first loop                                 "
""""""""""""""""""""""""""""""""""""""""""""""""""""""""""""""""""""""""""""""""

          MOV TRMPTR, TRMPTR; SETTMA          "start transfer of phone num

          NOP                                 "wait for table memory

          LDSPI PHONE; DB < TM;               "save the phone number
```

```
          INCTMA                          "increment tramptr

        ADD FENBAS, PHONE; SETMA          "lookup feneme prob

        FADD DPY(LIY), ZERO;              "push last_state thru adder
          INCTMA                          "start transfer of null trans

        FADD;                             "push the adder
          INCTMA;                         "start transfer of phone num
          DPY(SOFAY) < ZERO               "clear 2nd oldest farc

""""""""""""""""""""""""""""""""""""""""""""""""""""""""""""""""""""""""""""""""""""""""""""""""""
"  Start the pipeline going... do first loop                                                     "
""""""""""""""""""""""""""""""""""""""""""""""""""""""""""""""""""""""""""""""""""""""""""""""""""

        FMUL  TM, FA;                     "null trans * last_input
          INC INCOL; SETMA;               "start transfer of col()
          DPY (LIY) < FA;                 "save last input
          FADD DPY(PROFY), FA;            "profile = prof + last_input
          DPX (FENX) < MD

        FMUL DPX(FENX), DPY(TPY);         "feneme prob * tail prob
          LDSPI PHONE; DB < TM;           "save the phone number
          INCTMA;                         "start trans of self trans
          FADD                            "push the adder

        FMUL;
          DPY(PROFY) < FA;                "save the running profile
          ADD FENBAS, PHONE; SETMA;       "lookup feneme prob
          DPX(FAX) < ZERO;                "zero out forward arc
          FADD                            "null add

        FADD  FM, MD;                     "col() + null*last_input
          FMUL TM, DPX(FAX);              "self trans * forward arc
          INCTMA;                         "start transfer of null trans
          DPX(OFAX) < DPY(SOFAY)          "push queue of forward arcs

        FADD;
          FMUL FM, DPY(LIY);              "last_input * feneme_prob
          INCTMA;                         "start transfer of phone num
          DPY(SOFAY) < DPX(FAX)           "zero out 2nd oldest farc

""""""""""""""""""""""""""""""""""""""""""""""""""""""""""""""""""""""""""""""""""""""""""""""""""
"  Loop for index = 1 to loopcnt (= lexeme_length - start_row)                                   "
""""""""""""""""""""""""""""""""""""""""""""""""""""""""""""""""""""""""""""""""""""""""""""""""""

EXTLOOP:  FMUL  TM, FA;                   "null trans * last_input
            INC INCOL; SETMA;             "start transfer of col()
            DPY (LIY) < FA;               "save last input
            FADD DPY(PROFY), FA;          "profile = prof + last_input
            DPX (FENX) < MD

          FMUL DPX(FENX), DPY(TPY);       "feneme prob * tail prob
            DPY(SELFY) < FM;              "save self arc
            LDSPI PHONE; DB < TM;         "save the phone number
            INCTMA;                       "start trans of self trans
            FADD                          "push the adder
```

```
FMUL;
  DPY(PROFY) < FA;               "save the running profile
  ADD FENBAS, PHONE; SETMA;      "lookup feneme prob
  DPX(FAX) < FM;                 "save forward arc
  FADD DPY(SELFY), DPX(OFAX)     "self + oldest_farc

FADD  FM, MD;                    "col() + null*last_input
  FMUL TM, DPX(FAX);             "self trans * forward arc
  INCTMA;                        "start transfer of null trans
  DEC LOOPCNT;                   "decrement the loop count
  DPX(OFAX) < DPY(SOFAY)         "push queue of forward arcs

FADD;
  FMUL FM, DPY(LIY);             "last_input * feneme_prob
  INCTMA;                        "start transfer of phone num
  INC OUTCOL; SETMA;             "put out next_output
  MI < FA;
  DPY(SOFAY) < DPX(FAX);         "push forward arc queue
  BGT EXTLOOP                    "keep looping until done(BNE)

""""""""""""""""""""""""""""""""""""""""""""""""""""""""""""""""""""""""""
"  Trail out of loop...                                                  "
""""""""""""""""""""""""""""""""""""""""""""""""""""""""""""""""""""""""""

FMUL TM, FA;                     "calculate last forward arc
  DPY (LIY) < FA;                "save last input
  FADD DPY(PROFY), FA            "profile = prof + last_input

FMUL;                            "push the multiplier
  DPY(SELFY) < FM;               "save self arc
  INCTMA;                        "start trans of self trans
  FADD                           "push the adder

FMUL;
  DPY(PROFY) < FA;               "save the running profile
  DPX(FAX) < FM;                 "save forward arc
  FADD DPY(SELFY), DPX(OFAX)     "self + oldest_farc

FADD;                            "push the adder
  FMUL TM, DPX(FAX);             "self trans * forward arc
  DPX(OFAX) < DPY(SOFAY)         "push queue of forward arcs

FMUL;                            "push the multiplier
  INC OUTCOL; SETMA;             "put out next_output
  MI < FA;
  DPY(SOFAY) < DPX(FAX)          "push forward arc queue

""""""""""""""""""""""""""""""""""""""""""""""""""""""""""""""""""""""""""
"  Push last outputs out of loop...                                      "
""""""""""""""""""""""""""""""""""""""""""""""""""""""""""""""""""""""""""

FMUL                             "push the multiplier

FADD FM, DPX(OFAX)               "self + oldest_farc

FADD;                            "push the adder
  DPX(OFAX) < DPY(SOFAY)         "push queue of forward arcs

INC OUTCOL; SETMA;               "put out next_output
```

```
  MI < FA;
  DPY(SOFAY) < DPX(FAX)              "push forward arc queue

INC OUTCOL; SETMA;
   MI < DPX(OFAX)                    "push out oldest forward arc

RETURN                               "finished EXTCOL
```

APPENDIX 2

```
"''''''''''''''''''''''''''''''''''''''''''''''''''''''''''''''''''''''''''''''''''''
"                                                                   "
"  SUBROUTINE APFM                                                  "
"                                                                   "
"  This program implements the acoustic Fast Match in the FPS Array "
"  Processor.  This is the modified Fast Match that runs without    "
"  explicit length distributions.                                   "
"                                                                   "
"                                                                   "
''''''''''''''''''''''''''''''''''''''''''''''''''''''''''''''''''''''''''''''''''''''

''''''''''''''''''''''''''''''''''''''''''''''''''''''''''''''''''''''''''''''''''''''
"                                                                   "
"  SUBROUTINE EVALPP                                                "
"                                                                   "
"  This routine performs the actual fast match calculation for the  "
"  current lattice node.  The main program only calls this routine to "
"  evaluate valid nodes - not the null nodes that correspond to leaves. "
"                                                                   "
''''''''''''''''''''''''''''''''''''''''''''''''''''''''''''''''''''''''''''''''''''''

''''''''''''''''''''''''''''''''''''''''''''''''''''''''''''''''''''''''''''''''''''''
"                                                                   "
"  Initializations...  given the current lattice node number, look up "
"  the corresponding clink number, set up match parameters such as  "
"  the length of the start time distribution, pointers to the start "
"  time distribution in the boundary stacks, and the offset into the "
"  feneme stream.                                                   "
"                                                                   "
''''''''''''''''''''''''''''''''''''''''''''''''''''''''''''''''''''''''''''''''''''''

''''''''''''''''''''''''''''''''''''''''''''''''''''''''''''''''''''''''''''''''''''''
"                                                                   "
"  Initial_zeroes = 4:                                              "
"                                                                   "
"  Pad the start time distribution with 4 zeroes, increase SDLEN by 4 "
"  to simplify looping after start time distribution ends.          "
"                                                                   "
"  Initialize output_distribution (time - 1), output_sum, set feneme "
"  prob for first time slice equal to zero by clearing the multiplier. "
"                                                                   "
"  output_distribution (0) = 0.0;                                   "
"  output_sum              = 0.0;                                   "
"  feneme_prob             = 0.0;                                   "
"  state_1                 = 0.0;                                   "
"  state_2                 = 0.0;                                   "
"  state_3                 = 0.0;                                   "
"  state_4                 = 0.0;                                   "
"                                                                   "
''''''''''''''''''''''''''''''''''''''''''''''''''''''''''''''''''''''''''''''''''''''

ZERO4:      ADD# SDARY, SDLEN;              "point to last sample in the
              SETMA;                        "start time distribution
              DPX(LASTX) < ZERO;            "zero the last output sample
              DPY(OSY)   < ZERO             "zero the output sum

            INCMA;                          "last sample + 1
              MI < ZERO;                    "pad out with zero
```

```
            DPY(ST1Y) < ZERO;              "state_1 = 0.0
            INC SDLEN                      "sdlen = sdlen + 1

          INCMA;                           "last sample + 2
            MI < ZERO;                     "pad out with zero
            DPY(ST2Y) < ZERO;              "state_2 = 0.0
            INC SDLEN                      "sdlen = sdlen + 2

          INCMA;                           "last sample + 3
            MI < ZERO;                     "pad out with zero
            DPY(ST3Y) < ZERO;              "state_3 = 0.0
            INC SDLEN                      "sdlen = sdlen + 3

          INCMA;                           "last sample + 4
            MI < ZERO;                     "pad out with zero
            DPY(ST4Y) < ZERO;              "state_4 = 0.0
            INC SDLEN                      "sdlen = sdlen + 4

          CLR TIME;                        "output time counter = 0
            FMUL DPX(LASTX), DPY(OSY)      "clear the multiplier

          MOV SDLEN, LOPLIM;               "1st loop limit = sdlen
            FMUL                           "push the multiplier

""""""""""""""""""""""""""""""""""""""""""""""""""""""""""""""""""""""""""""""
"                                                                            "
"  First loop: initial_zeroes = 4                                            "
"                                                                            "
"  Calculate output distribution value for current time, update output      "
"  sum, calculate feneme probability for the next time slice.               "
"                                                                            "
"  do time = 1 to start_time_length + 4;                                     "
"    output_distribution (time) =                                            "
"         feneme_prob * (output_distribution (time - 1) + state_1);          "
"    output_sum  = output_sum + output_distribution (time);                  "
"    state_1     = state_2 * feneme_prob;                                    "
"    state_2     = state_3 * feneme_prob;                                    "
"    state_3     = state_4 * feneme_prob;                                    "
"    state_4     = st_array (time);                                          "
"    feneme_prob = fd_array (local_buffer(first_feneme + time))              "
"                 * tail_buffer (first_feneme + time);                       "
"  end;                                                                      "
"                                                                            "
""""""""""""""""""""""""""""""""""""""""""""""""""""""""""""""""""""""""""""""

L41:      INC LFARY;                       "start transfer of next
            SETMA;                         "feneme symbol from stream
            FADD DPX(LASTX), DPY(ST1Y);    "add last output + state_1
            FMUL                           "push the multiplier

          INC TPARY;                       "start transfer of next
            SETMA;                         "tail probability
            FMUL FM, DPY(ST2Y);            "state_2 * feneme_prob
            FADD;                          "push the adder pipeline
            DPX(FPX) < FM                  "save feneme_prob

          INC SDARY;                       "transfer next starting pt
            SETMA;
            FMUL DPX(FPX), FA              "(last+st1) * feneme_prob
```

```
LDSPI FDOFF;                       "get the current feneme
  DB = MD;                         "symbol from bus
  FMUL DPX(FPX), DPY(ST3Y)         "state_3 * feneme_prob

ADD# FDOFF, FDARY;                 "start transfer of next
  SETMA;                           "feneme probability
  DPX(TPX) < MD;                   "save next tail probability
  FMUL DPX(FPX), DPY(ST4Y);        "state_4 * feneme_prob
  DPY(ST1Y) < FM                   "state_1 = state_2 * fp

FMUL;                              "push the multiplier
  DPX(LASTX) < FM;                 "save output sample
  DPY(ST4Y) < MD                   "store next input sample

INC TIME;                          "update the time counter
  FMUL;                            "push the multiplier
  DPY(ST2Y) < FM;                  "state_2 = state_3 * fp
  FADD DPX(LASTX), DPY(OSY)        "add output to output_sum

DEC LOPLIM;                        "at end of loop?
  FMUL DPX(TPX), MD;               "feneme * tail prob
  DPY(ST3Y) < FM;                  "state_3 = state_4 * fp
  FADD                             "push the adder

BGT L41;                           "keep looping if not done
  FMUL;                            "push the multiplier
  DPY(OSY) < FA;                   "save output_sum
  INCTMA;                          "update pointer to scratch
  DB = DPX(LASTX);                 "area for output dist, save
  OUT                              "the output sample

""""""""""""""""""""""""""""""""""""""""""""""""""""""""""""""""""""""""""""
"                                                                          "
"  Second loop:                                                            "
"                                                                          "
"  Time is now equal to start_time_length + initial_zeroes, so the        "
"  start time distribution has ended and all internal states are          "
"  equal to zero.  Therefore, this section of code is common to all       "
"  cases of initial zeroes.                                                "
"                                                                          "
"  Loop until time_limit (start_time_length + ld_length - 1), or until    "
"  the output falls below loop_cutoff.                                     "
"                                                                          "
"                                                                          "
"  do time = start_time_length + 1 + initial_zeroes to time_limit         "
"            while (output_distribution (time) >= loop_cutoff);            "
"                                                                          "
"    output_distribution (time) =                                          "
"            feneme_prob * output_distribution (time - 1);                 "
"    output_sum  = output_sum + output_distribution (time);                "
"    feneme_prob = fd_array (local_buffer(first_feneme + time))            "
"                  * tail_buffer (first_feneme + time);                    "
"  end;                                                                    "
"                                                                          "
""""""""""""""""""""""""""""""""""""""""""""""""""""""""""""""""""""""""""""

EVAL2:    MOV LDLEN, LOPLIM                "loop limit = ld_len - 1
```

```
            SUB INTZERO, LOPLIM           " - initial_zeroes
            DEC LOPLIM
            BGT L42                       "if looplimit > 0, do it
            JMP EVOUT                     "otherwise, jump to exit

L42:        INC LFARY;                    "start transfer of next
              SETMA;                      "feneme symbol from stream
              FMUL                        "push the multiplier

            INC TPARY;                    "get next tail prob
              SETMA;                      "from buffer
              FMUL FM, DPX(LASTX)         "last = last * feneme_prob

            FMUL                          "push the multiplier

            LDSPI FDOFF;                  "get feneme symbol
              DB = MD;                    "from input stream
              FMUL                        "push the multiplier

            ADD# FDOFF, FDARY;            "use feneme as pointer into
              SETMA;                      "probability array
              DPX(TPX) < MD;              "save the tail probability
              FSUBR FM, DPY(LCY)          "compare output to cutoff

            FADD FM, DPY(OSY);            "add output into output_sum
              DPX(LASTX)<FM               "save output in register

            INC TIME;                     "increment time counter
              FADD                        "push the adder

            DEC LOPLIM;                   "see if we are done yet
              FMUL DPX(TPX), MD;          "feneme * tail probability
              BFGE EVOUT;                 "quit if output < cutoff
              DPY(OSY)<FA                 "save output sum

            BGT L42;                      "if not done, keep looping
              FMUL;                       "push the multiplier
              INCTMA;                     "update pointer to scratch
              DB = DPX(LASTX);            "area for output dist, save
              OUT                         "the output sample
```

## Claims

1. A method of selecting, for speech recognition, candidate words from a vocabulary of words, wherein each word is represented by a sequence of probabilistic finite state phone machines and wherein an acoustic processor generates acoustic labels, each from a given label alphabet, in response to a spoken input;

each phone machine including a plurality of states and a plurality of transitions extending from state to state, and including transition likelihood counts and label likelihood counts indicating the likelihood of respective labels to be produced for at least some of the transitions;

the method being characterized by the steps of:

- forming a first table in which each label of the alphabet provides a vote for each word in the vocabulary, each label vote for a subject word indicating the likelihood that the subject word when spoken produces the respective label;
- the label votes for each word being derived from an expected label distribution which is produced

based on said transition likelihood counts and label likelihood counts;
- determining, for a given string of labels, the likelihood of each particular word by combining the votes for that particular word of all labels occuring in the string; and
- selecting the n words having the highest likelihood scores as candidate words, where n is a predefined integer.

**2.** The method of claim 1, characterized by the further steps of:
- forming a second table in which each label is assigned a penalty for each word in the vocabulary, the penalty assigned to a given label for a given word being indicative of the likelihood that the given label is not produced when the given word is spoken, and
- determining, for a given string of labels, the likelihood of a particular word by combining the votes for that particular word of all labels occuring in the string, together with the penalties for that particular word of all labels not occuring in the string.

**3.** The method of claim 2, characterized by
- repeating the combining step for each word in the vocabulary; and
- selecting the n words having the highest likelihood scores as candidate words, where n is a predefined integer.

**4.** The method of claim 1 or 2, characterized by the further step of:
- dividing the likelihood score for each word by the number of labels for which the combination was made to provide a scaled likelihood score.

**5.** The method of claim 1 or 2, characterized by the further steps of:
- determining the label in the string that corresponds to the most likely end time of a word-representing utterance; and
- limiting the combining step to labels generated prior to the determined end time label.

**6.** The method of claim 1 or 2, characterized by the further steps of:
- setting a reference end time; and
- repeating the combining step at successive intervals following the set reference end time.

**7.** The method of claim 1 or 2, characterized by:
- setting a reference end time;
- repeating the combining step at successive intervals following the set reference end time; and
- determining, for each word at each successive interval, a scaled likelihood score relative to the scaled likelihood scores of the other words at a given interval and assigning to each subject word the highest scaled relative likelihood score thereof.

**8.** The method of claim 1 or 3, characterized by the further step of:
- performing an approximate acoustic match on all words in the set of words from the vocabulary which were selected as candidate words.

**9.** The method of claim 1, wherein each phone machine has associated therewith (i) at least one transition and (ii) actual label output probabilities, each actual label output probability representing the probability that a specific label is generated at a given transition in the phone machine, and wherein additionally an acoustic match is performed which is characterized by the steps of:
- forming simplified phone machines by replacing, by a single specific value, the actual label probabilities for a given label at all transitions at which the given label may be generated in a particular phone machine; and
- determining the probability of a phone generating the labels in the string based on the simplified phone machine corresponding thereto.

**10.** The method of claim 1, wherein each sequence of phones corresponding to a vocabulary word represents a phonetic baseform, characterized by the further step of:
- arranging the baseforms into a tree structure in which baseforms share a common branch for as long the baseforms have at least similar phonetic beginnings, each leaf of the tree structure corresponding to a complete baseform.

11. Apparatus for selecting, for speech recognition, likely words from a vocabulary of words wherein each word is represented by a sequence of probabilistic finite state phone machines each including a plurality of states and a plurality of transitions extending from state to state, and including transition likelihood counts and label likelihood counts indicating the likelihood of respective labels to be produced for at least some of the transitions;

an acoustic processor being provided which generates acoustic labels, each from a given label alphabet, in response to a spoken input;

the apparatus being characterized by:
- means (8104) for forming a table (8106) in which each label of the alphabet provides a vote for each word in the vocabulary, each label vote for a subject word indicating the likelihood that the subject word when spoken produces the label providing the vote;
- means for deriving, for each word, said label votes from an expected label distribution which is produced based on said transition likelihood counts and label likelihood counts;
- means (8112) for determining, for a given string of labels, a likelihood score for each of the vocabulary words, including means for combining the votes for each particular word of all labels occuring in the string; and
- means for selecting a given number of words having the highest likelihood scores.

## Revendications

1. Procédé pour sélectionner, pour la reconnaissance de la parole, des mots candidats provenant d'un vocabulaire de mots, et dans lequel chaque mot est représenté par une séquence de structures phoniques d'états finis probabilistes et dans lequel un processeur acoustique produit des étiquettes acoustiques, tirées chacune d'un alphabet donné d'étiquettes, en réponse à un signal d'entrée parlé; chaque structure phonique comprenant une pluralité d'états et une pluralité de transitions s'étendant d'un état au suivant, et comprenant des nombres de probabilité de transitions et des nombres de probabilité d'étiquettes indiquant la probabilité de production d'étiquettes respectives pour au moins certaines des transitions;
le procédé étant caractérisé par les étapes:
   - formation d'une première table dans laquelle chaque étiquette de l'alphabet fournit un suffrage pour chaque mot du vocabulaire, chaque suffrage d'une étiquette pour un mot sujet indiquant la probabilité que, lorsqu'il est prononcé, le mot sujet produit l'étiquette respective;
   - les suffrages d'étiquettes pour chaque mot étant obtenus à partir d'une distribution attendue d'étiquettes, qui est produite sur la base desdits nombres de probabilité de transitions et desdits nombres de probabilité d'étiquettes;
   - détermination, pour une suite donnée d'étiquettes, de la probabilité de chaque mot particulier par combinaison des suffrages pour ce mot particulier de toutes les étiquettes apparaissant dans la suite; et
   - sélection des n mots possédant les valeurs maximales de probabilité en tant que mots candidats, n étant un entier prédéfini.

2. Procédé selon la revendication 1, caractérisé par les étapes supplémentaires:
   - formation d'une seconde table dans laquelle à chaque étiquette est affectée une pénalité pour chaque mot du vocabulaire, la pénalité affectée à une étiquette donnée pour un mot donné étant indicative de la probabilité que l'étiquette donnée n'est pas produite lorsque le mot donné est prononcé, et
   - détermination, pour une suite donnée d'étiquettes, de la probabilité d'un mot particulier par combinaison des suffrages pour ce mot particulier de toutes les étiquettes apparaissant dans la suite, conjointement avec les pénalités pour ce mot particulier de toutes les étiquettes n'apparaissant pas dans la suite.

3. Procédé selon la revendication 2, caractérisé par la
   - répétition de l'étape de combinaison pour chaque mot du vocabulaire; et
   - sélection des n mots possédant les valeurs maximales de probabilité en tant que mots candidats, n étant un entier prédéfini.

4. Procédé selon la revendication 1 ou 2, caractérisé par l'étape supplémentaire :
   - division de la valeur de probabilité pour chaque mot par le nombre d'étiquettes pour lequel la combinaison a été établie, pour obtenir une valeur de probabilité étalonnée.

5. Procédé selon la revendication 1 ou 2, caractérisé par les étapes supplémentaires :
   - détermination de l'étiquette dans la suite, qui correspond à l'instant final le plus probable d'une prononciation représentant un mot; et
   - limitation de l'étape de combinaison à des étiquettes produites avant l'étiquette d'instant final déterminé.

6. Procédé selon la revendication 1 ou 2, caractérisé par les étapes suivantes:
   - réglage d'un instant final de référence; et
   - répétition de l'étape de combinaison à des intervalles successifs à la suite de l'instant final de référence réglé.

7. Procédé selon la revendication 1 ou 2, caractérisé par:
   - réglage d'un instant final de référence;
   - répétition de l'étape de combinaison à des intervalles successifs, à la suite de l'instant final de référence réglé; et
   - détermination, pour chaque mot dans chaque intervalle successif, d'une valeur de probabilité étalonnée relative aux valeurs de probabilité étalonnées d'autres mots dans un intervalle donné, et affectation, à chaque mot sujet, de la valeur de probabilité relative étalonnée maximale de ce mot.

8. Procédé selon la revendication 1 ou 3, caractérisé par l'étape supplémentaire:
   - exécution d'une adaptation acoustique approximative pour tous les mots de l'ensemble de mots tirés du vocabulaire, qui ont été sélectionnés en tant que mots candidats.

9. Procédé selon la revendication 1, dans lequel qu'à chaque structure phonique sont associées (i) au moins une transition et (ii) des probabilités réelles de sorties d'étiquettes, chaque probabilité réelle de sortie d'étiquettes représentant la probabilité qu'une étiquette spécifique soit produite au niveau d'une transition donnée dans la structure phonique, et dans lequel en outre on réalise une adaptation acoustique, caractérisée par les étapes:
   - formation de structures phoniques simplifiées par remplacement, par une seule valeur spécifique, des probabilités réelles pour une étiquette donnée pour toutes les transitions, au niveau desquelles l'étiquette donnée peut être produite dans une structure phonique particulière; et
   - détermination de la probabilité d'un phone produisant les étiquettes dans la suite sur la base de la structure phonique simplifiée, qui lui correspond.

10. Procédé selon la revendication 1, dans lequel chaque séquence de phones correspondant à un mot de vocabulaire représente une forme de base phonétique, caractérisé par l'étape suivante:
    - disposition des formes de base sous la forme d'une structure arborescente, dans laquelle des formes de base se partagent une branche commune dans la mesure où les formes de base possèdent au moins des débuts phonétiques similaires, chaque feuille de la structure arborescente correspondant à une forme de base complète.

11. Dispositif pour sélectionner, pour la reconnaissance de la parole, des mots appropriés à partir d'un vocabulaire de mots, dans lequel chaque mot est représenté par une suite de structures phoniques d'états finis probabilistes comprenant chacune une pluralité d'états, une pluralité de transitions passant d'un état au suivant, et comprenant des nombres de probabilité de transitions et des nombres de probabilité d'étiquettes indiquant la probabilité que des étiquettes respectives soient produites pour au moins certaines des transitions;
    un processeur acoustique étant prévu pour produire des étiquettes acoustique, chacune provenant d'un alphabet donné d'étiquettes, en réponse à un signal d'entrée parlé;
    l'appareil étant caractérisé par:
    - des moyens (8104) pour former une table (8106) dans laquelle chaque étiquette de l'alphabet fournit un suffrage pour chaque mot du vocabulaire, chaque suffrage d'étiquette pour un mot sujet indiquant la probabilité que, lorsqu'il est prononcé, le mot sujet produise l'étiquette fournissant le

suffrage;
- des moyens pour obtenir, pour chaque mot, lesdits suffrages d'étiquettes à partir d'une distribution attendue d'étiquettes, qui est produite sur la base desdits nombres de probabilité de transitions et desdits nombres de probabilité d'étiquettes;
- des moyens (8112) pour déterminer, pour une suite de données d'étiquettes, une valeur de probabilité pour chacun des mots du vocabulaire et comprenant des moyens pour combiner les suffrages pour chaque mot particulier de toutes les étiquettes apparaissant dans la suite; et
- des moyens pour sélectionner un nombre donné de mots possédant les valeurs maximales de probabilité.

## Patentansprüche

1. Verfahren zum Auswählen von Kanditatenwörtern aus einem Vokabular von Wörtern zur Spracherkennung, bei welchem jedes Wort durch eine Folge probabilistischer Laut-Maschinen mit endlich vielen Zuständen repräsentiert wird und bei welchem ein akustischer Prozessor akustische Marken, wobei jede aus einem gegebenen Markenalphabet stammt, entsprechend einer gesprochenen Eingabe erzeugt,

   jede Laut-Maschine eine Mehrzahl von Zuständen und eine Mehrzahl von Übergängen aufweist, die von Zustand zu Zustand verlaufen und Übergangswahrscheinlichkeit-Zählungen und Markenwahrscheinlichkeit-Zählungen aufweist, welche die Wahrscheinlichkeit entsprechender Marken anzeigen, die für zumindest einige der Übergänge erzeugt werden sollen,

   wobei das Verfahren durch die folgenden Schritte gekennzeichnet ist:

   Bilden einer ersten Tabelle, in der jede Marke des Alphabets eine Wahlstimme für jedes Wort in dem Vokabular liefert, wobei jede Markenwahlstimme eines Wortes die Wahrscheinlichkeit anzeigt, daß dieses Wort, wenn dieses gesprochen wird, die entsprechende Marke erzeugt,

   die Markenwahlstimmen für jedes Wort aus einer erwarteten Markenverteilung abgeleitet werden, die beruhend auf den Übergangswahrscheinlichkeit-Zählungen und Markenwahrscheinlichkeit-Zählungen abgeleitet wird,

   Bestimmen der Wahrscheinlichkeit jedes einzelnen Wortes für eine gegebene Kette von Marken durch Kombinieren der Wahlstimmen für jenes einzelne Wort aller Marken, die in der Kette vorkommen und

   Auswählen der n Wörter mit den höchsten Wahrscheinlichkeit-Zählungen als Kandidatenwörter, wobei n eine vorbestimmte ganze Zahl ist.

2. Verfahren nach Anspruch 1, gekennzeichnet durch die folgenden weiteren Schritte:

   Bilden einer zweiten Tabelle, in der jeder Marke eine Strafe für jedes Wort in dem Vokabular zugeteilt wird, wobei die einer gegebenen Marke für ein gegebenes Wort zugeteilte Strafe die Wahrscheinlichkeit anzeigt, daß die gegebene Marke nicht erzeugt wird, wenn das gegebene Wort gesprochen wird und

   Bestimmen der Wahrscheinlichkeit eines einzelnen Wortes für eine gegebene Kette von Marken durch Kombinieren der Wahlstimmen für jedes einzelne Wort aller Marken, die in der Kette vorkommen zusammen mit den Strafen für jenes einzelne Wort aller Marken, die in der Kette nicht vorkommen.

3. Verfahren nach Anspruch 2, gekennzeichnet durch:

   Wiederholen des Schrittes zum Kombinieren für jedes Wort in dem Vokabular und

   Auswählen der n Wörter mit den meisten Wahrscheinlichkeit-Zählungen als Kandidatenwörter, wobei n eine vorbestimmte ganze Zahl ist.

4. Verfahren nach Anspruch 1 oder 2 gekennzeichnet durch den folgenden weiteren Schritt:

Dividieren der Wahrscheinlichkeit-Zählung für jedes Wort durch die Anzahl von Marken, für welche die Kombination hergestellt wurde, um eine skalierte Wahrscheinlichkeit-Zählung zu liefern.

**5.** Verfahren nach Anspruch 1 oder 2, gekennzeichnet durch die folgenden weiteren Schritte:

Bestimmen der Marke in der Kette, welche der wahrscheinlichsten Endzeit einer wortrepräsentierenden Aussprache entspricht und

Einschränken des Schrittes zum Kombinieren auf Marken, die vor der bestimmten Endzeitmarke erzeugt wurden.

**6.** Verfahren nach Anspruch 1 oder 2 gekennzeichnet durch die folgenden weiteren Schritte:

Setzen einer Referenzendzeit und

Wiederholen des Schrittes zum Kombinieren in aufeinanderfolgenden Intervallen, die auf die gesetzte Referenzzeit folgen.

**7.** Verfahren nach Anspruch 1 oder 2 gekennzeichnet durch:

Setzen einer Referenzendzeit,

Wiederholen des Schrittes zum Kombinieren in aufeinanderfolgenden Intervallen, die auf die gesetzte Referenzzeit folgen; und

Bestimmen einer skalierten Wahrscheinlichkeit-Zählung bezüglich der skalierten Wahrscheinlichkeit-Zählungen der anderen Wörter bei einem gegebenen Intervall und jedem unterworfenen Wort Zuteilen seiner höchsten skalierten relativen Wahrscheinlichkeit-Zählung, für jedes Wort bei jedem aufeinanderfolgenden Intervall.

**8.** Verfahren nach Anspruch 1 oder 3 gekennzeichnet durch den folgenden weiteren Schritt:

Durchführen einer annähernden akustischen Anpassung an alle Wörter in dem Satz von Wörtern aus dem Vokabular, die als Kandidatenwörter ausgewählt wurden.

**9.** Verfahren nach Anspruch 1, bei welchem jede Laut-Maschine ihr zugeordnet (i) zumindest einen Übergang und (ii) aktuelle Marken-Ausgabewahrscheinlichkeiten aufweist, wobei jede aktuelle Marken-Ausgabewahrscheinlichkeit die Wahrscheinlichkeit repräsentiert, daß eine spezifische Marke bei einem gegebenen Übergang in der Laut-Maschine erzeugt wird und bei welchem eine akustische Anpassung zusätzlich durchgeführt wird, die durch die folgenden Schritte gekennzeichnet ist:

Bilden vereinfachter Laut-Maschinen durch Ersetzen der aktuellen Marken-Wahrscheinlichkeiten für eine gegebene Marke bei allen Übergängen durch einen einzigen spezifischen Wert, bei welchem die gegebene Marke in einer einzelnen Laut-Maschine erzeugt werden kann und

Bestimmen der Wahrscheinlichkeit eines Lautes, welcher die Marken in der Kette beruhend auf der entsprechenden vereinfachten Laut-Maschine erzeugt.

**10.** Verfahren nach Anspruch 1, bei welchem jede Folge von Lauten, die einem Vokabular-Wort entsprechen, eine phonetische Basisform repräsentiert, gekennzeichnet durch den folgenden weiteren Schritt:

Anordnen der Basisformen in einer Baumstruktur, in der Basisformen solange einen gemeinsamen Zweig teilen, wie die Basisformen zumindest ähnliche phonetische Anfänge aufweisen, wobei jedes Blatt der Baumstruktur einer vollständigen Basisform entspricht.

**11.** Einrichtung zum Auswählen wahrscheinlicher Wörter aus einem Vokabular von Wörtern, zur Spracherkennung, bei welcher jedes Wort durch eine Folge probabilistischer Laut-Maschinen mit endlich vielen

Zuständen repräsentiert ist, wobei jede eine Mehrzahl von Zuständen und eine Mehrzahl von Übergängen aufweist, die von Zustand zu Zustand verlaufen und Übergangswahrscheinlichkeit-Zählungen und Markenwahrscheinlichkeit-Zählungen aufweist, welche die Wahrscheinlichkeit entsprechender Marken anzeigen, die für zumindest einige der Übergänge erzeugt werden sollen,

ein akustischer Prozessor vorgesehen ist, der akustische Marken, wobei jede aus einem gegebenen Markenalphabet stammt, entsprechend einer gesprochenen Eingabe erzeugt,

wobei die Einrichtung durch folgendes gekennzeichnet ist:

Mittel (8104) zum Bilden einer Tabelle (8106) in der jede Marke des Alphabets eine Wahlstimme für jedes Wort in dem Vokabular liefert, wobei jede Markenwahlstimme eines Wortes die Wahrscheinlichkeit anzeigt, daß dieses Wort, wenn dieses gesprochen wird, die Marke erzeugt, welche die Wahlstimme liefert,

für jedes Wort Mittel zum Ableiten der Markenwahlstimmen aus einer erwartenen Markenverteilung, die beruhend auf den Übergangswahrscheinlichkeit-Zählungen und Markenwahrscheinlichkeit-Zählungen erzeugt wird,

für eine gegebene Kette von Marken Mittel (8112) zum Bestimmen einer Wahrscheinlichkeit-Zählung für jedes der Vokabular-Wörter, mit Mitteln zum Kombinieren der Wahlstimmen für jedes einzelne Wort aller Marken, die in der Kette vorkommen und

Mittel zum Auswählen einer gegebenen Anzahl von Wörtern mit den höchsten Wahrscheinlichkeit-Zählungen.

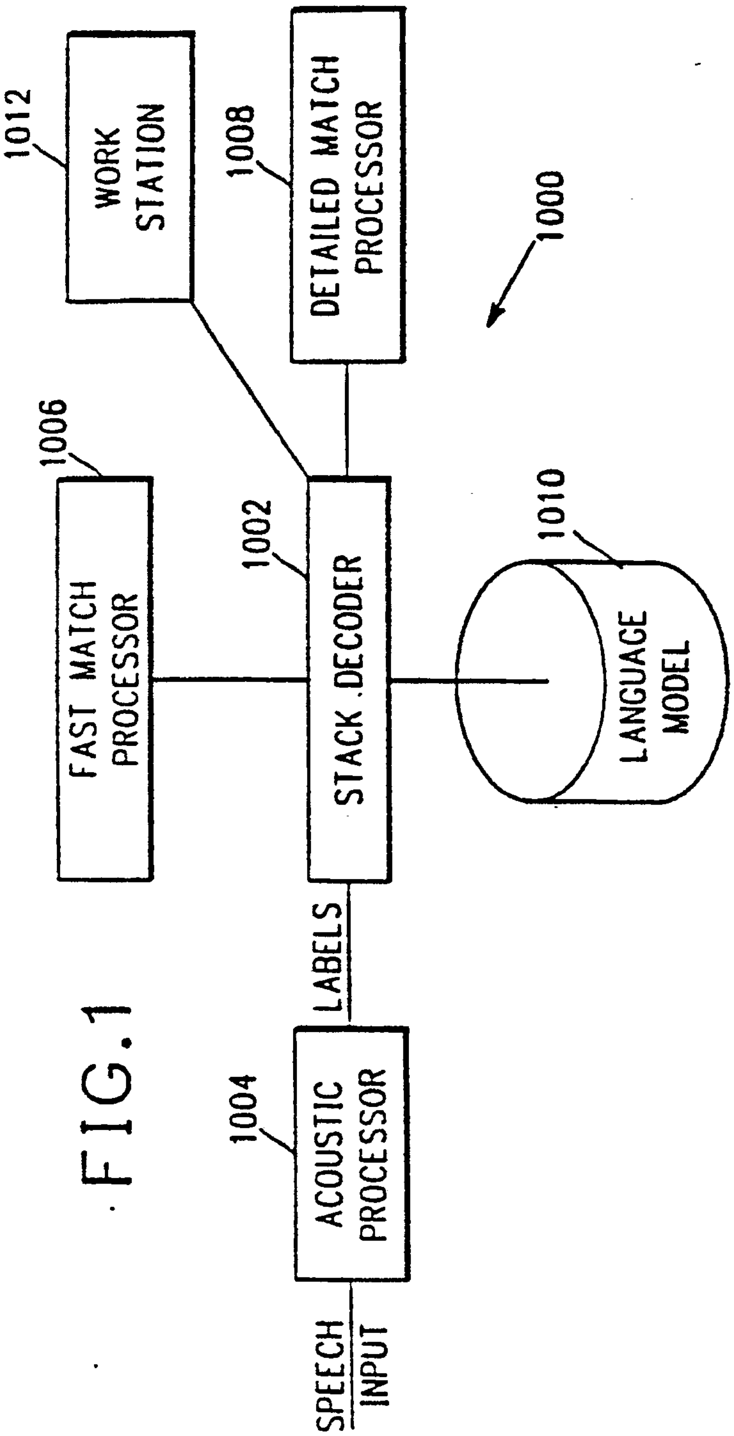

SPEECH INPUT
ACOUSTIC PROCESSOR
1004
LABELS
STACK DECODER
1002
FAST MATCH PROCESSOR
1006
LANGUAGE MODEL
1010
WORK STATION
1012
DETAILED MATCH PROCESSOR
1008
1000


FIG.1

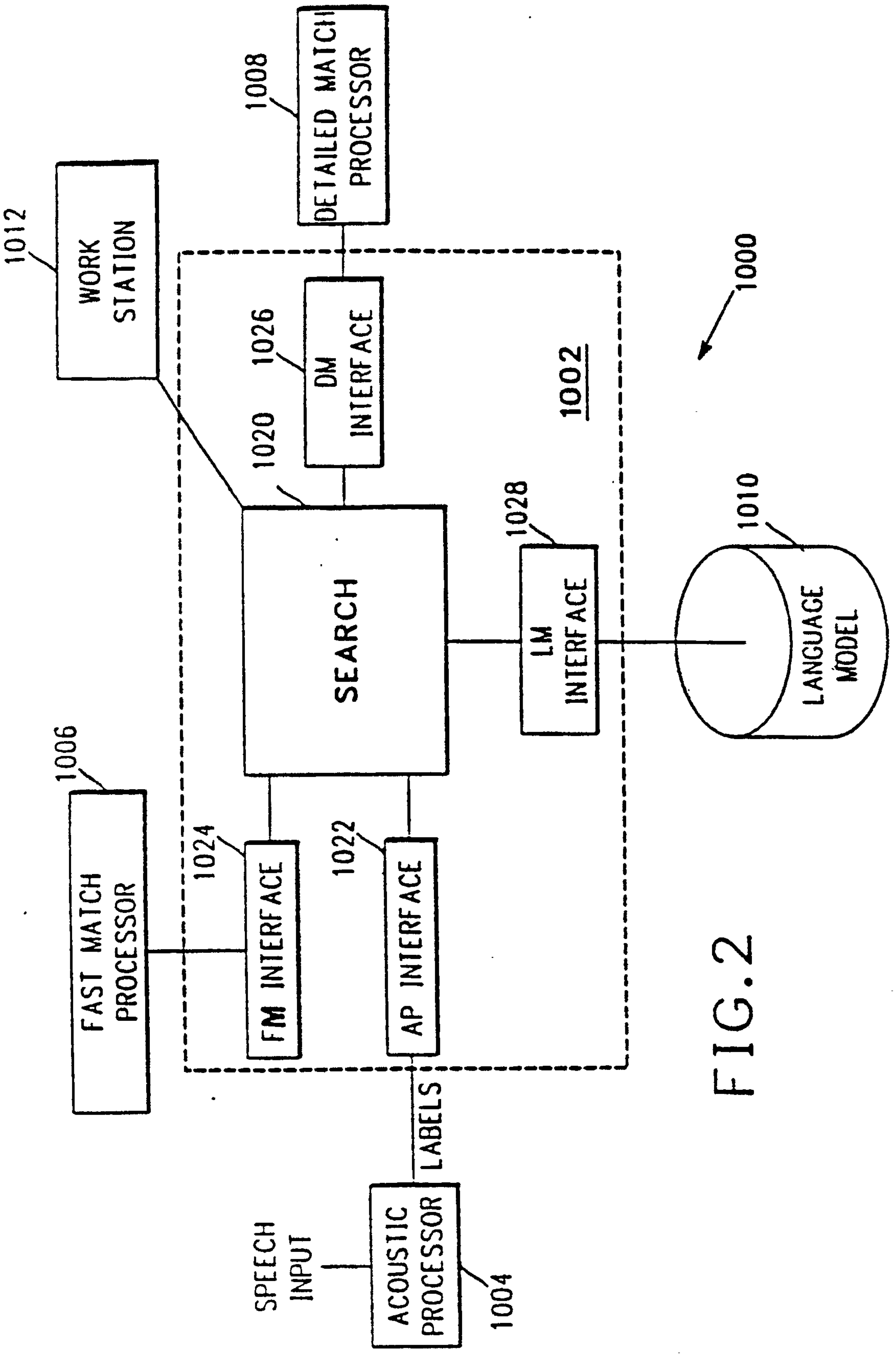
1000
1002
SEARCH
1020
DM INTERFACE
1026
DETAILED MATCH PROCESSOR
1008
WORK STATION
1012
LM INTERFACE
1028
LANGUAGE MODEL
1010
FM INTERFACE
1024
AP INTERFACE
1022
FAST MATCH PROCESSOR
1006
LABELS
ACOUSTIC PROCESSOR
1004
SPEECH INPUT

FIG.2

FIG.3

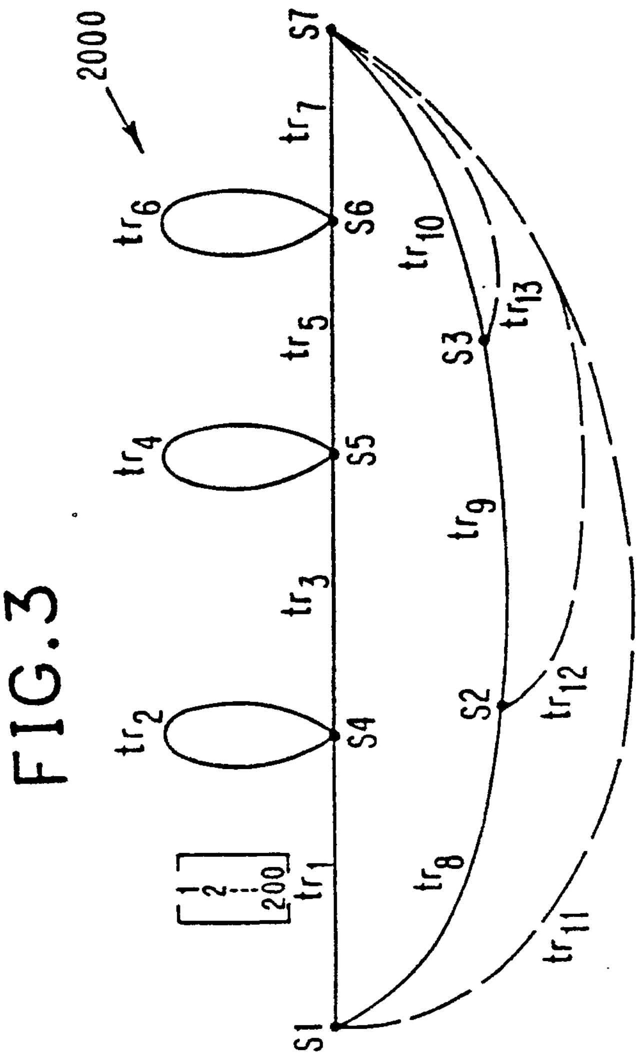
2000
S1
S2
S3
S4
S5
S6
S7
$tr_1$
$tr_2$
$tr_3$
$tr_4$
$tr_5$
$tr_6$
$tr_7$
$tr_8$
$tr_9$
$tr_{10}$
$tr_{11}$
$tr_{12}$
$tr_{13}$
1
2
200

FIG. 4

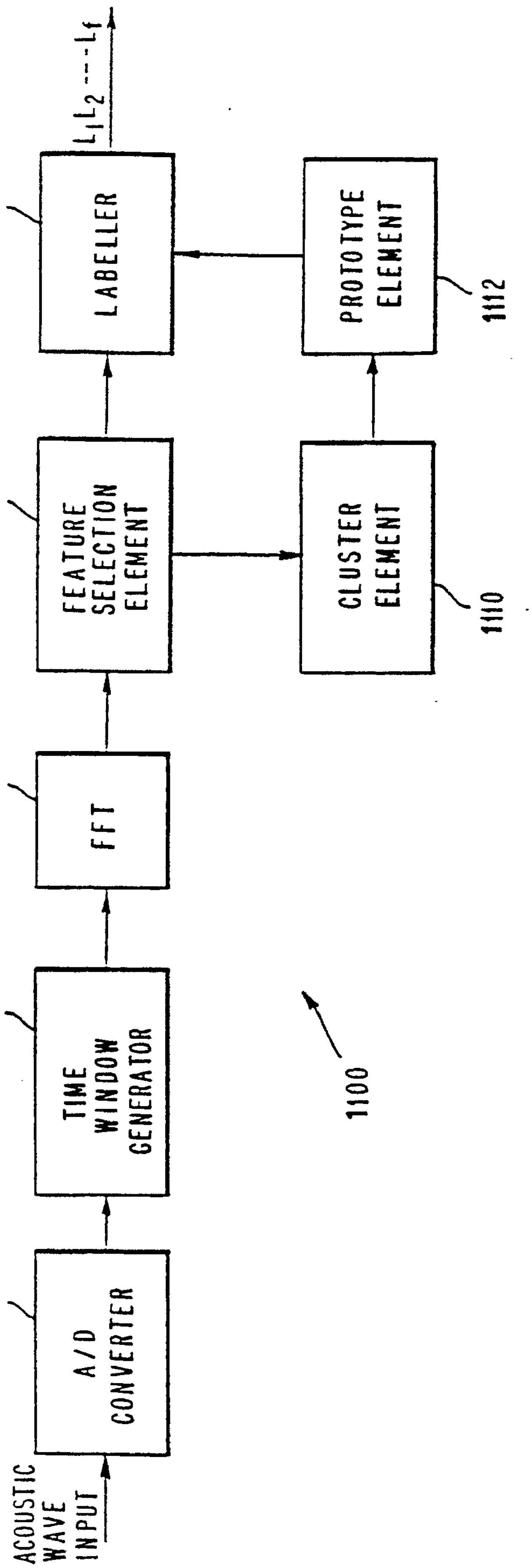
ACOUSTIC WAVE INPUT
A/D CONVERTER
1102
TIME WINDOW GENERATOR
1104
FFT
1106
FEATURE SELECTION ELEMENT
1108
CLUSTER ELEMENT
1110
PROTOTYPE ELEMENT
1112
LABELLER
1114
$L_1 L_2 --- L_f$
1100

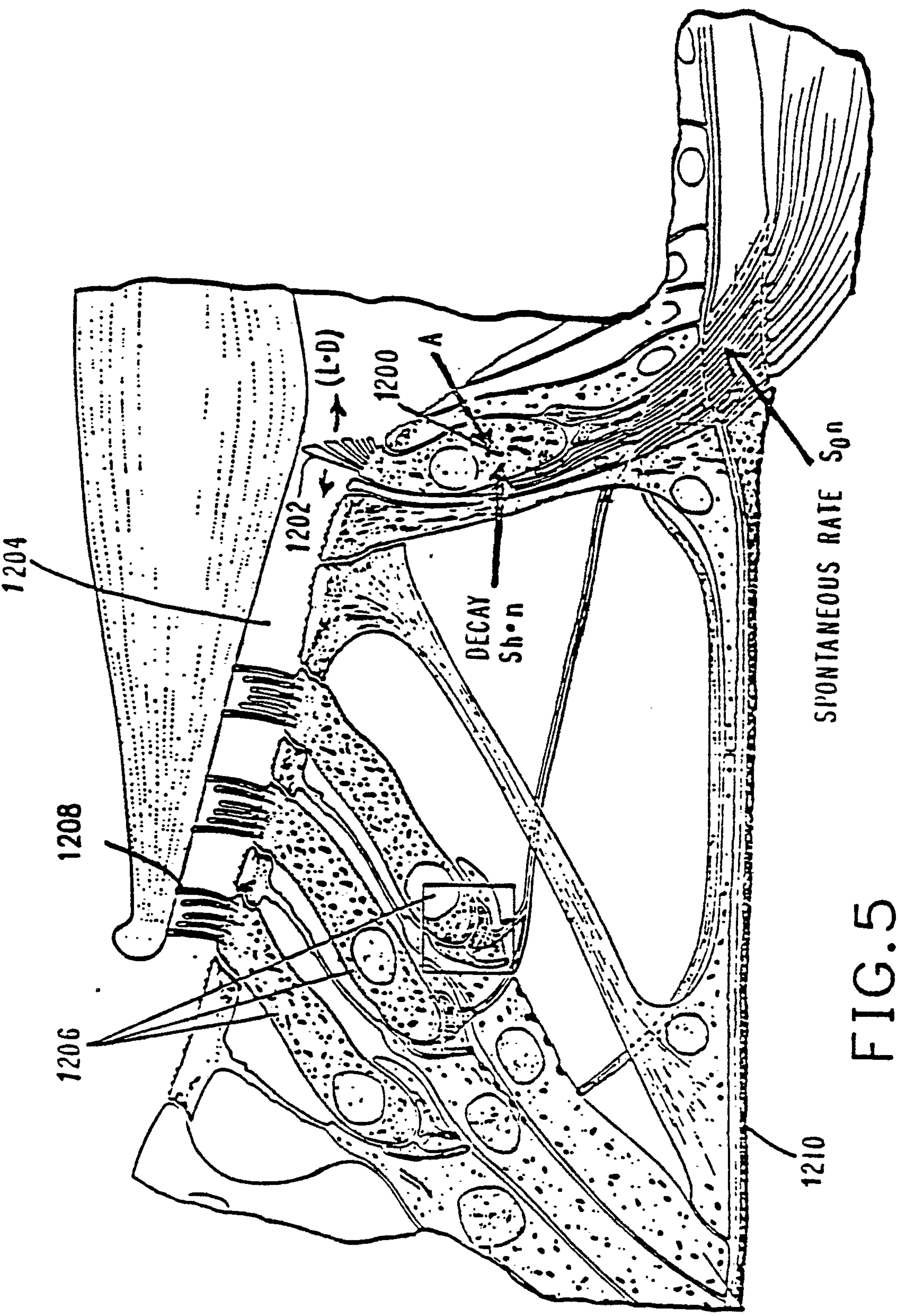
1204
1208
1206
1200
1202
(L•D)
A
DECAY
Sh•n
$S_{0n}$
SPONTANEOUS RATE
1210

FIG.5

FIG.6

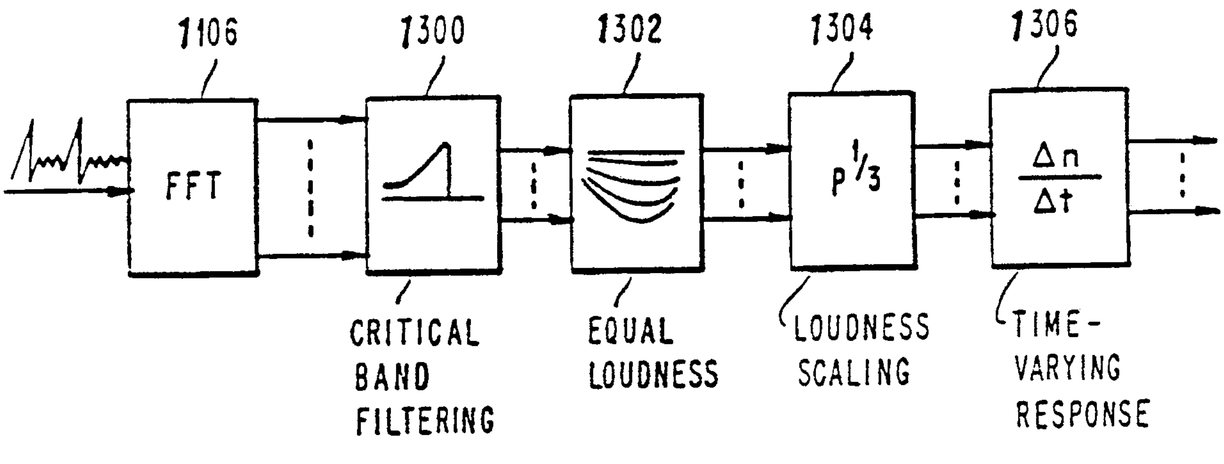
1106
1300
1302
1304
1306
FFT
$p^{1/3}$
Δn
Δt
CRITICAL BAND FILTERING
EQUAL LOUDNESS
LOUDNESS SCALING
TIME-VARYING RESPONSE

FIG.7

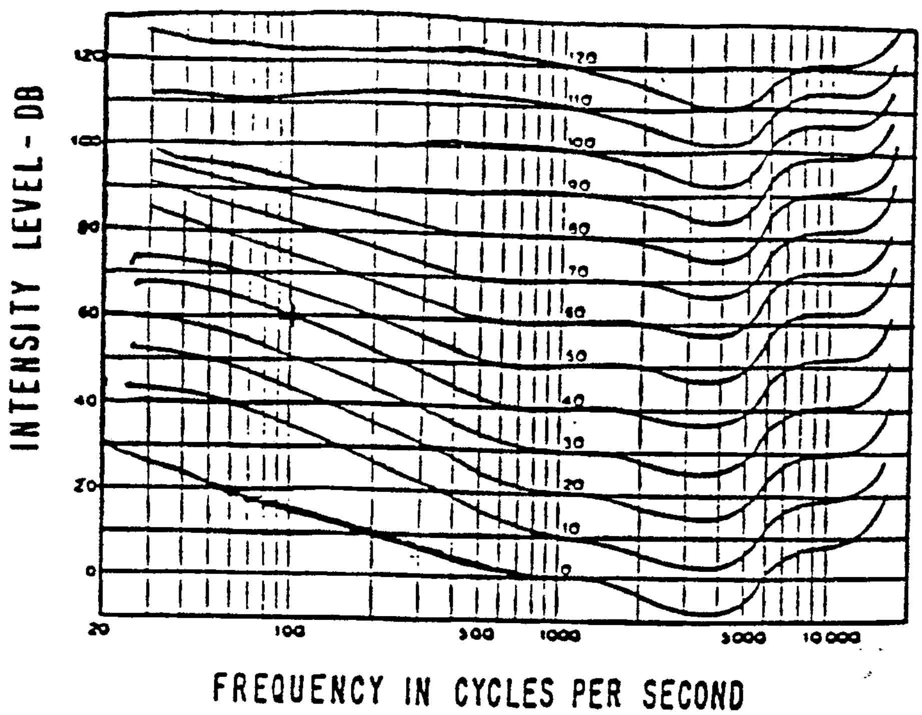
INTENSITY LEVEL - DB
120
100
80
60
40
20
0
120
110
100
90
80
70
60
50
40
30
20
10
0
20
100
300
1000
3000
10 000
FREQUENCY IN CYCLES PER SECOND

FIG.8

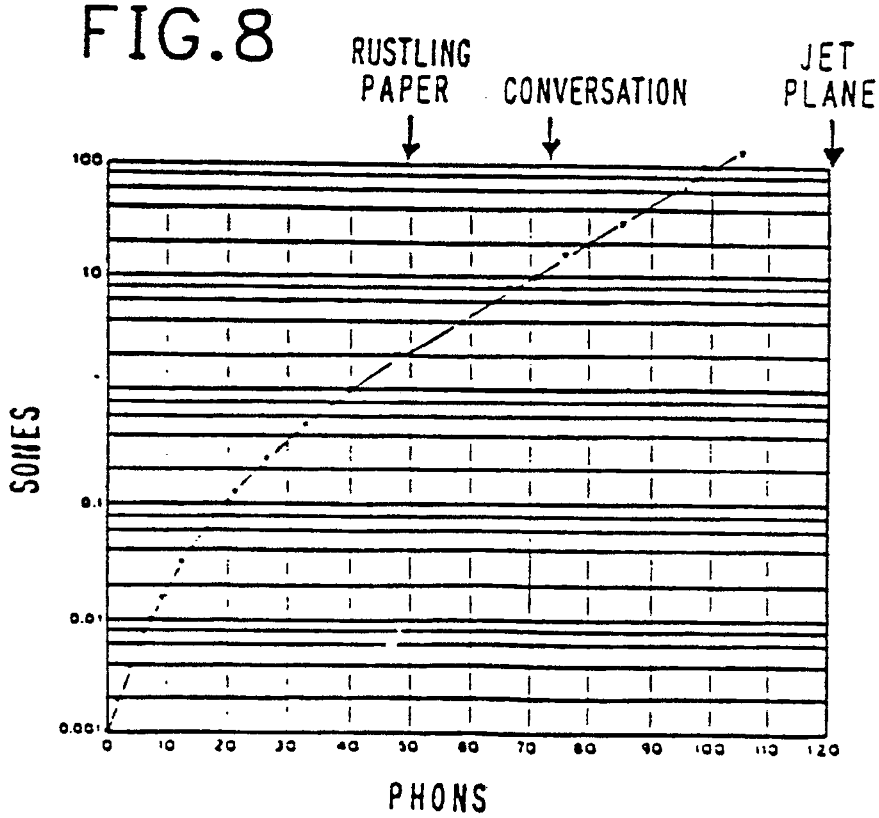
RUSTLING PAPER
CONVERSATION
JET PLANE
100
10
0.1
0.01
0.001
SONES
0
10
20
30
40
50
60
70
80
90
100
110
120
PHONS

FIG.9

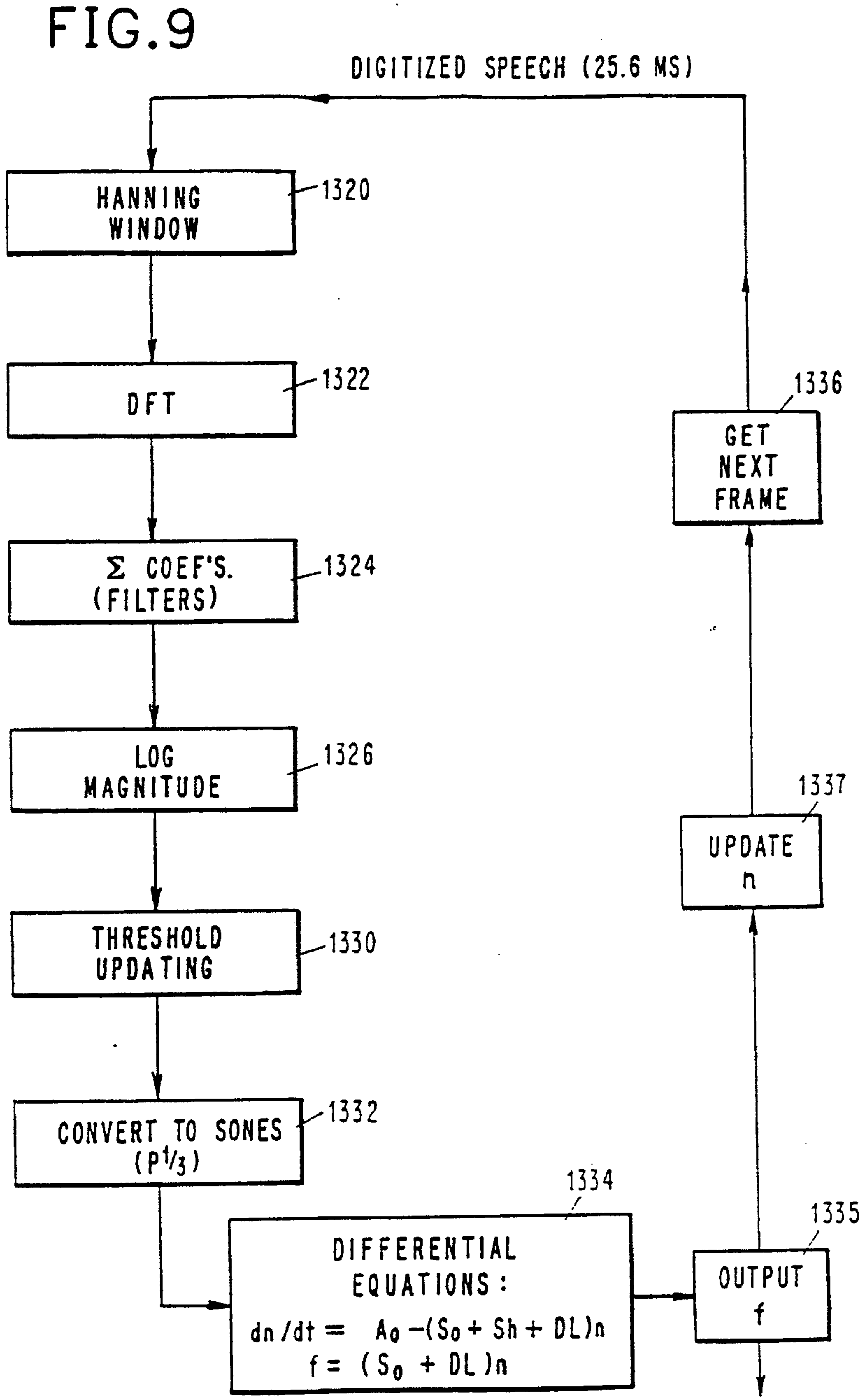
DIGITIZED SPEECH (25.6 MS)
HANNING WINDOW
1320
DFT
1322
Σ COEF'S. (FILTERS)
1324
LOG MAGNITUDE
1326
THRESHOLD UPDATING
1330
CONVERT TO SONES ($P^{1/3}$)
1332
DIFFERENTIAL EQUATIONS :
dn/dt = Ao −(So + Sh + DL)n
f = (S0 + DL)n
1334
OUTPUT f
1335
UPDATE n
1337
GET NEXT FRAME
1336

FIG. 10

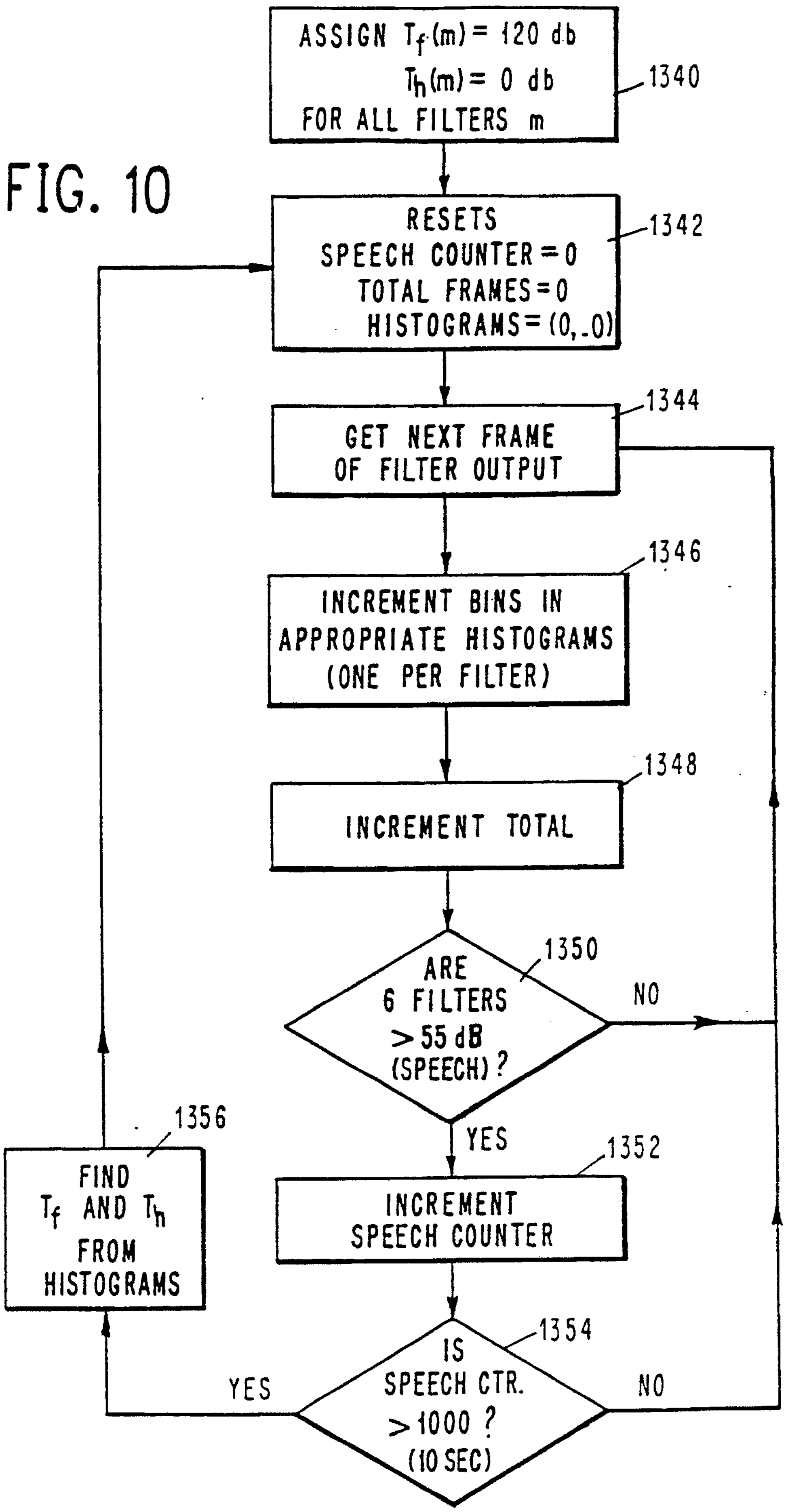

ASSIGN $T_f(m)$ = 120 db
$T_h(m)$ = 0 db
FOR ALL FILTERS m
1340
RESETS
SPEECH COUNTER = 0
TOTAL FRAMES = 0
HISTOGRAMS = (0,..0)
1342
GET NEXT FRAME
OF FILTER OUTPUT
1344
INCREMENT BINS IN
APPROPRIATE HISTOGRAMS
(ONE PER FILTER)
1346
INCREMENT TOTAL
1348
ARE
6 FILTERS
> 55 dB
(SPEECH) ?
1350
NO
YES
INCREMENT
SPEECH COUNTER
1352
IS
SPEECH CTR.
> 1000 ?
(10 SEC)
1354
YES
NO
FIND
$T_f$ AND $T_h$
FROM
HISTOGRAMS
1356

FIG.11

DETAILED MATCH LATTICE

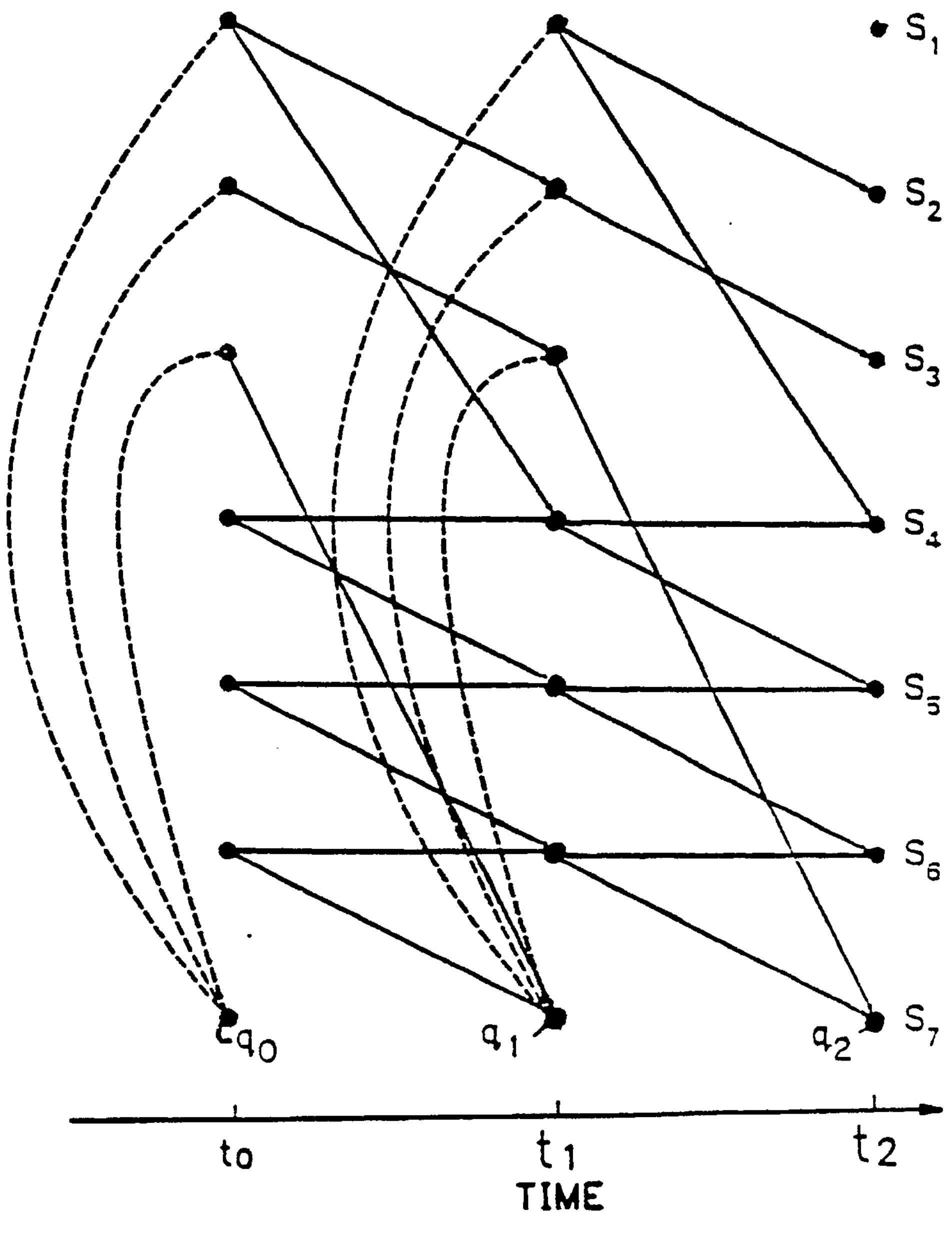

FIG.12

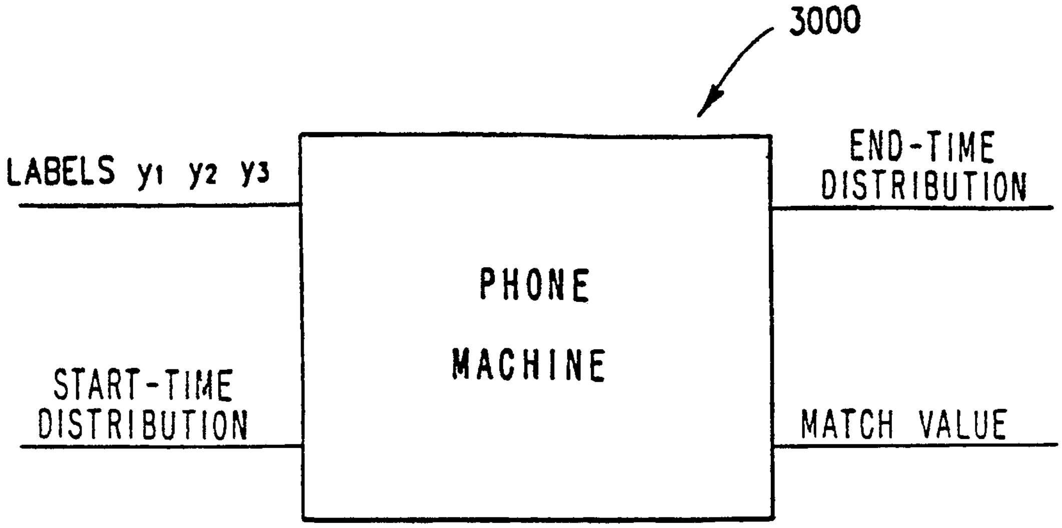


FIG.13

ASSUME: $L(l_0 l_1 l_2 l_3)$, $Q(q_0 q_1 q_2 q_3)$

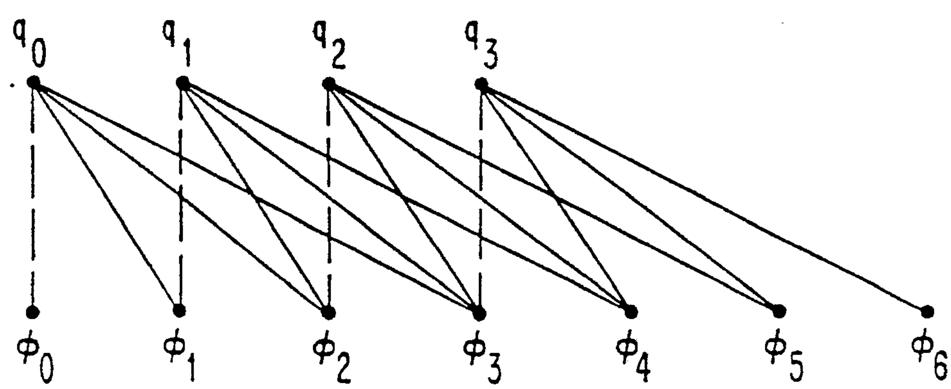

FIG.14

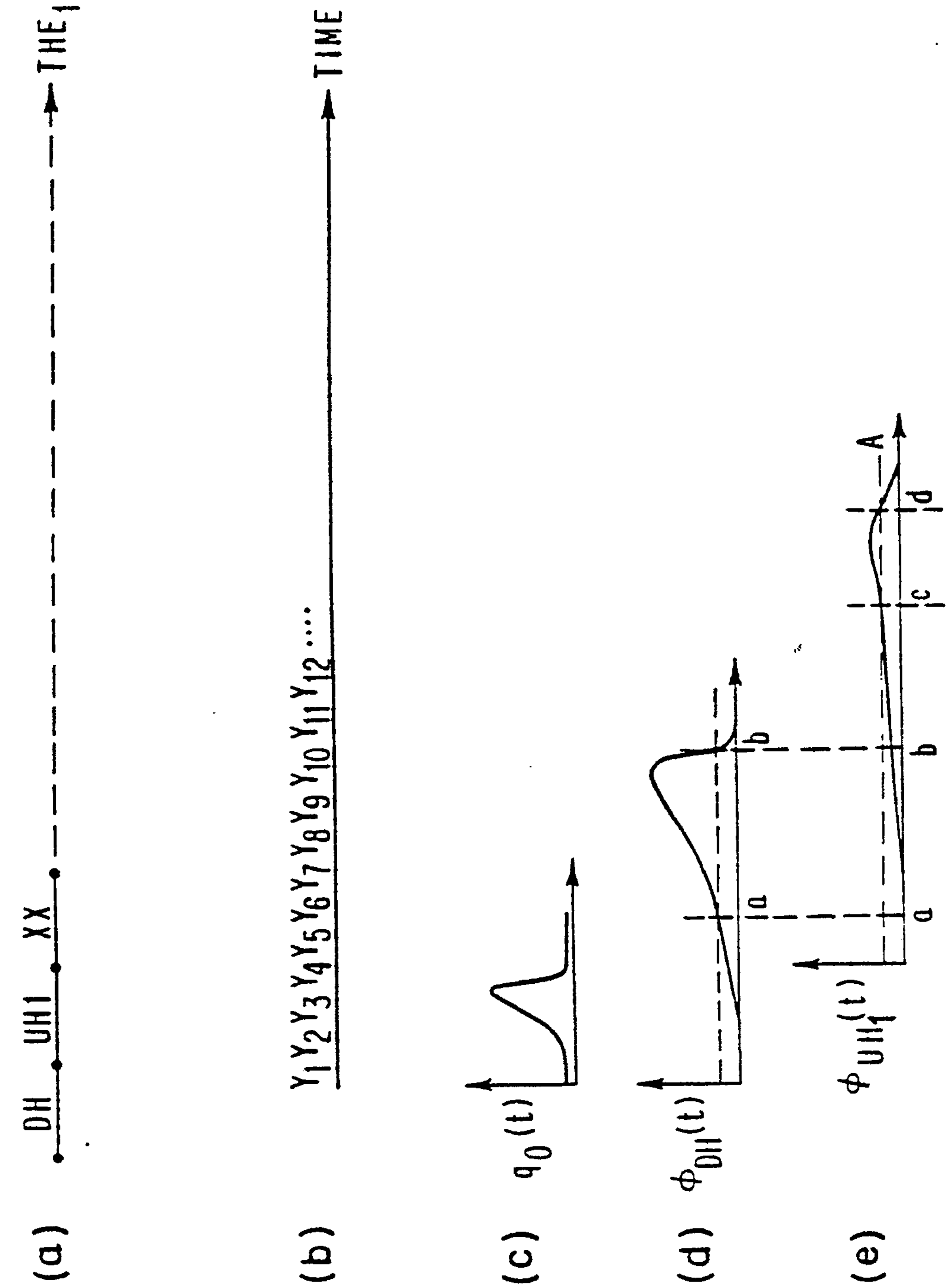

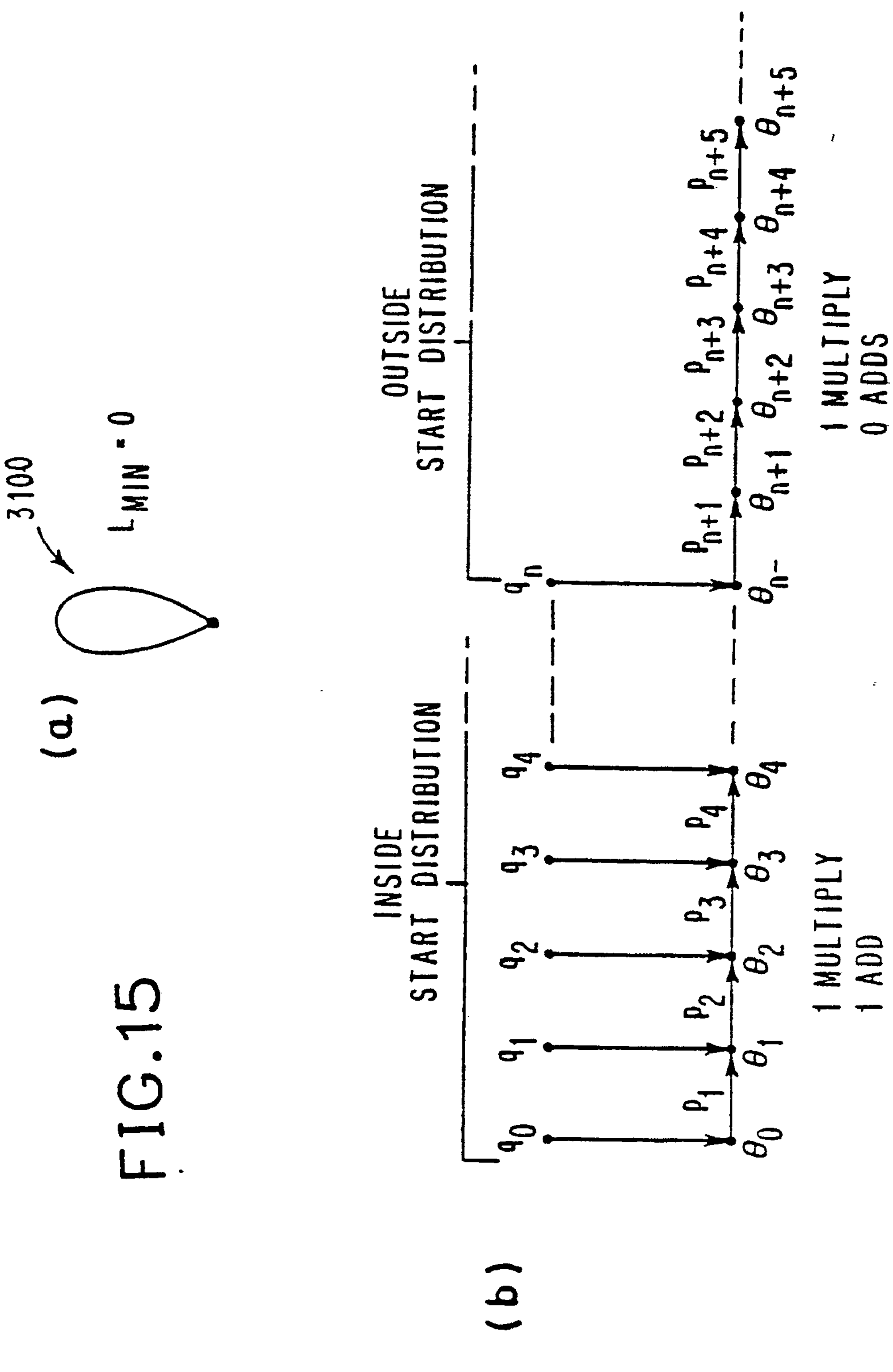
(a)
3100
$L_{MIN}$ = 0
(b)
INSIDE
START DISTRIBUTION
OUTSIDE
START DISTRIBUTION
$q_0$ $q_1$ $q_2$ $q_3$ $q_4$ $q_n$
$p_1$ $p_2$ $p_3$ $p_4$ $p_{n+1}$ $p_{n+2}$ $p_{n+3}$ $p_{n+4}$ $p_{n+5}$
$\theta_0$ $\theta_1$ $\theta_2$ $\theta_3$ $\theta_4$ $\theta_{n-}$ $\theta_{n+1}$ $\theta_{n+2}$ $\theta_{n+3}$ $\theta_{n+4}$ $\theta_{n+5}$
1 MULTIPLY
1 ADD
1 MULTIPLY
0 ADDS

FIG.15

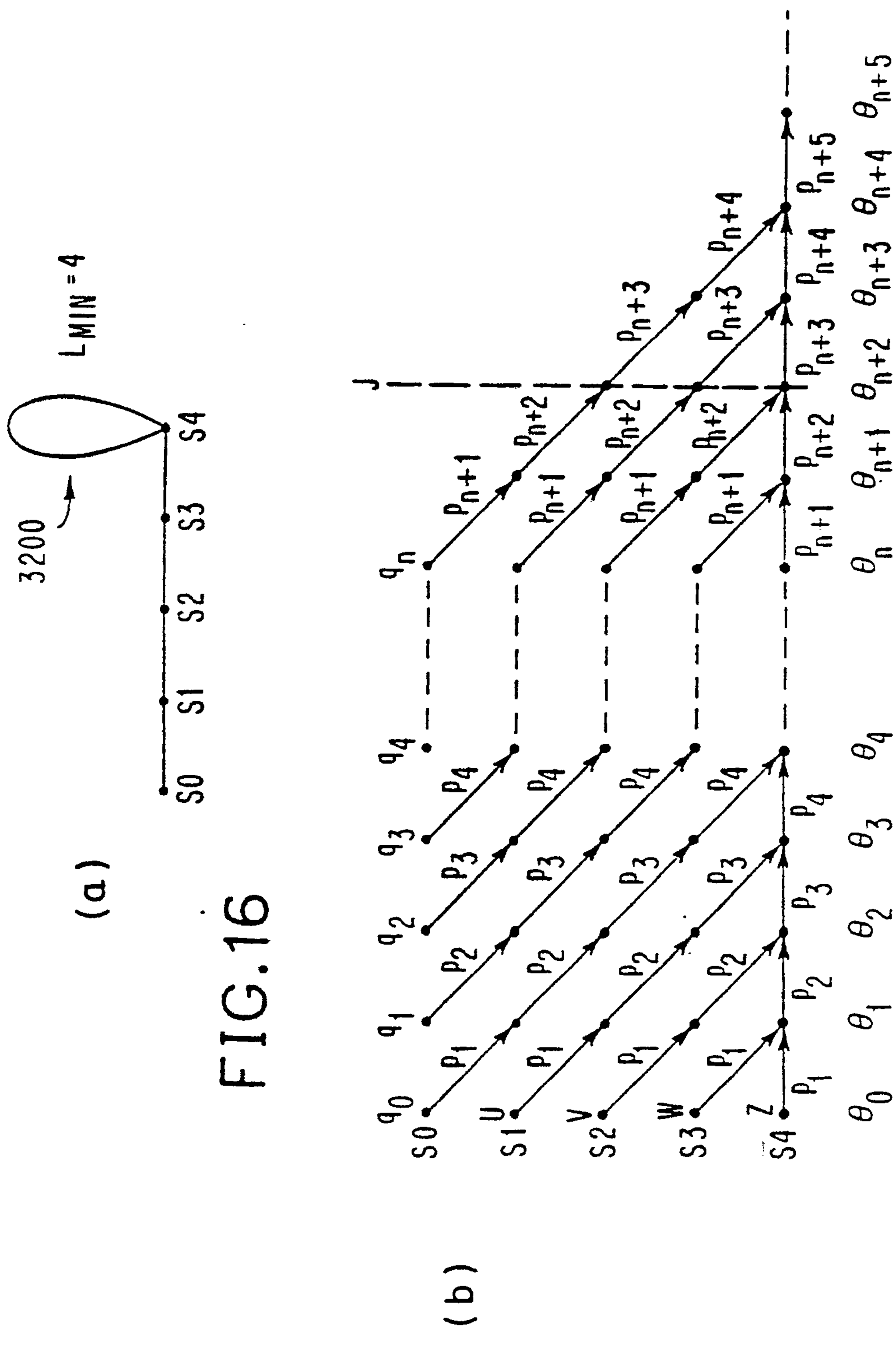
(a)
3200
LMIN = 4
S0
S1
S2
S3
S4
(b)
4 MULTIPLIES
1 ADD
1 MULTIPLY
0 ADDS
J
U
V
W
Z

FIG.16

FIG.17

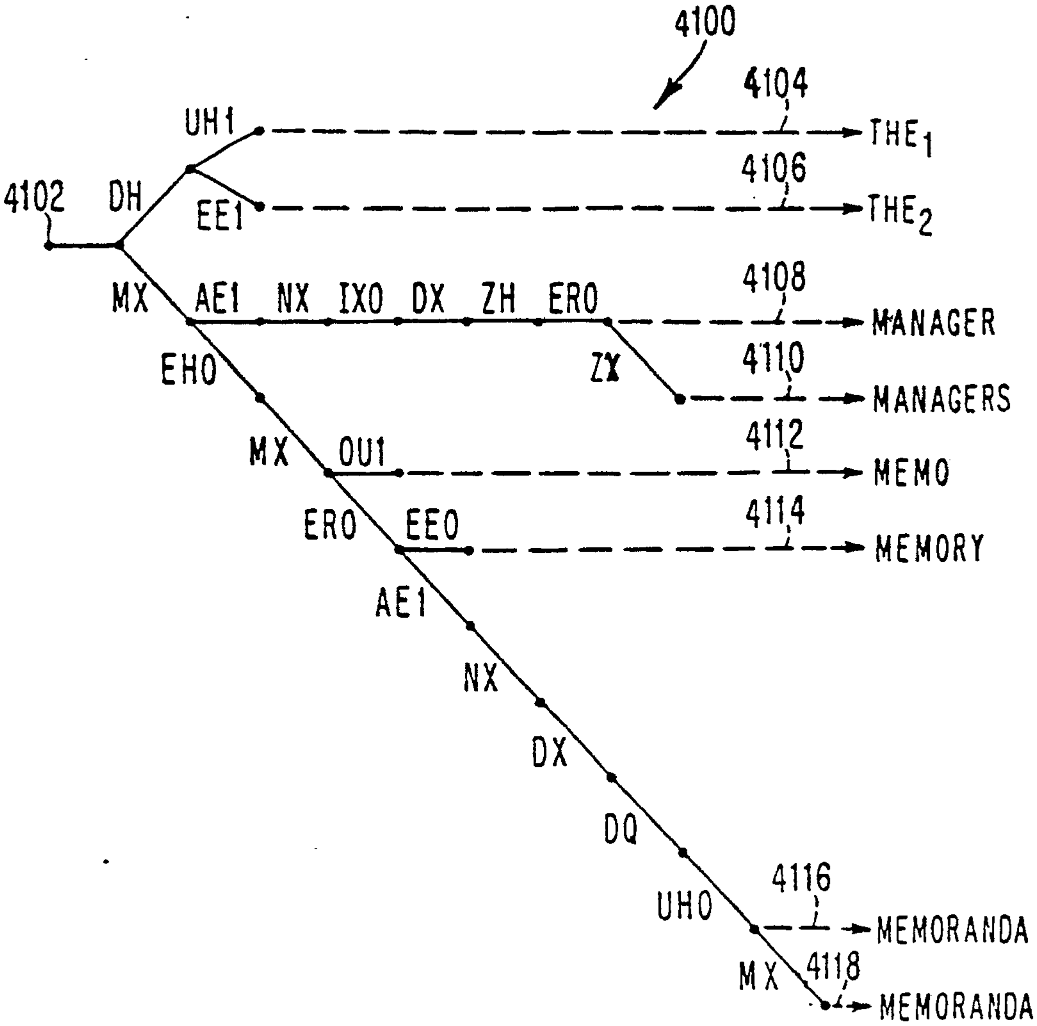

4100
4102
DH
UH1
EE1
4104
THE1
4106
THE2
MX
AE1
NX
IX0
DX
ZH
ER0
4108
MANAGER
EH0
ZX
4110
MANAGERS
MX
OU1
4112
MEMO
ER0
EE0
4114
MEMORY
AE1
NX
DX
DQ
UH0
4116
MEMORANDA
MX
4118
MEMORANDA

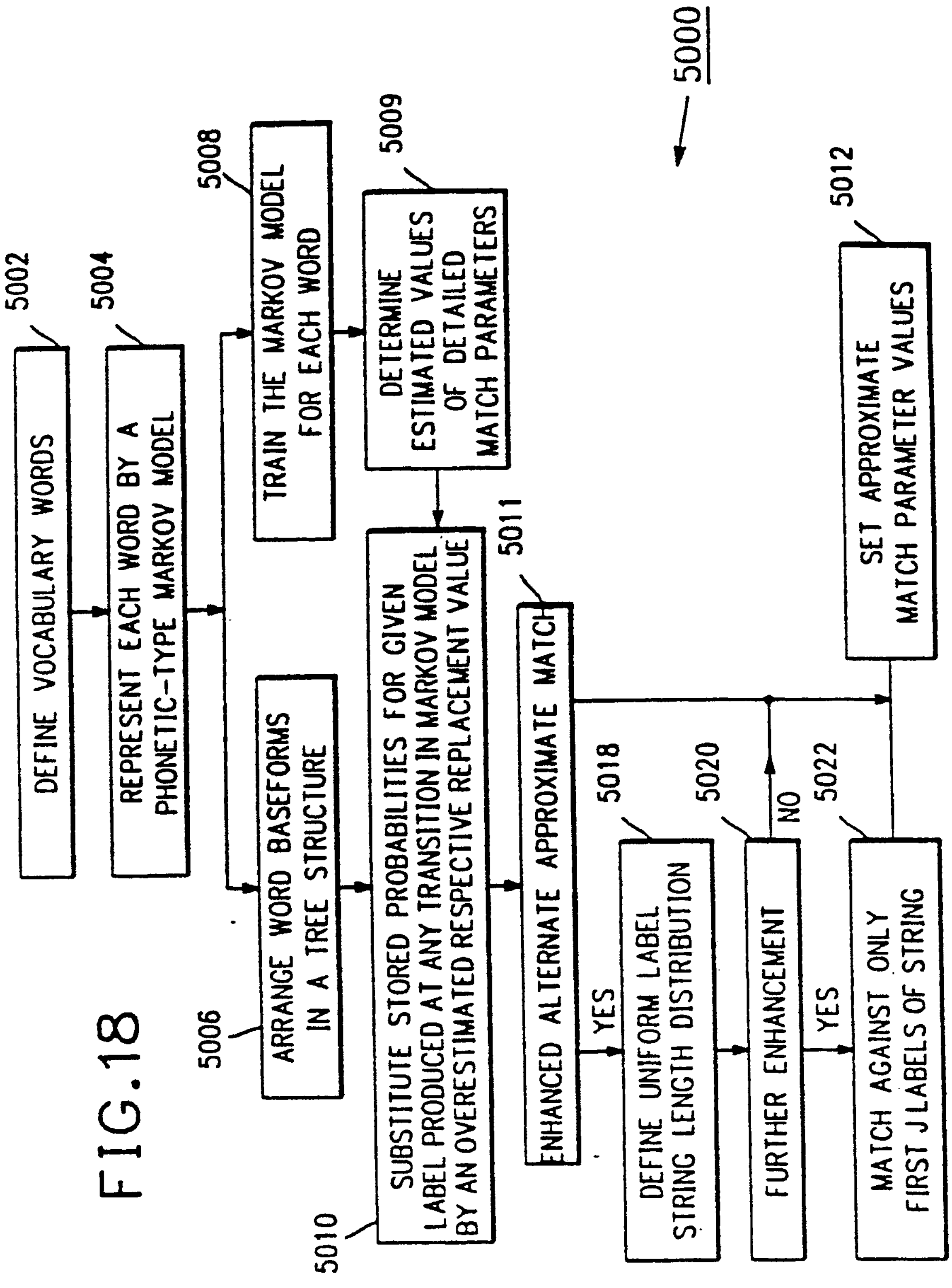
5000
5002
DEFINE VOCABULARY WORDS
5004
REPRESENT EACH WORD BY A PHONETIC-TYPE MARKOV MODEL
5006
ARRANGE WORD BASEFORMS IN A TREE STRUCTURE
5008
TRAIN THE MARKOV MODEL FOR EACH WORD
5009
DETERMINE ESTIMATED VALUES OF DETAILED MATCH PARAMETERS
5010
SUBSTITUTE STORED PROBABILITIES FOR GIVEN LABEL PRODUCED AT ANY TRANSITION IN MARKOV MODEL BY AN OVERESTIMATED RESPECTIVE REPLACEMENT VALUE
5011
ENHANCED ALTERNATE APPROXIMATE MATCH
YES
5018
DEFINE UNIFORM LABEL STRING LENGTH DISTRIBUTION
5020
FURTHER ENHANCEMENT
NO
YES
5022
MATCH AGAINST ONLY FIRST J LABELS OF STRING
5012
SET APPROXIMATE MATCH PARAMETER VALUES

FIG.18

FIG.19

STAGES FOR STACKING "TO BE OR NOT TO BE"

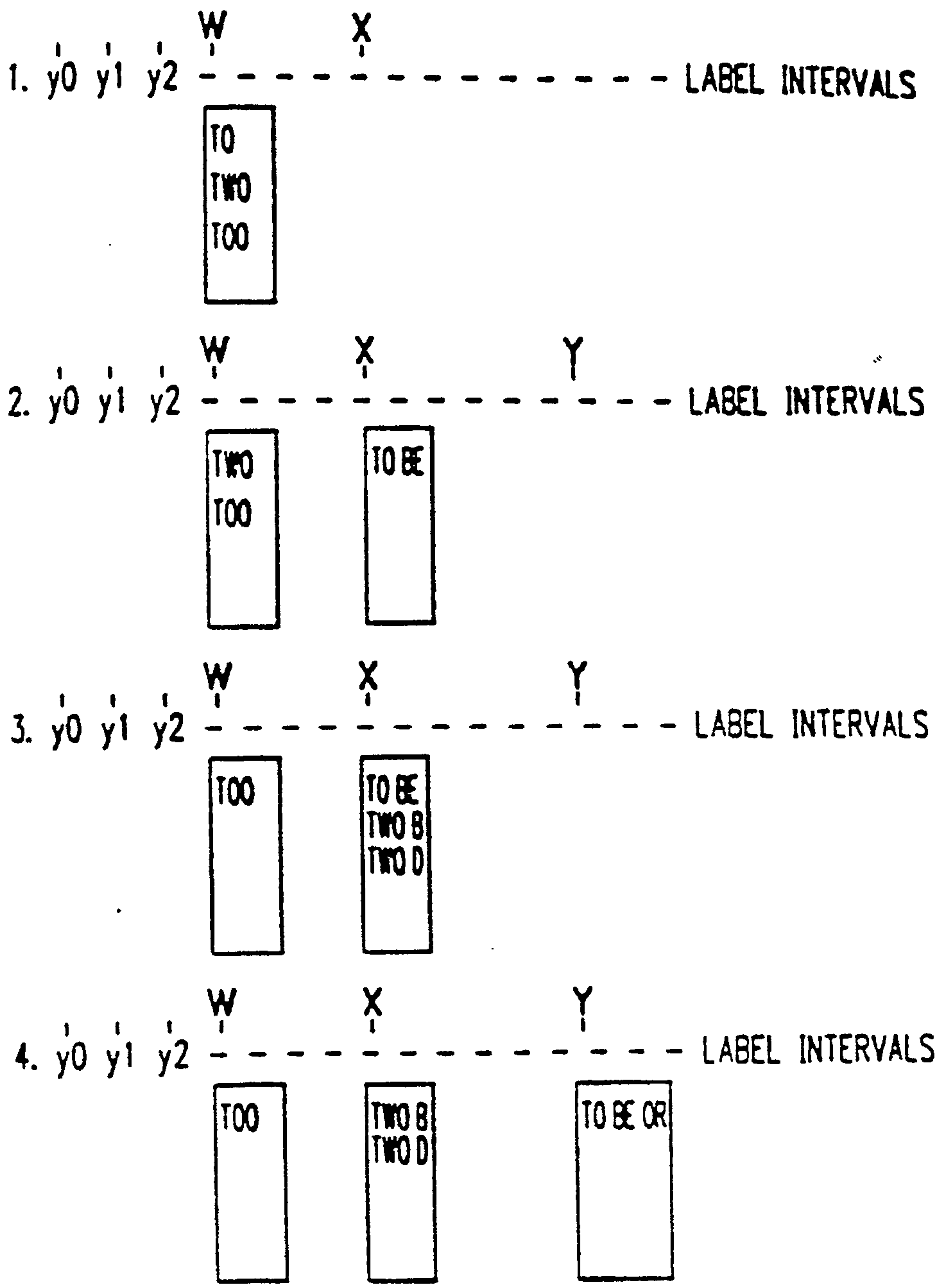

FIG. 20

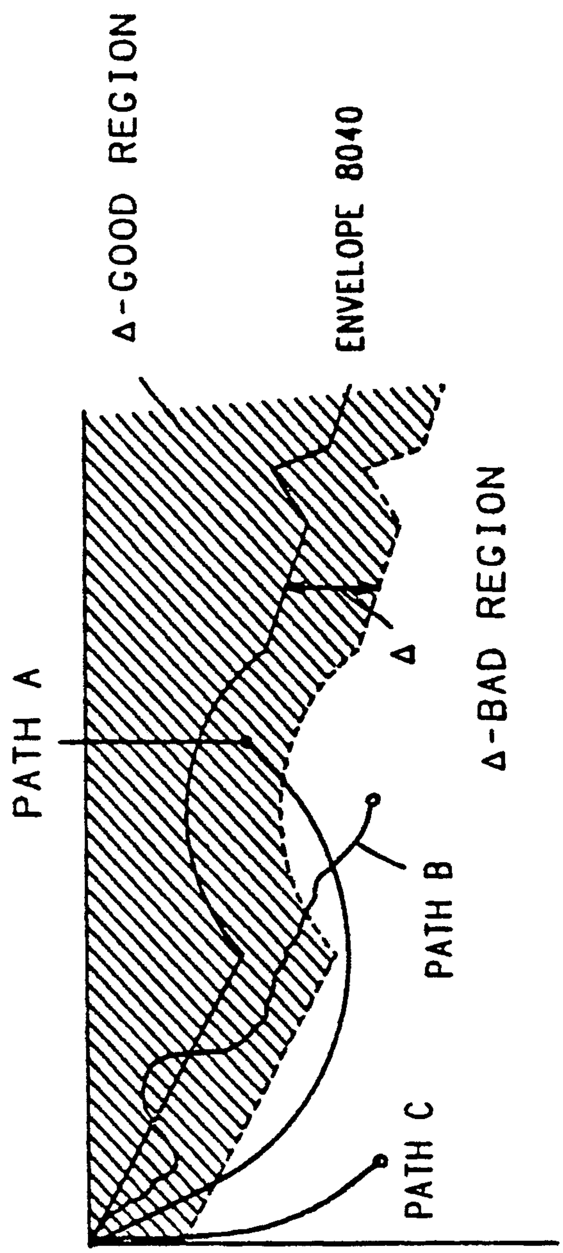

FIG.21

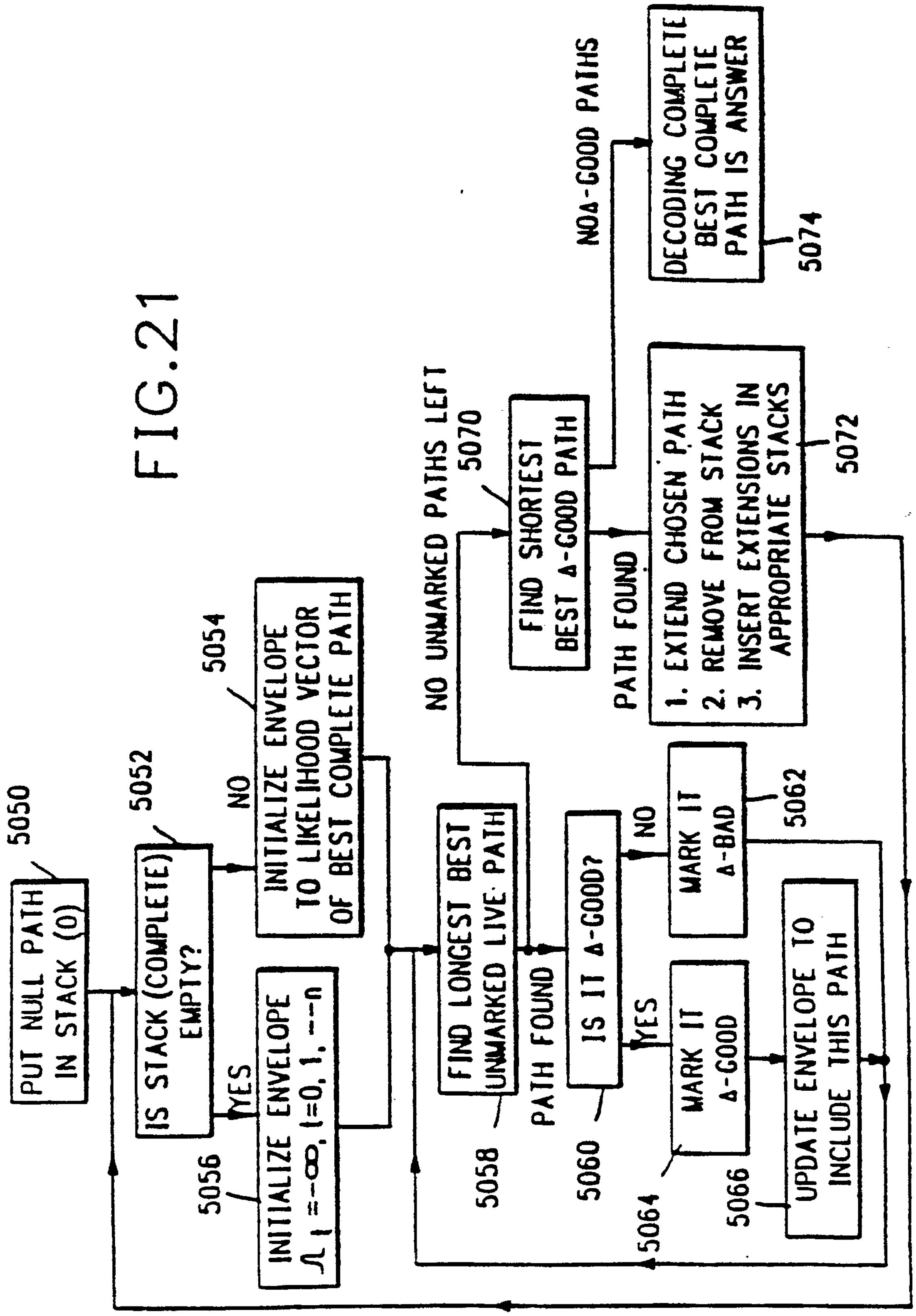
PUT NULL PATH IN STACK (0)
5050
IS STACK (COMPLETE) EMPTY?
5052
NO
INITIALIZE ENVELOPE TO LIKELIHOOD VECTOR OF BEST COMPLETE PATH
5054
YES
INITIALIZE ENVELOPE Λl =-∞, l=0, 1, --n
5056
FIND LONGEST BEST UNMARKED LIVE PATH
5058
PATH FOUND
IS IT Δ-GOOD?
5060
YES
NO
MARK IT Δ-GOOD
5064
MARK IT Δ-BAD
5062
UPDATE ENVELOPE TO INCLUDE THIS PATH
5066
NO UNMARKED PATHS LEFT
FIND SHORTEST BEST Δ-GOOD PATH
5070
PATH FOUND
1. EXTEND CHOSEN PATH
2. REMOVE FROM STACK
3. INSERT EXTENSIONS IN APPROPRIATE STACKS
5072
NO Δ-GOOD PATHS
DECODING COMPLETE BEST COMPLETE PATH IS ANSWER
5074

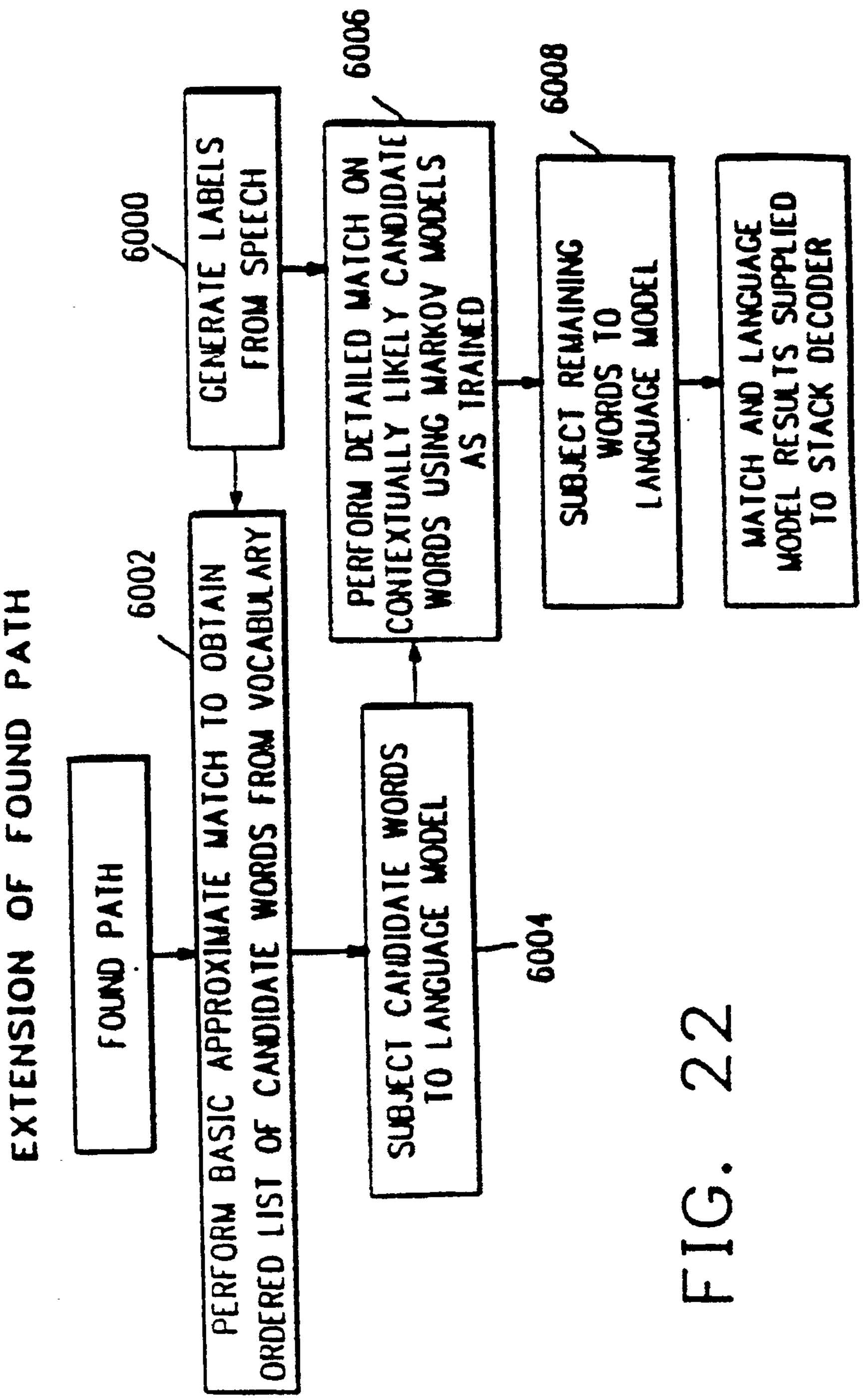
EXTENSION OF FOUND PATH
FOUND PATH
PERFORM BASIC APPROXIMATE MATCH TO OBTAIN ORDERED LIST OF CANDIDATE WORDS FROM VOCABULARY
6002
SUBJECT CANDIDATE WORDS TO LANGUAGE MODEL
6004
GENERATE LABELS FROM SPEECH
6000
PERFORM DETAILED MATCH ON CONTEXTUALLY LIKELY CANDIDATE WORDS USING MARKOV MODELS AS TRAINED
6006
SUBJECT REMAINING WORDS TO LANGUAGE MODEL
6008
MATCH AND LANGUAGE MODEL RESULTS SUPPLIED TO STACK DECODER

FIG. 22

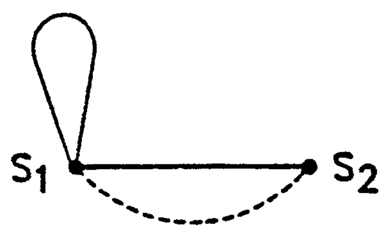


FIG.23

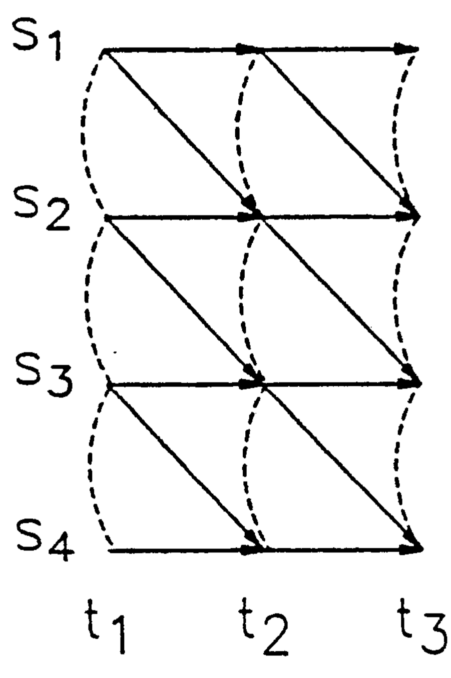


FIG.24

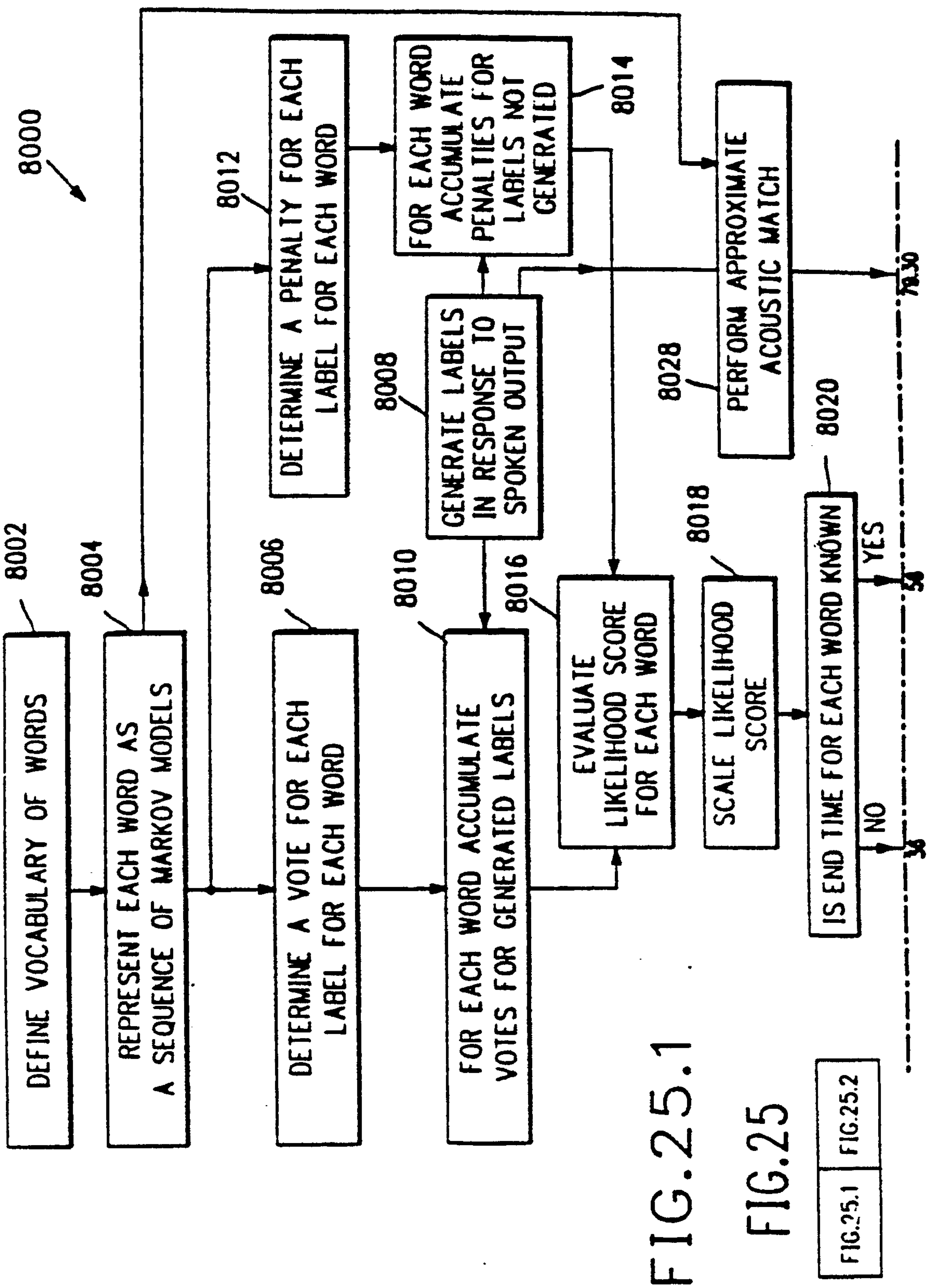


FIG.25.1

FIG.25

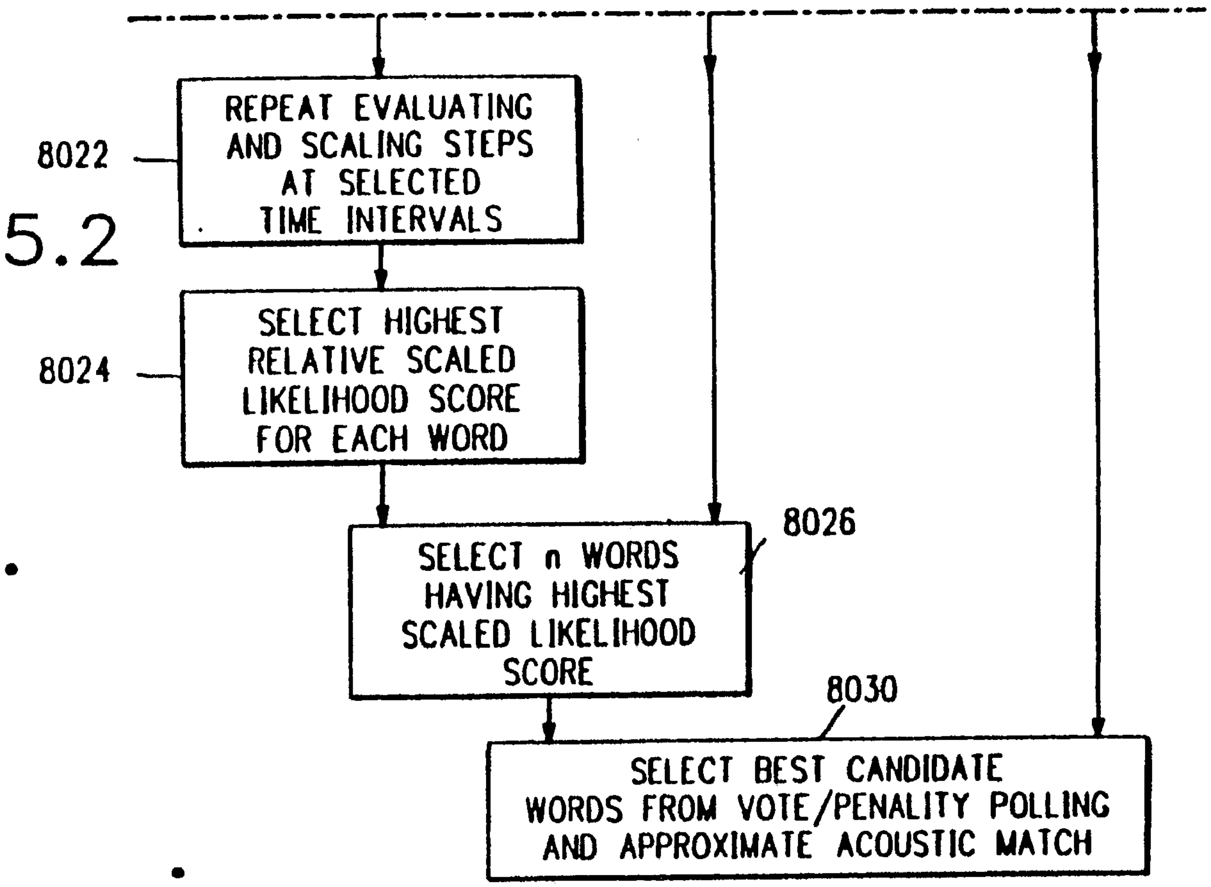


FIG.25.2

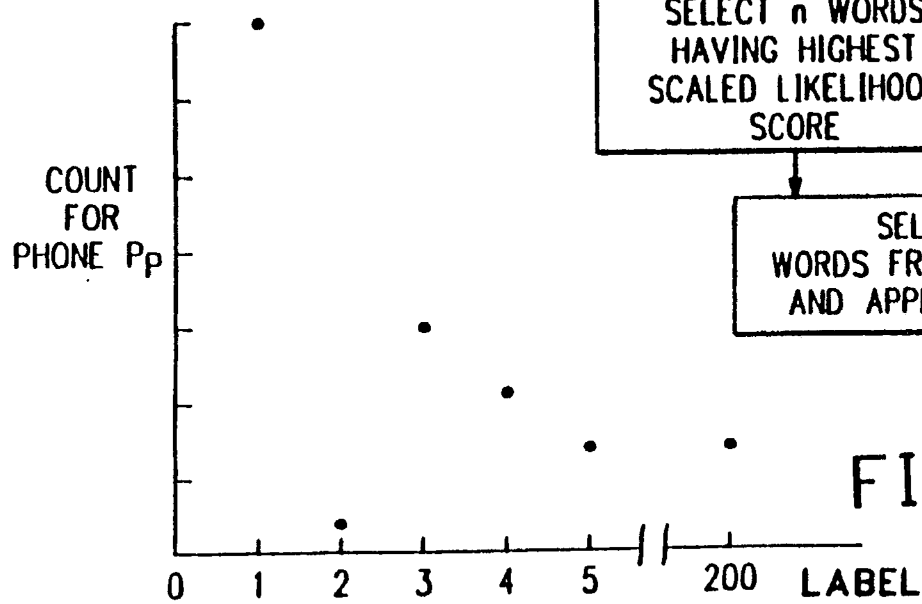


FIG.26

FIG.27

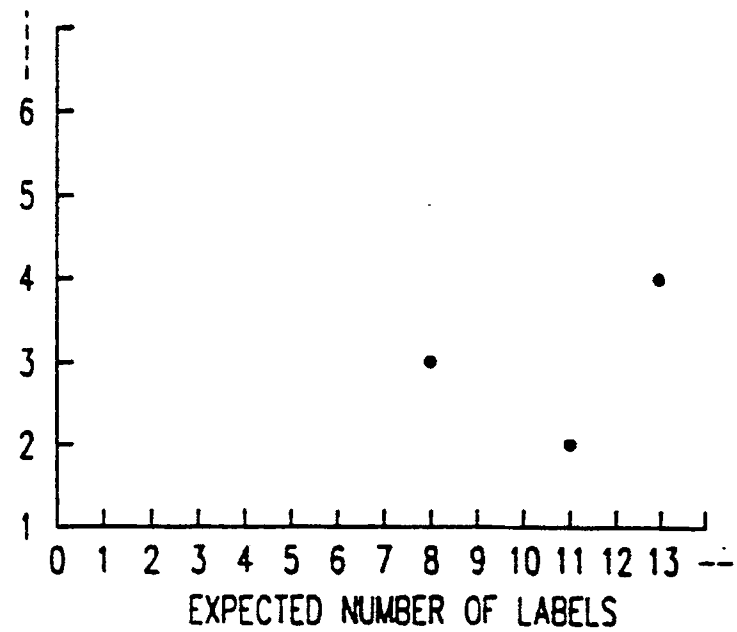


FIG.28

WORD 1 {$P_1$ $P_3$ $P_6$ $P_{10}$ $P_1$ ----}

WORD 2 {$P_3$ $P_2$ $P_2$ $P_1$ ----}

⋮

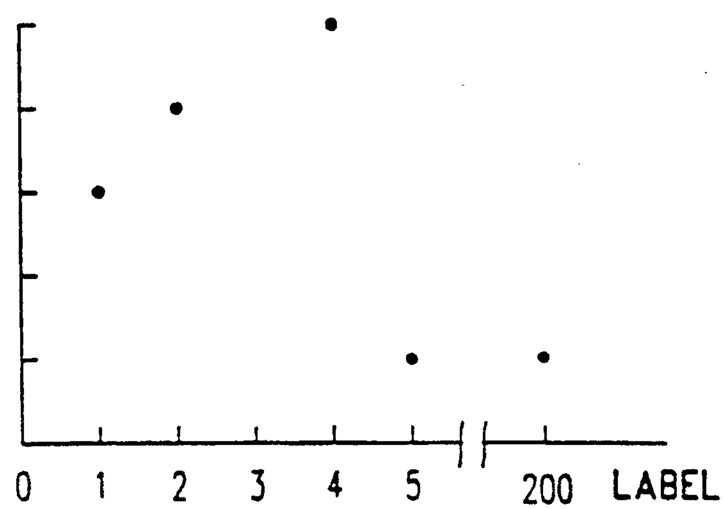


FIG.29

| WORD \ LABEL | 1 | 2 | 3 | ... | (L-1) | L |
|---|---|---|---|---|---|---|
| 1 | $V_{11}$ | $V_{21}$ | $V_{31}$ | | | |
| 2 | $V_{12}$ | $V_{22}$ | ⋮ | | | |
| 3 | $V_{13}$ | ⋮ | | | | |
| 4 | ⋮ | | | | | |
| • | | | | | | |
| • | | | | | | |
| • | | | | | | |
| • | | | | | | |
| (W-1) | | | | | | |
| W | | | | | | |

FIG.30

| LABEL / WORD | 1 | 2 | 3 | ... | (L-1) | L |
|---|---|---|---|---|---|---|
| 1 | $PEN_{11}$ | $PEN_{21}$ | $PEN_{31}$ | ··· | | $PEN_{L1}$ |
| 2 | $PEN_{12}$ | · | · | | | |
| 3 | · | · | · | | | |
| 4 | · | · | · | | | |
| • | · | | | | | |
| • | · | | | | | |
| • | · | | | | | |
| • | · | | | | | |
| (W-1) | · | | | | | |
| W | $PEN_{1W}$ | | | | | |

FIG.31

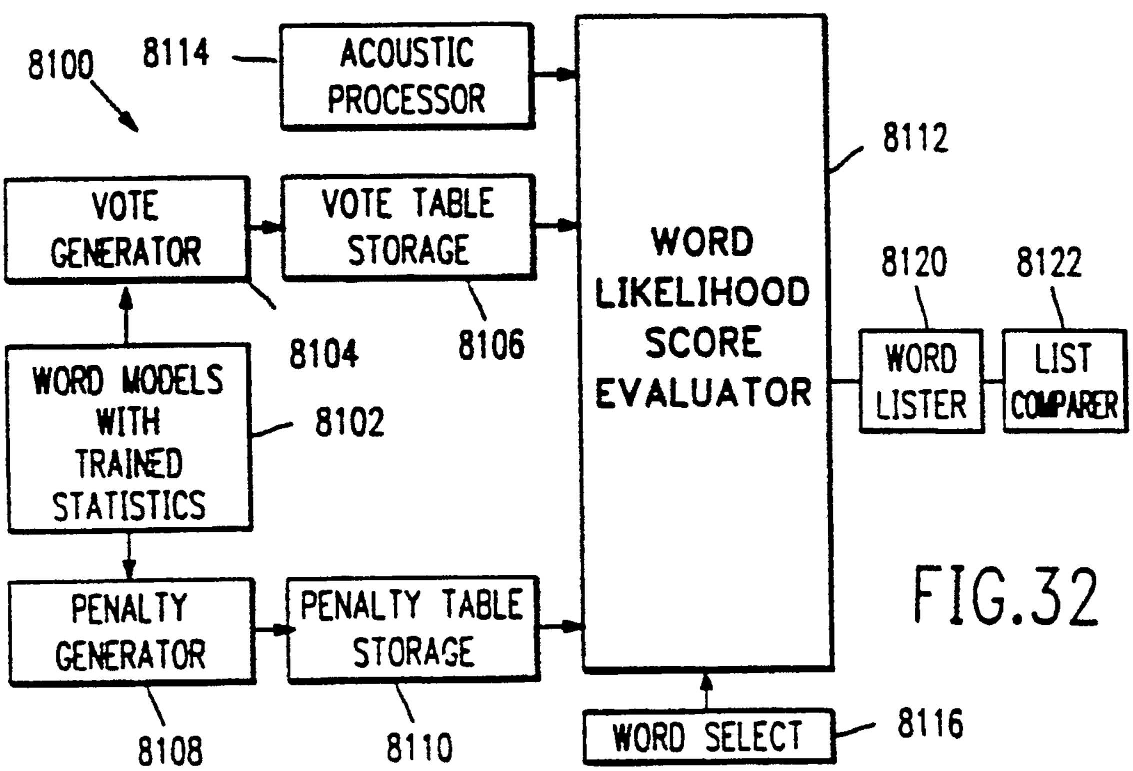


FIG.32